# EUROPEAN PATENT APPLICATION

(11) **EP 3 597 668 A1**
(43) Date of publication of application: **22.01.2020**
(21) Application number: 18184680.9
(22) Date of filing: 20.07.2018
(51) Int. Cl.: C08F 2/48, C08F 2/50, B33Y 80/00, B33Y 70/00, B33Y 10/00

(54) **PHOTO-CURABLE RESIN COMPOSITION FOR 3D PRINTING**

(71) Applicant: Clariant International Ltd, 4132 Muttenz (CH)
(72) Inventor: TANABE, Junichi, 939-8211 Toyama (JP); DENO, Takashi, 669-1132 Hyogo (JP)
(74) Representative: Paczkowski, Marcus

(57) **Abstract**

The present invention relates to photocurable epoxy hybrid resin compositions for 3D printing by means of stereolithography or material jetting, comprising at least one ethylenically unsaturated polymerizable compound, at least one epoxy-containg compound, at least one photo-acid generator and at least one radical photoinitiator. The present invention moreover relates to a method for producing a three dimensional object by means of stereolithography or material jetting, using the photocurable epoxy hybrid resin composition and to the use of the photocurable epoxy hybrid resin compositions for producing a three dimensional object by means of stereolithography or material jetting.

## Description

The present invention relates to photo-curable epoxy hybrid resin compositions for 3D printing, comprising at least one ethylenically unsaturated polymerizable compound, at least one epoxy-containg compound, at least one photo-acid generator and at least one radical photoinitiator. The invention moreover relates to a method for producing a three dimensional object by means of stereolithography or material jetting, using the photocurable epoxy hybrid resin composition and to the use of the photocurable epoxy hybrid resin compositions for producing a three dimensional object by means of stereolithography or material jetting.

Stereolithography describes a method for 3D printing wherein a photocurable liquid is selectively coated into a thin layer upon a surface and exposed selectively and imagewise to actinic radiation, wherein the exposed liquid is cured to form a thin cured layer. Subsequently, new layers of the liquid photocurable resin are coated onto the previous, cured layer and exposed to radiation until a three dimensional object is formed. With the help of computer aided manufacturing or computer-aided design (CAM/CAD) software the light beam is used to draw a pre-programmed design or shape in the photocurable liquid.

Methods for preparing three-dimensional objects by means of stereolithography are for example described in WO 2016/071811, EP-A 1939234 and WO 2007/031505.

Material jetting describes a method for 3D printing wherein fine droplets of a photocurable liquid are discharged from nozzles onto a base plate in a specified drawn pattern with the help of e.g. computer aided manufacturing or computer-aided design (CAM/CAD) software, followed by light irradiation to effect curing. Then, further fine droplets of the liquid photocurable resin are discharged thereon from the nozzles in a specified drawn pattern, producing a superimposed layer, followed again by light irradiation. The repetition of this operation finally leads to a fabricated 3D object.

Methods for preparing three-dimensional objects by means of material jetting are e.g. described in WO 2000/52624, JP-A 2002-067174 and JP-A_2010-155926.

The photocurable liquid typically contains one or more polymerizable compounds, and one or more photoinitiator compounds. Such photocurable resin compositions, comprising photoinitiators have been widely used for example as UV-curable inks, in coating materials, photoresists or for the production of three-dimensional objects. The use of phenylglyoxylates and derivatives thereof in photocurable resin compositions is also known.

US 2005/0228062 relates to photopolymerizable compositions comprising at least one ethylenically unsaturated photopolymerizable compound and as a photoinitiator phenyl glyoxylate compounds of the general formula (I) 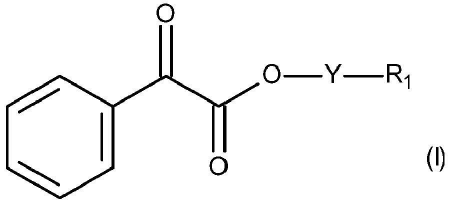 wherein
- Y: is e.g. C₃-C₁₂alkylene, or C₄-C₁₂ alkylene interrupted by one or more -O- or NR2-, or
- Y: is a cyclic compound, for example phenylene or cyclohexylene; and
- R₁: is for example reactive group, for example OH, SH, -C(O)-OH, -C(O)-NH₂, oroxiranyl.

The photopolymerizable compositions are irradiated with light with a wave length in the range from 200 to 600, for example with medium pressure mercury lamps.

WO 2008/040650 describes UV-curable colored compositions comprising at least one ethylenically unsaturated photopolymerizable compound, at least one colorant and at least one curing agent of the phenylglyoxylate type.

US 6,048,660 relates to photoinitiator compounds of the general formula (I) 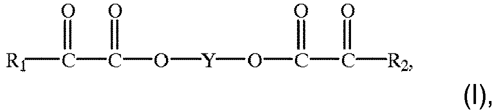 wherein
- R₁ and R₂: are for example a substituted or unsubstituted phenyl radical, and
- Y: is for example a group 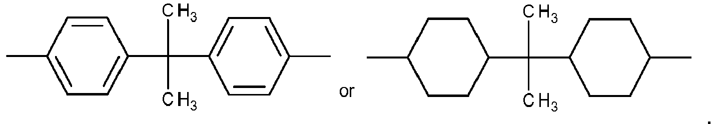
and to photocurable compositions comprising at least one ethylenically unsaturated photopolymerizable compound, the photoinitiator and optionally a further photoinitiator. As a further photoinitiator bis(2,4,6-trimethslbenzoyl)phenylphosphin oxide (Irgacure 819) is used.

WO 2011/069947 describes new carbazole based photoinitiator compounds of the general formula (I), 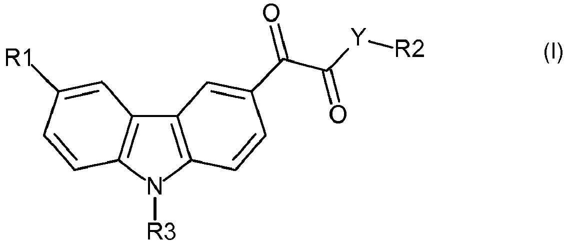 wherein
at least one of R1, R2 and R3 comprise a branched substituted or unsubstituted alkyl, alkenyl, alkynyl, aralkyl or alkaryl group.

WO 2016/071811 describes a photocurable resin compositions containing a radical polymerizable organic compound, comprising a polyrotaxane compound; and a photosensitive radical polymerization initiator, for example 2,4,6-trimethylbenzoyl-diphenyl-phosphine oxide (Irgacure TPO).

EP 1939234 relates to resin compositions for stereolithography comprising an epoxy compound, an ethylenically unsaturated compound, a photo initiator for cationic polymerization, a photoinitiator for radical polymerization and an oxetane compound. The radical polymerization initiator is preferably 1-hydroxy-cyclohexyl phenyl ketone.

In WO 2007/031505 photocurable compositions are described comprising a cationically curable compound, and acrylate-containing compound, a polyol containing mixture, a cationic photoinitiator and a free radical photoinitiator, in particular 1-hydroxy-cyclohexyl phenyl ketone.

There is a need for novel photocurable resin compositions having an improved curing performance in regard of the photocurable compositions know in the prior art. It was therefore an objective of the present invention to provide photocurable resin compositions comprising at least one ethylenically unsaturated polymerizable compound and at least one epoxy-containing compound which have increased sensitivity towards light exposure and improved curing behavior.

This object is solved by a photocurable resin composition for 3D printing comprising:
a) at least one ethylenically unsaturated compound (C);
b) at least one epoxy-containing compound (E);
c) at least one photo-acid generator;
d) at least one radical photoinitiator selected from at least one radical photoinitiator G-1A and/or at least one radical photoinitiator G-1B, wherein the at least one radical photoinitiator G-1A is represented by general formula (Ia) 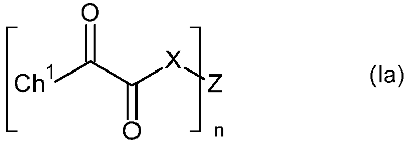 wherein
   - Z: is R¹ or R⁷;
   - X: is O, S, or NR⁵;
   - Ch¹: is Ar¹ or Het¹;

   - n: is 1 to 4;
   with the proviso that when n is 1, Z is R¹;
   - Ar¹: is selected from the group consisting of phenyl, naphthyl, biphenyl, styryl, stilbenyl, diphenylacetylenyl, terphenylyl, anthracenyl, phenanthrenyl, pyrenyl or triphenylenyl; which is unsubstituted or substituted with one or more substituents selected from the group consisting of halogen; NO₂; CN; OR³; SR⁴; NR⁵R⁶; C₁-C₂₀alkyl and/or C₂-C₂₀alkenyl, which are independently from each other unsubstituted or substituted by one or more halogen, CN, OR³, SR⁴, NR⁵R⁶, phenyl and/or naphthyl; C₁-C₂₀alkyl and/or C₂-C₂₀alkenyl, which are independently from each other interrupted by one or more -O-, -S- , -NR⁵-, phenylene and/or naphthylene; C₃-C₈cycloalkyl and/or C₃-C₈cycloalkenyl, which are independently from each unsubstituted or substituted by one or more halogen, CN, OR³, SR⁴ and/or NR⁵R⁶; C₃-C₈cycloalkyl and/or C₃-C₈cycloalkenyl, which are independently from each other interrupted by one or more -O-, -S- and/or -NR⁵-; phenyl and/or naphthyl, which are independently from each other unsubstituted or substituted by one or more halogen, CN, C₁-C₂₀alkyl, C₃-C₈cycloalkyl, OR³, SR⁴ and/or NR⁵R⁶; and/or -C(O)R⁸;
   and/or
   OR³, SR⁴, and/or NR⁵R⁶ form together with other substituents, if present on adjacent ring atoms, on Ar¹ via the radicals R³, R⁴, R⁵ and/or R⁶ one or more 5- or 6-membered heterocycles;
   and/or
   R⁵ and R⁶ form together with the N atom to which they are attached a 5- or 6-membered heterocycle;
   - Het¹: is selected from the group consisting of furyl, thienyl, pyrrolyl, oxazolyl, isoxazolyl, thiazolyl, isothiazole, imidazolyl, pyrazolyl, oxadiazolyl, thiadiazolyl, triazolyl, pyridyl, pyrimidinyl, pyrazinyl, pyridazinyl, triazinyl, 2- or 3-benzofuryl, 2- or 3-benzothienyl, 2- or 3-indolyl, 2-benzoxazolyl, 2-benzothiazolyl, 2-benzoimidazolyl, 3-indazolyl, 2-, 3- or 4-quinolyl, 1-, 3- or 4-isoquinolyl, 3-phthalazinyl, 2- or 3-quinoxalinyl, pteridinyl, bithienyl, trithienyl, acridinyl, phenazinyl or purinyl; which is unsubstituted or substituted with one or more substituents selected from the group consisting of halogen, NO₂, CN, OR³, SR⁴ and/or NR⁵R⁶; C₁-C₂₀alkyl and/or C₂-C₂₀alkenyl, which are independently from each other unsubstituted or substituted by one or more halogen, CN, OR³, SR⁴, NR⁵R⁶, phenyl and/or naphthyl; C₁-C₂₀alkyl and/or C₂-C₂₀alkenyl, each of which is interrupted by one or more -O-, -S-, -NR⁵-, phenylene and/or naphthylene; C₃-C₈cycloalkyl and/or C₃-C₈cycloalkenyl, which are independently from each other unsubstituted or substituted by one or more halogen, CN, OR³, SR⁴ and/or NR⁵R⁶; C₃-C₈cycloalkyl and/or C₃-C₈cycloalkenyl, each of which is interrupted by one or more -O-, -S- and/or -NR⁵-; phenyl and/or naphthyl, which are independently from each other unsubstituted or substituted by one or more halogen, CN, C₁-C₂₀alkyl, C₃-C₈cycloalkyl, OR³, SR⁴ NR⁵R⁶; and/or -C(O)R⁸;
   and/or
   OR³, SR⁴, and/or NR⁵R⁶ form together with other substituents, if present on adjacent ring atoms on Het¹ via the radicals R³, R⁴, R⁵ and/or R⁶ one or more 5- or 6-membered heterocycles;
   - R¹: is hydrogen; C₁-C₂₀alkyl or C₂-C₂₀alkenyl, which is unsubstituted or substituted by one or more halogen, CN, OR³, SR⁴, NR⁵R⁶, phenyl and/or naphthyl; C₁-C₂₀alkyl or C₂-C₂₀alkenyl, which is interrupted by one or more -O-, -S-, -NR₅-, phenylene and/or naphthylene; C₃-C₈cycloalkyl or C₃-C₈cycloalkenyl, which is unsubstituted or substituted by one or more halogen, CN, OR³, SR⁴, NR⁵R⁶, phenyl and/or naphthyl; C₃-C₈cycloalkyl or C₃-C₈cycloalkenyl, which is interrupted by one or more -O-, -S- and/or -NR⁵-; phenyl or naphthyl, which is unsubstituted or substituted by one or more halogen, CN, C₁-C₂₀alkyl, OR³, SR⁴, NR⁵R⁶ and/or -C(O)R⁸;
   - R³: is hydrogen; C₁-C₂₀alkyl or C₂-C₂₀alkenyl, which is unsubstituted or substituted by one or more halogen, CN, OR³, SR⁴, NR⁵R⁶, phenyl and/or naphthyl; C₁-C₂₀alkyl or C₂-C₂₀alkenyl, which is interrupted by one or more -O-, -S-, -NR₅-, phenylene and/or naphthylene; C₃-C₈cycloalkyl or C₃-C₈cycloalkenyl, which is unsubstituted or substituted by one or more halogen, CN, OR³, SR⁴, NR⁵R⁶, phenyl and/or naphthyl; C₃-C₈cycloalkyl or C₃-C₈cycloalkenyl, which is interrupted by one or more -O-, -S- and/or -NR⁵-; phenyl or naphthyl, which is unsubstituted or substituted by one or more by halogen, CN, C₁-C₂₀alkyl, OR³, SR⁴, NR⁵R⁶ and/or -C(O)R⁸;
   - R⁴: is hydrogen; C₁-C₂₀alkyl or C₂-C₂₀alkenyl, which is unsubstituted or substituted by one or more halogen, CN, OR³, SR⁴, NR⁵R⁶, phenyl and/or naphthyl; C₁-C₂₀alkyl or C₂-C₂₀alkenyl, which is interrupted by one or more -O-, -S-, -NR⁵-, phenylene and/or naphthylene; C₃-C₈cycloalkyl or C₃-C₈cycloalkenyl, which is unsubstituted or substituted by one or more halogen, CN, OR³, SR⁴, NR⁵R⁶, phenyl and/or naphthyl; C₃-C₈cycloalkyl or C₃-C₈cycloalkenyl, which is interrupted by one or more -O-, -S- and/or -NR⁵-; phenyl or naphthyl, which is unsubstituted or substituted by one or more by halogen, CN, C₁-C₂₀alkyl, OR³, SR⁴,NR⁵R⁶ and/or -C(O)R⁸;
   - R⁵, R⁶: are independently of each other hydrogen; C₁-C₂₀alkyl or C₂-C₂₀alkenyl, which is unsubstituted or substituted by one or more halogen, CN, OR³, SR⁴, NR⁵R⁶, phenyl and/or naphthyl; C₁-C₂₀alkyl or C₂-C₂₀alkenyl, which is interrupted by one or more -O-, -S-, -NR⁵-, phenylene and/or naphthylene; C₃-C₈cycloalkyl or C₃-C₈cycloalkeny, which is unsubstituted or substituted by one or more halogen, CN, OR³, SR⁴, NR⁵R⁶, phenyl and/or naphthyl; C₃-C₈cycloalkyl or C₃-C₈cycloalkenyl, which is interrupted by one or more -O-, -S- and/or -NR⁵-; phenyl or naphthyl, which is unsubstituted or substituted by one or more by halogen, CN, C₁-C₂₀alkyl, OR³, SR⁴ and/or NR⁵R⁶; and/or -C(O)R⁸;
   - R⁷: is C₁-C₂₀alkylene or C₁-C₂₀alkenylene, which is unsubstituted or substituted by one or more halogen, CN, OR³, SR⁴ and/or NR⁵R⁶; C₁-C₂₀alkylene or C₁-C₂₀alkenylene, which is interrupted by one or more -O-, -S-, -NR⁵-, phenylene and/or naphthylene; C₃-C₈cycloalkylene or C₃-C₈cycloalkenylene, which is unsubstituted or substituted by one or more halogen, CN, OR³, SR⁴, NR⁵R⁶, phenyl and/or naphthyl; C₃-C₈cycloalkylene or C₃-C₈cycloalkenylene, which is interrupted by one or more -O-, -S- and/or -NR⁵-; phenylene or naphthylene, which is unsubstituted or substituted by one or more by halogen, C₁-C₂₀alkyl, OR³, SR⁴,NR⁵R⁶ and/or -C(O)R⁸;
   - R₈: is OR³, SR⁴ and/or NR⁵R⁶; C₁-C₂₀alkyl or C₂-C₂₀alkenyl, which is unsubstituted or substituted by one or more halogen, CN, OR³, SR⁴, NR⁵R⁶, phenyl and/or naphthyl; C₁-C₂₀alkyl or C₂-C₂₀alkenyl, which is interrupted by one or more -O-, -S-, -NR⁵-, phenylene and/or naphthylene; C₃-C₈cycloalkyl or C₃-C₈cycloalkeny, which is unsubstituted or substituted by one or more halogen, CN, OR³, SR⁴, NR⁵R⁶, phenyl and/or naphthyl; C₃-C₈cycloalkyl or C₃-C₈cycloalkenyl, which is interrupted by one or more -O-, -S- and/or -NR₅-; phenyl, naphthyl, furanyl, thienyl, pyrroryl, benzofuranyl, benzothienyl, indoryl and/or benzoimidazoyl, which is unsubstituted or substituted by one or more halogen, CN, C₁-C₂₀alkyl, OR³, SR⁴ and/or NR⁵R⁶;
   and/or
   OR³, SR⁴, and/or NR⁵R⁶ form together with other substituents via the radicals R³, R⁴, R⁵ and/or R⁶ one or more 5- or 6-membered heterocycles; and/or R⁵ and R⁶ form together with the N atom to which they are attached a 5- or 6-membered heterocycle; and the at least one radical photoinitiator G-1B is represented by general formula (Ib) 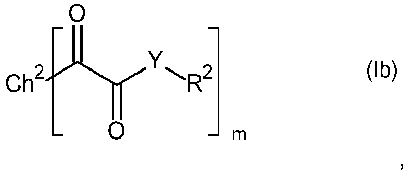
   wherein
   R³, R⁴, R⁵, R⁶, and R⁸ have the meanings as defined above; and
   m is 2 to 4;
   Ch² is Ar², Het² or a group of the general formula B 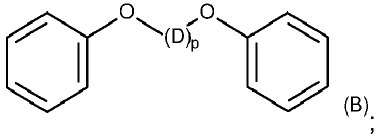 wherein
      - each D: is independently from each other C₁-C₂₀alkyl, which is unsubstituted or substituted by one or more halogen, CN, OR³, SR⁴, NR⁵R⁶, phenyl and/or naphthyl or C₁-C₂₀alkyl or C₂-C₂₀alkenyl, which is interrupted by one or more -O-, -S-, -NR⁵-, phenylene and/or naphthylene;

      - p: is 1 to 5;
      - Y: is O, S or NR⁵;
      - R²: is hydrogen; C₁-C₂₀alkyl or C₂-C₂₀alkenyl, which is unsubstituted or substituted by one or more halogen, CN, OR³, SR⁴, NR⁵R⁶, phenyl and/or naphthyl; C₁-C₂₀alkyl or C₂-C₂₀alkenyl, which is interrupted by one or more -O-, -S-, -NR⁵-, phenylene and/or naphthylene; C₃-C₈cycloalkyl or C₃-C₈cycloalkeny, which is unsubstituted or substituted by one or more halogen, CN, OR³, SR⁴, NR⁵R⁶, phenyl and/or naphthyl; C₃-C₈cycloalkyl or C₃-C₈cycloalkenyl, which is interrupted by one or more -O-, -S- and/or -NR⁵-; phenyl or naphthyl, which is unsubstituted or substituted by one or more by halogen, CN, C₁-C₂₀alkyl, OR³, SR⁴ and/or NR⁵R⁶;
      - Ar²: is phenylene, naphthylene, biphenylene, styryylen, stilbenylene, diphenylacetylenylene, terphenylene, anthracenylene, phenanthrenylene, pyrenylene, triphenylene, diphenylmethylene, triphenylmethylene, tetraphenylmethylene or a group of the general formula (A) 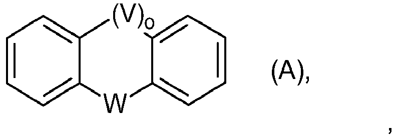 wherein
      V and W are independently from each other a direct bond, O, S or NR⁵;
      o
      is 0 or 1;
      each of which is unsubstituted or substituted by one or more substituents selected from the group consisting of halogen, NO₂, CN, OR³, SR⁴ and/or NR⁵R⁶;C₁-C₂₀alkyl and/or C₂-C₂₀alkenyl, which is unsubstituted or substituted by one or more halogen, CN, OR³, SR⁴, NR⁵R⁶, phenyl and/or naphthyl; C₁-C₂₀alkyl and/or C₂-C₂₀alkenyl, which is interrupted by one or more -O-, -S-, -NR⁵-, phenylene and/or naphthylene; C₃-C₈cycloalkyl and/or C₃-C₈cycloalkenyl, which is unsubstituted or substituted by one or more halogen, CN, OR³, SR⁴ and/or NR⁵R⁶; C₃-C₈cycloalkyl and/or C₃-C₈cycloalkenyl, which is interrupted by one or more -O-, -S- and/or -NR⁵-; phenyl and/or naphthyl, which is unsubstituted or substituted by one or more halogen, CN, C₁-C₂₀alkyl, C₃-C₈Cycloalkyl, OR³, SR⁴ and/or NR⁵R⁶; and/or -C(O)R⁸;
         and/or
      OR³, SR⁴, and/or NR⁵R⁶ form together with other substituents,if present at adjacent ring atoms on Ar² via the radicals R³, R⁴, R⁵ and/or R⁶ one or more 5- or 6-membered heterocycles;
      - Het²: is furylene, thienylene, pyrrolylene, oxazolylene, isoxazolylene, thiazolylene, isothiazolylene, imidazolylene, pyrazolylene, oxadiazolylene, thiadiazolylene, triazolylene, pyridylene, pyrimidinylene, pyrazinylene, pyridazinylene, triazinylene, benzofurylene, benzothienylene, indolylene, benzoxazolylene, benzothiazolylene, benzoimidazolylene, indazolylen, quinolylene, isoquinolylene, phthalazinylene, quinoxalinylene, pteridinylene, bithienylene, trithienylene, acridinylene, phenazinylene, N,N-diphenylanilin or purinylene; each of which is unsubstituted or substituted by one or more halogen, NO₂, CN, OR³, SR⁴ and/or NR⁵R⁶; C₁-C₂₀alkyl and/or C₂-C₂₀alkenyl, which is unsubstituted or substituted by one or more halogen, CN, OR³, SR⁴, NR⁵R⁶, phenyl and/or naphthyl; C₁-C₂₀alkyl and/or C₂-C₂₀alkenyl, which is interrupted by one or more -O-, -S-, -NR⁵-, phenylene and/or naphthylene; C₃-C₈cycloalkyl and/or C₃-C₈cycloalkenyl, which is unsubstituted or substituted by one or more halogen, CN, OR³, SR⁴ and/or NR⁵R⁶; C₃-C₈cycloalkyl and/or C₃-C₈cycloalkenyl, which is interrupted by one or more -O-, -S- and/or -NR⁵-; phenyl and/or naphthyl, which is unsubstituted or substituted by one or more halogen, CN, C₁-C₂₀alkyl, C₃-C₈cycloalkyl, OR³, SR⁴ and/or NR⁵R⁶; and/or -C(O)R⁸;
      and/or
      OR³, SR⁴, and/or NR⁵R⁶ form together with other substituents if present at adjacent ring atoms on Het² via the radicals R³, R⁴, R⁵ and/or R⁶ one or more 5- or 6-membered heterocycles.

Surprisingly, it has been found that the photocurable compositions according to the invention have good curing properties, especially at a wavelength from 350 to 450 nm.

### Detailed description of the invention

The residues and indices mentioned in the specification of the present application generally have the following preferred meanings, if said residues and indices are not further specified in specific embodiments mentioned below:
Halogen is fluorine, chlorine, bromine or iodine, preferably fluorine or bromine.

The term "C₁-C₂₀alkyl" describes saturated linear or, where possible, branched hydrocarbon radicals having 1 to 20, preferably 1 to 12 carbon atoms ("C₁-C₁₂alkyl"). Examples are methyl, ethyl, n-propyl, isopropyl, n-butyl, sec.-butyl, isobutyl, tert.-butyl, n-pentyl, 2-pentyl, 3-pentyl, 2,2-dimethylpropyl, 1,1,3,3-tetramethylpentyl, n-hexyl, 1-methylhexyl, 1,1,3,3,5,5-hexamethylhexyl, n-heptyl, isoheptyl, 1,1,3,3-tetramethylbutyl, 1-methylheptyl, 3-methylheptyl, n-octyl, 1,1,3,3-tetramethylbutyl and 2-ethylhexyl, n-nonyl, decyl, undecyl, dodecyl, tridecyl, tetradecyl, pentadecyl, hexadecyl, heptadecyl, or octadecyl. C₁-C₁₂alkyl is typically methyl, ethyl, n-propyl, isopropyl, n-butyl, sec-butyl, isobutyl, tert-butyl, n-pentyl, 2-pentyl, 3-pentyl, 2,2-dimethyl-propyl, n-hexyl, n-heptyl, n-octyl, 1,1,3,3-tetramethylbutyl and 2-ethylhexyl.

The term "C₂-C₂₀alkenyl" as used herein relates to monounsaturated straight-chain or branched hydrocarbon radical having 2 to 20, preferably 2 to 12 carbon atoms ("C₂-C₁₂alkenyl"), and a double bond in any position. Examples are ethenyl, propenyl, isopropenyl ethenyl, 1-propenyl, 2-propenyl, 1-methylethenyl, 1 butenyl, 2-butenyl, 3-butenyl, 1-methyl-1-propenyl, 2-methyl-1-propenyl, 1-methyl-2-propenyl or 2-methyl-2-propenyl; C2-C6-alkenyl, such as ethenyl, 1-propenyl, 2-propenyl, 1-methylethenyl, 1 butenyl, 2-butenyl, 3-butenyl, 1-methyl-1-propenyl, 2-methyl-1-propenyl, 1-methyl-2-propenyl, 2-methyl-2-propenyl, 1-pentenyl, 2-pentenyl, 3-pentenyl, 4-pentenyl, 1- methyl-1-butenyl, 2-methyl-1-butenyl, 3-methyl-1-butenyl, 1-methyl-2-butenyl, 2-methyl-2-butenyl, 3-methyl-2-butenyl, 1-methyl-3-butenyl, 2-methyl-3-butenyl, 3-methyl-3-butenyl, 1,1-dimethyl-2-propenyl, 1,2-dimethyl-1-propenyl, 1,2-dimethyl-2-propenyl, 1-ethyl 1-propenyl, 1-ethyl-2-propenyl, 1-hexenyl, 2-hexenyl, 3-hexenyl, 4-hexenyl, 5-hexenyl, 1-methyl-1-pentenyl, 2-methyl-1-pentenyl, 3-methyl-1-pentenyl, 4-methyl-1-pentenyl, 1-methyl-2-pentenyl, 2-methyl-2-pentenyl, 3-methyl-2-pentenyl, 4-methyl-2-pentenyl, 1-methyl-3-pentenyl, 2-methyl-3-pentenyl, 3-methyl-3-pentenyl, 4 methyl-3-pentenyl, 1-methyl-4-pentenyl, 2-methyl-4-pentenyl, 3-methyl-4-pentenyl, 4-methyl-4-pentenyl, 1,1-dimethyl-2-butenyl, 1,1-dimethyl-3-butenyl, 1,2-dimethyl-1-butenyl, 1,2-dimethyl-2-butenyl, 1,2-dimethyl-3-butenyl, 1,3-dimethyl-1-butenyl, 1,3 dimethyl-2-butenyl, 1,3-dimethyl-3-butenyl, 2,2-dimethyl-3-butenyl, 2,3 dimethyl-1-butenyl, 2,3-dimethyl-2-butenyl, 2,3-dimethyl-3-butenyl, 3,3-dimethyl-1-butenyl, 3,3-dimethyl-2-butenyl, 1-ethyl-1-butenyl, 1-ethyl-2-butenyl, 1-ethyl-3-butenyl, 2-ethyl-1-butenyl, 2-ethyl-2-butenyl, 2-ethyl-3-butenyl, 1,1 ,2-trimethyl-2-propenyl, 1-ethyl-1-methyl-2-propenyl, 1-ethyl-2-methyl-1-propenyl, 1-ethyl-2-methyl-2-propenyl and the like, or C2-C8-alkenyl, such as the radicals mentioned for C₂-C₆-alkenyl and additionally 1-heptenyl, 2-heptenyl, 3-heptenyl, 1-octenyl, 2-octenyl, 3-octenyl, 4-octenyl and the positional isomers thereof.

The term "C₃-C₈cycloalkyl" as used herein describes mono- or bicyclic cycloaliphatic radicals having from 3 to 8 carbon atoms, preferably 5 or 6 carbon atoms. Examples of monocyclic radicals having 3 to 8 carbon atoms comprise cyclopropyl, cyclobutyl, cyclopentyl, cyclohexyl, cycloheptyl and cyclocotyl. Examples of bicyclic radicals having 7 or 8 carbon atoms comprise bicyclo[2.1.1]hexyl, bicyclo[2.2.1]heptyl, bicyclo[3.1.1]heptyl, bicyclo[2.2.1]heptyl, bicyclo[2.2.2]octyl and bicyclo[3.2.1]octyl.

The term "C₃-C₈cyclalkenyl" as used herein describes mono- or bicyclic cyclic hydrocarbon radicals having from 3 to 8 carbon atoms and a double bond in any position. Examples of monocyclic radicals comprise cyclopropenyl, cyclobutenyl, cyclopentenyl, cyclohexenyl, cycloheptenyl, or cyclooctenyl. Examples of binocyclic radicals bicyclo[3.1.0]hex-2-enyl, 1,2,3,4,5,6-hexahydropentalenyl, or bicyclo[4.1.0]hept-3-enyl.

The term "C₁-C₂₀alkylene" as used herein describes divalent saturated linear or, where possible, branched hydrocarbon radicals having 1 to 20, preferably 1 to 12 carbon atoms ("C₁-C₁₂alkylene"). Examples are methylene, ethylene, n-propylene, isopropylene, n-butylene, sec.-butylene, isobutylene, tert.-butyenel, n-pentylene, 2-pentylene, 3-pentylene, 2,2-dimethylpropylene, 1,1,3,3-tetramethylpentylene, n-hexylene, 1-methylhexylene, 1,1,3,3,5,5-hexamethylhexylene, n-heptylene, isoheptylene, 1,1,3,3-tetramethylbutylene, 1-methylheptylene, 3-methylheptylene, n-octylene, 1,1,3,3-tetramethylbutylene and 2-ethylhexylene, n-nonylene, decylene, undecylene, dodecylene, tridecylene, tetradecylene, pentadecylene, hexadecylene, heptadecylene, or octadecylene.

The term "C₁-C₂₀alkenylene" as used herein as used herein describes divalent monounsaturated straight-chain or branched hydrocarbon radical having 1 to 20, preferably 1 to 12 carbon atoms ("C₁-C₁₂alkenylen"). Examples are methenylene, ethenylene, n-propenylene, isopropenylene, n-butenylene, sec.-butenylene, isobutenylene, tert.-butenyenel, n-pentenylene, 2-pentenylene, 3-pentenylene, 2,2-dimethylpropenylene, 1,1,3,3-tetramethylpentenylene, n-hexenylene, 1-methylhexenylene, 1,1,3,3,5,5-hexamethylhexenylene, n-heptenylene, isoheptenylene, 1,1,3,3-tetramethylbutenylene, 1-methylheptenylene, 3-methylheptenylene, n-octenylene, 1,1,3,3-tetramethylbutenylene and 2-ethylhexenylene, n-nonenylene, decenylene, undecenylene, dodecenylene, tridecenylene, tetradecenylene, pentadecenylene, hexadecenylene, heptadecenylene, or octadecenylene.

The term "C₃-C₈cycloalkylene" as used herein describes divalent mono- or bicyclic cycloaliphatic radicals having from 3 to 8 carbon atoms, preferably 5 or 6 carbon atoms. Examples of monocyclic radicals having 3 to 8 carbon atoms comprise cyclopropylene, cyclobutylene, cyclopentylene, cyclohexylene , cycloheptylene and caclooctylene. Examples of bicyclic radicals having 7 or 8 carbon atoms comprise bicyclo[2.1.1]hexylene, bicyclo[2.2.1]heptylene, bicyclo[3.1.1]heptylene, bicyclo[2.2.1]heptylene, bicyclo[2.2.2]octylene and bicyclo[3.2.1]octylene.

The term "C₃-C₈cycloalkenylene" as used herein describes divalent mono- or bicyclic hydrocarbon radicals having from 3 to 8 carbon atoms and a double bond in any position. Examples of monocyclic radicals comprise cyclopropenylene, cyclobutenylene, cyclopentenylene, cyclohexenylene, cycloheptenylene, or cyclooctenylene. Examples of binocyclic radicals bicyclo[3.1.0]hex-2-enylene, 1,2,3,4,5,6-hexahydropentenylene, or bicyclo[4.1.0]hept-3-enylene.

The term "5- or 6-membered heterocycle" as used herein describes an saturated, unsaturated or aromatic 5- or 6-membered ring comprising at least one heteroatom selected from N, O and S. Examples are pyrrolidinyl, 3-pyrrolinyl, tetrahydrofuranyl, tetrahydrothiophenyl, pyrrolyl, furanyl, thiophenyl, piperidinyl, piperazinyl, tetrahydropyranyl, tetrahydrothiopyranyl, morpholinyl, and pyridinyl.

The invention relates to a photocurable resin composition comprising at least one photoinitiator G-1A of the general formula (Ia) and/or at least one photoinitiator G-1B of the general formula (lb), 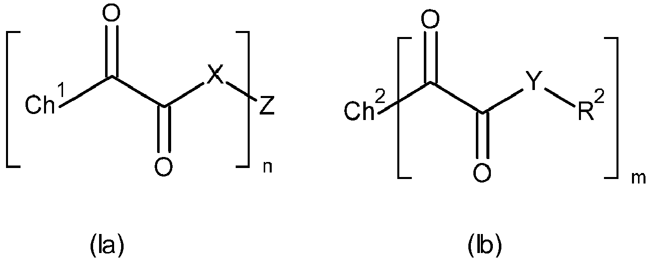 wherein
Ch¹, X, Z, Ch²; Y, R², m and n have the meanings as mentioned above.

Preferred embodiments for the photoinitiator compounds G-1A and G-1B of formula (Ia) and (Ib) are explained in the following.

Compounds G-1A of the general formula (Ia)

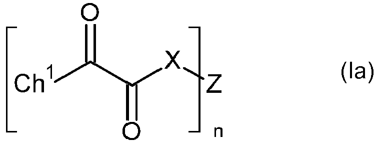

In the general formula (Ia) X is O, S or NR⁵; wherein R⁵ have the meanings as defined above or the preferred meanings indicated below.
- X: is preferably O or S, and particularly O.
- Z: is R¹ or R⁷, and
- n: is 1 to 4, with the proviso that when n is 1,
- Z: is R¹.

Accordingly, when n is 2, 3 or 4, Z is R⁷.

Thus, in one preferred embodiment of the compounds of formula (Ia) n is 1, i.e. a monomeric compound, wherein Z is R¹ with
- R¹: is hydrogen; C₁-C₂₀alkyl or C₂-C₂₀alkenyl, which is unsubstituted or substituted by one or more halogen, CN, OR³, SR⁴, NR⁵R⁶, phenyl and/or naphthyl; C₁-C₂₀alkyl or C₂-C₂₀alkenyl, which is interrupted by one or more -O-, -S-, -NR₅-, phenylene and/or naphthylene; C₃-C₈cycloalkyl or C₃-C₈cycloalkeny, which is unsubstituted or substituted by one or more halogen, OR³, SR⁴, NR⁵R⁶, phenyl; C₃-C₈cycloalkyl or C₃-C₈cycloalkenyl, which is interrupted by one or more -O-, -S- and/or -NR⁵-; phenyl, which is unsubstituted or substituted by one or more halogen, C₁-C₁₂alkyl, OR³, SR⁴, NR⁵R⁶ and/or -C(O)R;, preferably hydrogen; C₁-C₁₂alkyl, which is unsubstituted or substituted by one or more halogen, OR³, SR⁴, NR⁵R⁶, phenyl ; C₁-C₁₂alkyl, which is interrupted by one or more -O-, or phenylene; C₃-C₈cycloalkyl, which is unsubstituted or substituted by one or more halogen, and/or OR³; phenyl, which is unsubstituted or substituted by one or more halogen, C₁-C₁₂alkyl, OR³, SR⁴ and/or NR⁵R⁶; and particularly preferably C₁-C₈alkyl, which is unsubstituted or substituted by one or more OR³, NR⁵R⁶, or phenyl; C₁-C₁₂alkyl, which is interrupted by one or more -O-, or phenylene; phenyl, which is unsubstituted, and even more preferred C₁-C₁₂alkyl, which is unsubstituted or substituted by one or more OCH₃, N(C₁-C₄alkyl)₂, or phenyl;
wherein R³, R⁴, R⁵, R⁶ and R⁸ have the meanings as defined above or the preferred meanings indicated below.

In another preferred embodiment of the compounds of formula (Ia) n is 2, 3 or 4, preferably 2, i.e. a dimeric, trimeric or tetrameric, preferably dimeric compound, wherein Z is R⁷ with
- R⁷: is preferably C₁-C₂₀alkylene or C₁-C₂₀alkenylene, which is unsubstituted or substituted by one or more halogen, OR³, SR⁴ and/or NR⁵R⁶; C₁-C₂₀alkylene or C₁-C₂₀alkenylene, which is interrupted by one or more -O-, -S-, -NR⁵-, phenylene and/or naphthylene; C₃-C₈cycloalkylene or C₃-C₈cycloalkenylene, which is unsubstituted or substituted by one or more halogen, OR³, SR⁴, NR⁵R⁶, phenyl; C₃-C₈cycloalkylene or C₃-C₈cycloalkenylene, which is interrupted by one or more -O-, -S- and/or -NR⁵-; phenylene or naphthylene, which is unsubstituted or substituted by one or more by halogen, C₁-C₁₂alkyl, OR³, SR⁴, NR⁵R⁶ and/or -C(O)R; more preferably C₁-C₁₂alkylene, which is unsubstituted or substituted by one or more halogen, OR³; C₁-C₂₀alkylene, which is interrupted by one or more -O-, and/or phenylene; C₃-C₈cycloalkylene which is unsubstituted or substituted by one or more halogen, OR³,; C₃-C₈cycloalkylene, which is interrupted by one or more -O- ; phenylene, which is unsubstituted or substituted by one or more by halogen, C₁-C₁₂alkyl, and/or OR³; and particularly preferably C₁-C₁₂alkylene, or C₁-C₁₂alkylene, which is interrupted by one or more -O-, or phenylene, wherein R³, R⁴, R⁵, R⁶ and R⁸ have the meanings as defined above or the preferred meaning indicated below.
- Ch¹: in the general formula is Ar¹ or Het¹.
- Ar¹: preferably is selected from the group consisting of phenyl, naphthyl, biphenyl, styryl, stilbenyl, diphenylacetylenyl, terphenylyl, anthracenyl, phenanthrenyl, pyrenyl or triphenylenyl, more preferably selected from the group consisting of phenyl, naphthyl, biphenyl, styryl, terphenylyl, pyrenyl or triphenylenyl, and particularly preferably selected from the group consisting of phenyl and naphthyl.
- Ar¹: is unsubstituted or substituted with one or more substituents preferably selected from the group consisting of halogen; NO₂, CN; OR³; SR⁴; NR⁵R⁶; C₁-C₂₀alkyl and/or C₂-C₂₀alkenyl, which are independently from each other unsubstituted or substituted by one or more halogen, CN, OR³, SR⁴, NR⁵R⁶, phenyl and/or naphthyl; C₁-C₂₀alkyl and/or C₂-C₂₀alkenyl, which are independently from each other interrupted by one or more -O-, -S-, -NR⁵-, phenylene and/or naphthylene; C₃-C₈cycloalkyl and/or C₃-C₈cycloalkenyl, which are independently from each unsubstituted or substituted by one or more halogen, CN, OR³, SR⁴ and/or NR⁵R⁶; C₃-C₈cycloalkyl and/or C₃-C₈cycloalkenyl, which are independently from each other interrupted by one or more -O-, -S- and/or -NR⁵-; phenyl and/or naphthyl, which are independently from each other unsubstituted or substituted by one or more halogen, CN, C₁-C₂₀alkyl, C₃-C₈cycloalkyl, OR³, SR⁴ and/or NR⁵R⁶; and/or -C(O)R⁸;
and/or
OR₃, SR⁴, and/or NR⁵R⁶ form together with other substituents, if present on adjacent ring atoms, on Ar¹ via the radicals R³, R⁴, R⁵ and/or R⁶ one or more 5- or 6-membered heterocycles;
and/or
R⁵ and R⁶ form together with the N atom to which they are attached a 5- or 6-membered heterocycle;
more preferably Ar¹ is unsubstituted or substituted with one or more substituents selected from the group consisting of halogen; CN; OR³; SR⁴; NR⁵R⁶; C₁-C₁₂alkyl and/or C₂-C₁₂alkenyl, which are independently from each other unsubstituted or substituted by one or more halogen, CN, OR³, SR⁴, NR⁵R⁶, phenyl; C₁-C₁₂alkyl and/or C₂-C₁₂alkenyl, which are independently from each other interrupted by one or more -O-, -S-, -NR⁵-, phenylene; C₃-C₈cycloalkyl and/or C₃-C₈cycloalkenyl, which are independently from each unsubstituted or substituted by one or more halogen, OR³, SR⁴ and/or NR⁵R⁶; C₃-C₈cycloalkyl and/or C₃-C₈cycloalkenyl, which are independently from each other interrupted by one or more -O-, -S- and/or -NR⁵-; phenyl, which is independently from each other unsubstituted or substituted by one or more halogen, C₁-C₁₂alkyl, OR³, SR⁴ and/or NR⁵R⁶; and/or -C(O)R⁸; and/or OR₃, SR⁴, and/or NR⁵R⁶ form together with other substituents, if present at adjacent ring atoms at Ar¹ via the radicals R³, R⁴, R⁵ and/or R⁶ one or more 5- or 6-membered heterocycles;
and particularly preferably unsubstituted or substituted with one or more substituents selected from the group consisting selected from halogen, OR³, SR⁴, NR⁵NR⁶ and/or C₁-C₁₂alkyl, which is unsubstituted or substituted by one or more phenyl, and/or OR₃, SR⁴, and/or NR⁵R⁶ form together with other substituents, if present at adjacent ring atoms at Ar¹ via the radicals R³, R⁴, R⁵ and/or R⁶ one or more 5- or 6-membered heterocycles, preferably carbazolyl, or a morpholinyl,
wherein R³, R⁴, R⁵, R⁶ and R⁸ have the meanings as defined above or the preferred meanings indicated below,
- Het¹: is selected from the group consisting of furyl, thienyl, pyrrolyl, oxazolyl, isoxazolyl, thiazolyl, isothiazole, imidazolyl, pyrazolyl, oxadiazolyl, thiadiazolyl, triazolyl, pyridyl, pyrimidinyl, pyrazinyl, pyridazinyl, triazinyl, 2- or 3-benzofuryl, 2- or 3-benzothienyl, 2- or 3-indolyl, 2-benzoxazolyl, 2-benzothiazolyl, 2-benzoimidazolyl, 3-indazolyl, 2-, 3- or 4-quinolyl, 1-, 3- or 4-isoquinolyl, 3-phthalazinyl, 2- or 3-quinoxalinyl, pteridinyl, bithienyl, trithienyl, acridinyl, phenazinyl or purinyl; more preferably from furyl, thienyl; pyrrolyl, bithienyl, trithienyl, and particularly preferably from furyl, thienyl; and pyrrolyl.
- Het¹: is as defined above is unsubstituted or substituted with one or more substituents preferably selected from the group consisting of halogen, OR³, SR⁴ and/or NR⁵R⁶; C₁-C₁₂alkyl and/or C₂-C₁₂alkenyl, which are independently from each other unsubstituted or substituted by one or more halogen, OR³, SR⁴, NR⁵R⁶, phenyl; C₁-C₁₂alkyl and/or C₂-C₁₂alkenyl, each of which is interrupted by one or more -O-, -S-, -NR⁵-, phenylene; C₃-C₈cycloalkyl and/or C₃-C₈cycloalkenyl, which are independently from each other unsubstituted or substituted by one or more halogen, OR³, SR⁴ and/or NR⁵R⁶; C₃-C₈cycloalkyl and/or C₃-C₈cycloalkenyl, each of which is interrupted by one or more -O-, -S- and/or -NR⁵-; phenyl, which is independently from each other unsubstituted or substituted by one or more halogen, C₁-C₁₂alkyl, OR³, SR⁴ and/or NR⁵R⁶; and/or -C(O)R⁸;
and/or
OR₃, SR⁴, and/or NR⁵R⁶ form together with other substituents, if present at adjacent ring atoms, on Het¹ via the radicals R³, R⁴, R⁵ and/or R⁶ one or more 5- or 6-membered heterocycles;
more preferably unsubstituted or substituted with one or more substituents selected from the group consisting of halogen, OR³, SR⁴ and/or NR⁵R⁶; C₁-C₁₂alkyl and/or C₂-C₁₂alkenyl, which are independently from each other unsubstituted or substituted by one or more halogen, OR³, SR⁴, NR⁵R⁶, phenyl; C₁-C₁₂alkyl and/or C₂-C₁₂alkenyl, each of which is interrupted by one or more -O-, -S-, -NR⁵-, phenylene; C₃-C₈cycloalkyl and/or C₃-C₈cycloalkenyl, which are independently from each other unsubstituted or substituted by one or more halogen, OR³, SR⁴ and/or NR⁵R⁶; C₃-C₈cycloalkyl and/or C₃-C₈cycloalkenyl, each of which is interrupted by one or more -O-, -S- and/or -NR⁵-; phenyl, which is independently from each other unsubstituted or substituted by one or more halogen, C₁-C₁₂alkyl, OR³, SR⁴ and/or NR⁵R⁶; and/or -C(O)R⁸,
and/or
OR₃, SR⁴, and/or NR⁵R⁶ form together with other substituents on Het¹ , if present at adjacent ring atoms, via the radicals R³, R⁴, R⁵ and/or R⁶ one or more 5- or 6-membered heterocycles;
and particularly preferably unsubstituted or substituted with one or more C₁-C₁₂alkyl, wherein R³, R⁴, R⁵, R⁶ and R⁸ have the meanings as defined above or the preferred meanings indicated below;
- R³: preferably is hydrogen; C₁-C₂₀alkyl or C₂-C₂₀alkenyl, which is unsubstituted or substituted by one or more halogen, CN, OR³, SR⁴, NR⁵R⁶ and/or phenyl; C₁-C₂₀alkyl or C₂-C₂₀alkenyl, which is interrupted by one or more -O-, -S-, -NR₅- and/or phenylene; C₃-C₈cycloalkyl or C₃-C₈cycloalkeny, which is unsubstituted or substituted by one or more halogen, OR³, SR⁴, NR⁵R⁶, phenyl; C₃-C₈cycloalkyl or C₃-C₈cycloalkenyl, which is interrupted by one or more -O-, -S- and/or -NR⁵-; phenyl, which is unsubstituted or substituted by one or more by halogen, CN, C₁-C₁₂alkyl, OR³, SR⁴,NR⁵R⁶ and/or -C(O)R; ore preferably hydrogen; C₁-C₁₂alkyl, which is unsubstituted or substituted by one or more halogen, OR³, SR⁴, NR⁵R⁶ and/or phenyl; C₁-C₁₂alkyl, which is interrupted by one or more -O and/or phenylene; C₃-C₈cycloalkyl, which is unsubstituted or substituted by one or more halogen; phenyl, which is unsubstituted or substituted by one or more by halogen, C₁-C₁₂alkyl, OR³; and particularly preferably is C₁-C₁₂alkyl or phenyl; wherein R⁴, R⁵, R⁶ and R⁸ have the meanings as defined above or the preferred meaning indicated below;
- R⁴: preferably is hydrogen; C₁-C₁₂alkyl or C₂-C₁₂alkenyl, which is unsubstituted or substituted by one or more halogen, OR³, SR⁴, NR⁵R⁶, and/or phenyl; C₁-C₁₂alkyl or C₂-C₁₂alkenyl, which is interrupted by one or more -O-, -S-, -NR⁵- and/or phenylene; C₃-C₈cycloalkyl or C₃-C₈cycloalkeny, which is unsubstituted or substituted by one or more halogen, OR³, SR⁴, NR⁵R⁶; C₃-C₈cycloalkyl or C₃-C₈cycloalkenyl, which is interrupted by one or more -O-, -S- and/or -NR⁵-; phenyl or naphthyl, which is unsubstituted or substituted by one or more by halogen, C₁-C₁₂alkyl, OR³, SR⁴, NR⁵R⁶ and/or -C(O)R; more preferably hydrogen; C₁-C₁₂alkyl, which is unsubstituted or substituted by one or more halogen, OR³, SR⁴, NR⁵R⁶ and/or phenyl; C₁-C₁₂alkyl , which is interrupted by one or more -O-, or phenylene; C₃-C₈cycloalkyl, which is unsubstituted or substituted by one or more halogen,; phenyl which is unsubstituted or substituted by one or more by halogen, C₁-C₁₂alkyl, and/or OR³; and particularly preferably is C₁-C₁₂alkyl or phenyl; wherein R³, R⁵, R⁶ and R⁸ have the meanings as defined above or the preferred meaning indicated below;
- R⁵, R⁶: preferably - unless indicated otherwise - are independently of each other hydrogen; C₁-C₁₂alkyl or C₂-C₁₂alkenyl, which is unsubstituted or substituted by one or more halogen, OR³, SR⁴, NR⁵R⁶ and/or phenyl; C₁-C₁₂alkyl or C₂-C₁₂alkenyl, which is interrupted by one or more -O-, -S-, -NR⁵- and/or phenylene; C₃-C₈cycloalkyl or C₃-C₈cycloalkeny, which is unsubstituted or substituted by one or more halogen, OR³, SR⁴, NR⁵R⁶; C₃-C₈cycloalkyl or C₃-C₈cycloalkenyl, which is interrupted by one or more -O-, -S- and/or -NR⁵-; phenyl or naphthyl, which is unsubstituted or substituted by one or more by halogen, C₁-C₁₂alkyl, OR³, SR⁴ and/or NR⁵R⁶; and/or -C(O)R⁸; more preferably independently of each other hydrogen; C₁-C₁₂alkyl, which is unsubstituted or substituted by one or more halogen, OR³, and/or phenyl; C₁-C₁₂alkyl, which is interrupted by one or more -O-, or phenylene; C₃-C₈cycloalkyl, which is unsubstituted or substituted by one or more halogen phenyl, which is unsubstituted or substituted by one or more by halogen, C₁-C₁₂alkyl, and/or OR³; and/or -C(O)R⁸; and particularly preferably are independently of each other C₁-C₁₂alkyl; or form together with the N atom to which they are attached a 5- or 6-membred heterocycle, preferably morpholinyl; wherein R³, R⁴, and R⁸ have the meanings as defined above or the preferred meaning indicated below.
- R₈: preferably is OR³, SR⁴ and/or NR⁵R⁶; C₁-C₁₂alkyl or C₂-C₁₂alkenyl, which is unsubstituted or substituted by one or more halogen, OR³, SR⁴, NR⁵R⁶, phenyl; C₁-C₁₂alkyl or C₂-C₁₂alkenyl, which is interrupted by one or more -O-, -S-, -NR⁵-, phenylene and/or naphthylene; C₃-C₈cycloalkyl or C₃-C₈cycloalkenyl, which is unsubstituted or substituted by one or more halogen, OR³, SR⁴, NR⁵R⁶,; C₃-C₈cycloalkyl or C₃-C₈cycloalkenyl, which is interrupted by one or more -O-, -S- and/or -NR₅-; phenyl, naphthyl, furanyl, thienyl, pyrroryl, benzofuranyl, benzothienyl, indoryl and/or benzoimidazoyl, which is unsubstituted or substituted by one or more halogen, C₁-C₁₂alkyl, OR³, SR⁴ and/or NR⁵R⁶;
and/or
OR₃, SR⁴, and/or NR⁵R⁶ form together with other substituents via the radicals R³, R⁴, R⁵ and/or R⁶ one or more 5- or 6-membered heterocycles;
and/or
R⁵ and R⁶ form together with the N atom to which they are attached a 5- or 6-membered heterocycle;
more preferably OR³ and/or NR⁵R⁶; C₁-C₁₂alkyl, which is unsubstituted or substituted by one or more halogen, OR³, and/or phenyl; C₁-C₁₂alkyl, which is interrupted by one or more -O-, and/or phenylene; C₃-C₈cycloalkyl, which is unsubstituted or substituted by one or more halogen; phenyl, naphthyl, furanyl, thienyl, pyrroryl, benzofuranyl, benzothienyl, indoryl and/or benzoimidazoyl, which is unsubstituted or substituted by one or more halogen, C₁-C₁₂alkyl, OR³, and/or NR⁵R⁶; and/or
R⁵ and R⁶ form together with the N atom to which they are attached a 5- or 6-membered heterocycle; and particularly preferably is phenyl, unsubstituted or substituted by one more C₁-C₁₂alkyl, wherein R³, R⁴, R⁵, and R⁶ have the meanings as defined above.

Compounds G-1B of the general formula (Ib)

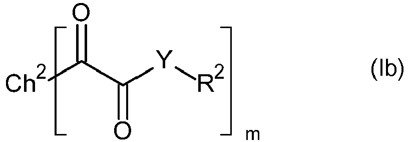

In the general formula (Ib) Y is O, S or NR⁵; preferably O, wherein R⁵ have the meanings as defined above.
- m: is 2 to 4, preferably 2. In other words, the compounds of formula (Ib) preferably are dimeric compounds.
- Ch²: is Ar², Het² or a group of the general formula (B) 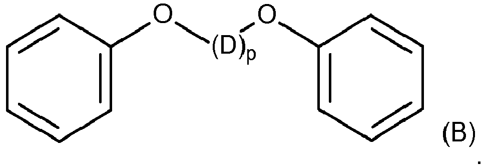 Ar² is preferably selected from phenylene, naphthylene, biphenylene, styrylene, stilbenylene, diphenylacetylenylene, terphenylene, anthracenylene, phenanthrenylene, pyrenylene, triphenylene, diphenylmethylene, triphenylmethylene, tetraphenylmethylene or a group of the general formula (A) 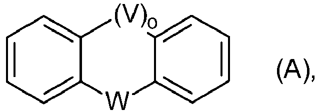 wherein V and W are independently from each other a direct bond, O, S or NR⁵; and o is 0 or 1,
more preferably diphenylmethylene, phenylene, biphenylene, or naphthylene; or a group of the general formula (A), wherein V is a directed bond, o is 1 and W is O, S or NR⁵, or wherein o is 0 and W is O, S or NR⁵, wherein R⁵ have the meanings as defined above.

The group of the general formula (A) is a linking moiety between two three or four units of the formula (I*)

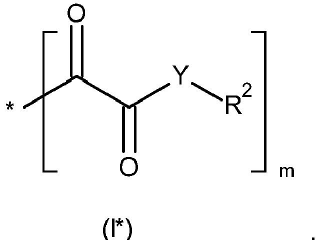

The units of formula (I*) are connected to the group of the general formula (A) via the "-location which are attached to at least one fused phenyl ring of the group (A).

In one preferred embodiment all units of formula (I*) present in the particular compound, i.e. 2, 3, or 4, can be attached to the same phenyl ring. In another preferred embodiment, every phenyl ring of group A is connected with at least one unit of the formula (I*).

More preferred are compounds, wherein every phenyl ring of the group (A) is connected with one unit of formula (I*), particularly preferred are compounds of the following formulae (I*-1a) and (I*-1b) 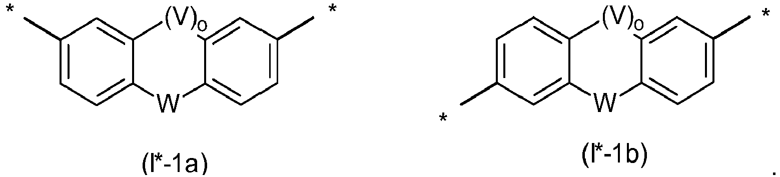
- Ar²: is unsubstituted or substituted by one or more substituents preferably selected from the group consisting of halogen, OR³, SR⁴ and/or NR⁵R⁶; C₁-C₁₂alkyl and/or C₂-C₁₂alkenyl, which is unsubstituted or substituted by one or more halogen, OR³, SR⁴, NR⁵R⁶, phenyl; C₁-C₁₂alkyl and/or C₂-C₁₂alkenyl, which is interrupted by one or more -O-, -S-, -NR⁵-, phenylene; C₃-C₈cycloalkyl and/or C₃-C₈cycloalkenyl, which is unsubstituted or substituted by one or more halogen, OR³, SR⁴ and/or NR⁵R⁶; C₃-C₈cycloalkyl and/or C₃-C₈cycloalkenyl, which is interrupted by one or more -O-, -S- and/or -NR⁵-; phenyl, which is unsubstituted or substituted by one or more halogen, C₁-C₁₂alkyl, OR³, SR⁴ and/or NR⁵R⁶; and/or -C(O)R⁸; and/or OR₃, SR⁴, and/or NR⁵R⁶ form together with other substituents on Ar² via the radicals R³, R⁴, R⁵ and/or R⁶ one or more 5- or 6-membered heterocycles;
more preferably unsubstituted or substituted by one or more C₁-C₁₂alkyl, which is unsubstituted or substituted by one or more phenyl; or C₁-C₁₂alkyl , which is interrupted by one or more phenylene; or phenyl, wherein R³, R⁴, R⁵, R⁶ and R⁸ have the meanings as defined above.
- Het²: is preferably selected from the group consisting of furyl, thienyl, pyrrolyl, oxazolyl, isoxazolyl, thiazolyl, isothiazole, imidazolyl, pyrazolyl, oxadiazolyl, thiadiazolyl, triazolyl, pyridyl, pyrimidinyl, pyrazinyl, pyridazinyl, triazinyl, 2- or 3-benzofuryl, 2- or 3-benzothienyl, 2- or 3-indolyl, 2-benzoxazolyl, 2-benzothiazolyl, 2-benzoimidazolyl, 3-indazolyl, 2-, 3- or 4-quinolyl, 1-, 3- or 4-isoquinolyl, 3-phthalazinyl, 2- or 3-quinoxalinyl, pteridinyl, bithienyl, trithienyl, acridinyl, phenazinyl or purinyl , more preferably bithienyl, or trithienyl.
- Het²: is unsubstituted or substituted with one or more substituents preferably selected from the group consisting of halogen, OR³, SR⁴ and/or NR⁵R⁶; C₁-C₁₂alkyl and/or C₂-C₁₂alkenyl, which are independently from each other unsubstituted or substituted by one or more halogen, OR³, SR⁴, NR⁵R⁶, phenyl; C₁-C₁₂alkyl and/or C₂-C₁₂alkenyl, each of which is interrupted by one or more -O-, -S-, -NR⁵-, phenylene; C₃-C₈cycloalkyl and/or C₃-C₈cycloalkenyl, which are independently from each other unsubstituted or substituted by one or more halogen, OR³, SR⁴ and/or NR⁵R⁶; C₃-C₈cycloalkyl and/or C₃-C₈cycloalkenyl, each of which is interrupted by one or more -O-, -S- and/or -NR⁵-; phenyl, which is independently from each other unsubstituted or substituted by one or more halogen, C₁-C₁₂alkyl, OR³, SR⁴ and/or NR⁵R⁶; and/or -C(O)R⁸; and/or
OR₃, SR⁴, and/or NR⁵R⁶ form together with other, substituents, if present at adjacent ring atoms, on Het¹ via the radicals R³, R⁴, R⁵ and/or R⁶ one or more 5- or 6-membered heterocycles; preferably unsubstituted or substituted by one or more C₁-C₁₂alkyl, which is unsubstituted or substituted by one or more phenyl; or C₁-C₁₂alkyl , which is interrupted by one or more phenylene; or phenyl, wherein R³, R⁴, R⁵, R⁶ and R⁸ have the meanings as defined above.

The group of the general formula (B) preferably is represented by 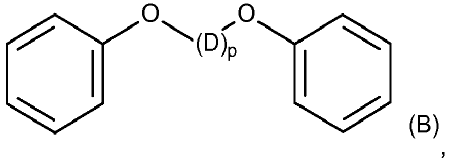 wherein
- D: is preferably C₁-C₂₀alkyl, which is unsubstituted or substituted by one or more halogen, CN, OR³, SR⁴, NR⁵R⁶, phenyl and/or naphthyl or C₁-C₂₀alkyl or C₂-C₂₀alkenyl, which is interrupted by one or more -O-, -S-, -NR⁵-, phenylene and/or naphthylene; more preferably C₁-C₂₀alkyl, which is unsubstituted; or C₁-C₂₀alkyl, which is interrupted by one or more -O-; and
- p: is 1,
wherein R³, R⁴, R⁵, and R⁶ have the meanings as defined above. R² is hydrogen; C₁-C₂₀alkyl or C₂-C₂₀alkenyl, which is unsubstituted or substituted by one or more halogen, CN, OR³, SR⁴, NR⁵R⁶, phenyl and/or naphthyl; C₁-C₂₀alkyl or C₂-C₂₀alkenyl, which is interrupted by one or more -O-, -S-, -NR⁵-, phenylene and/or naphthylene; C₃-C₈cycloalkyl or C₃-C₈cycloalkenyl, which is unsubstituted or substituted by one or more halogen, OR³, SR⁴, NR⁵R⁶, phenyl; C₃-C₈cycloalkyl or C₃-C₈cycloalkenyl, which is interrupted by one or more -O-, -S- and/or -NR⁵-; phenyl, which is unsubstituted or substituted by one or more by halogen, C₁-C₁₂alkyl, OR³, SR⁴ and/or NR⁵R⁶; more preferably C₁-C₁₂alkyl, or phenyl, wherein R³, R⁴, R⁵, and R⁶ and have the meanings as defined above.

The group of the general formula (B) is a linking moiety between two three or four units of the formula (I*)

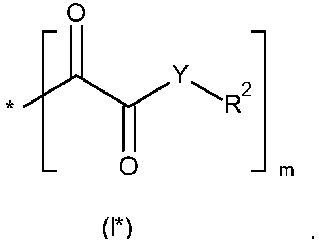

The units of formula (I*) are connected to the group of the general formula (B) via the *-location which are attached to at least one phenyl ring of the group (B).

In one preferred embodiment all units of formula (I*) present in the particular compound, i.e. 2, 3, or 4, can be attached to the same phenyl ring. In another preferred embodiment, every phenyl ring of group (B) is connected with at least one unit of the formula (I*).

More preferred are compounds, wherein every phenyl ring of the group (B) is connected with one unit of formula (I*), particularly preferred are compounds of the following formulae (I*-2)

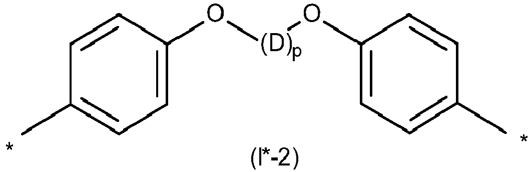

In one preferred embodiment the composition of the invention comprises at least one radical photoinitiator selected from a radical photoinitiator G-1A of the general formula (la), wherein Z, X and n have the meanings as defined in claim 1 and wherein
- Ch¹: is Ar¹ or Het¹;
- Ar¹: is selected from the group consisting of phenyl, naphthyl, biphenyl, styryl, stilbenyl, diphenylacetylenyl, terphenylyl, anthracenyl, phenanthrenyl, pyrenyl or triphenylenyl; which is unsubstituted or substituted with one or more substituents selected from the group consisting of halogen; NO₂; CN; OR³; SR⁴; NR⁵R⁶; C₁-C₁₂alkyl and/or C₂-C₁₂alkenyl, which are independently from each other unsubstituted or substituted by one or more halogen, CN, OR³, SR⁴, NR⁵R⁶, phenyl; C₁-C₁₂alkyl and/or C₂-C₁₂alkenyl, which are independently from each other interrupted by one or more -O-, -S-, -NR⁵-, phenylene; C₃-C₈cycloalkyl and/or C₃-C₈cycloalkenyl, which are independently from each unsubstituted or substituted by one or more halogen, OR³, SR⁴ and/or NR⁵R⁶; C₃-C₈cycloalkyl and/or C₃-C₈cycloalkenyl, which are independently from each other interrupted by one or more -O-, -S- and/or -NR⁵-; phenyl, which is independently from each other unsubstituted or substituted by one or more halogen, C₁-C₁₂alkyl, OR³, SR⁴ and/or NR⁵R⁶; and/or -C(O)R⁸;
and/or
- Het¹: OR³, SR⁴, and/or NR⁵R⁶ form together with other substituents, if present at adjacent ring atoms at Ar¹ via the radicals R³, R⁴, R⁵ and/or R⁶ one or more 5- or 6-membered heterocycles; is selected from the group consisting of furyl, thienyl, pyrrolyl, oxazolyl, isoxazolyl, thiazolyl, isothiazole, imidazolyl, pyrazolyl, oxadiazolyl, thiadiazolyl, triazolyl, pyridyl, pyrimidinyl, pyrazinyl, pyridazinyl, triazinyl, 2- or 3-benzofuryl, 2- or 3-benzothienyl, 2- or 3-indolyl, 2-benzoxazolyl, 2-benzothiazolyl, 2-benzoimidazolyl, 3-indazolyl, 2-, 3- or 4-quinolyl, 1-, 3- or 4-isoquinolyl, 3-phthalazinyl, 2- or 3-quinoxalinyl, pteridinyl, bithienyl, trithienyl, acridinyl, phenazinyl or purinyl; which is unsubstituted or substituted with one or more substituents selected from the group consisting of halogen, OR³, SR⁴ and/or NR⁵R⁶; C₁-C₁₂alkyl and/or C₂-C₁₂alkenyl, which are independently from each other unsubstituted or substituted by one or more halogen, OR³, SR⁴, NR⁵R⁶, phenyl; C₁-C₁₂alkyl and/or C₂-C₁₂alkenyl, each of which is interrupted by one or more -O-, -S-, -NR⁵-, phenylene; C₃-C₈cycloalkyl and/or C₃-C₈cycloalkenyl, which are independently from each other unsubstituted or substituted by one or more halogen, OR³, SR⁴ and/or NR⁵R⁶; C₃-C₈cycloalkyl and/or C₃-C₈cycloalkenyl, each of which is interrupted by one or more -O-, -S- and/or -NR⁵-; phenyl, which is independently from each other unsubstituted or substituted by one or more halogen, C₁-C₁₂alkyl, OR³, SR⁴ and/or NR⁵R⁶; and/or -C(O)R⁸; and/or
OR³, SR⁴, and/or NR⁵R⁶ form together with other substituents, if present at adjacent ring atoms on Het¹ via the radicals R³, R⁴, R⁵ and/or R⁶ one or more 5- or 6-membered heterocycles;
- R¹: is hydrogen; C₁-C₂₀alkyl or C₂-C₂₀alkenyl, which is unsubstituted or substituted by one or more halogen, CN, OR³, SR⁴, NR⁵R⁶, phenyl and/or naphthyl; C₁-C₂₀alkyl or C₂-C₂₀alkenyl, which is interrupted by one or more -O-, -S-, -NR⁵-, phenylene and/or naphthylene; C₃-C₃cycloalkyl or C₃-C₈cycloalkeny, which is unsubstituted or substituted by one or more halogen, OR³, SR⁴, NR⁵R⁶, phenyl; C₃-C₃cycloalkyl or C₃-C₈cycloalkenyl, which is interrupted by one or more -O-, -S- and/or -NR⁵-; phenyl, which is unsubstituted or substituted by one or more halogen, C₁-C₁₂alkyl, OR³, SR⁴ , NR⁵R⁶ and/or -C(O)R;
- R³: is hydrogen; C₁-C₂₀alkyl or C₂-C₂₀alkenyl, which is unsubstituted or substituted by one or more halogen, CN, OR³, SR⁴, NR⁵R⁶ and/or phenyl; C₁-C₂₀alkyl or C₂-C₂₀alkenyl, which is interrupted by one or more -O-, -S-, -NR₅- and/or phenylene; C₃-C₃cycloalkyl or C₃-C₈cycloalkenyl, which is unsubstituted or substituted by one or more halogen, OR³, SR⁴, NR⁵R⁶, phenyl; C₃-C₈cycloalkyl or C₃-C₈cycloalkenyl, which is interrupted by one or more -O-, -S- and/or -NR⁵-; phenyl, which is unsubstituted or substituted by one or more by halogen, CN, C₁-C₁₂alkyl, OR³, SR⁴,NR⁵R⁶ and/or -C(O)R;
- R⁴: is hydrogen; C₁-C₁₂alkyl or C₂-C₁₂alkenyl, which is unsubstituted or substituted by one or more halogen, OR³, SR⁴, NR⁵R⁶, and/or phenyl; C₁-C₁₂alkyl or C₂-C₁₂alkenyl, which is interrupted by one or more -O-, -S-, -NR⁵- and/or phenylene; C₃-C₈cycloalkyl or C₃-C₈cycloalkenyl, which is unsubstituted or substituted by one or more halogen, OR³, SR⁴, NR⁵R⁶; C₃-C₃cycloalkyl or C₃-C₈cycloalkenyl, which is interrupted by one or more -O-, -S- and/or -NR⁵-; phenyl or naphthyl, which is unsubstituted or substituted by one or more by halogen, C₁-C₁₂alkyl, OR³, SR⁴, NR⁵R⁶ and/or -C(O)R;
- R⁵, R⁶: are independently of each other hydrogen; C₁-C₁₂alkyl or C₂-C₁₂alkenyl, which is unsubstituted or substituted by one or more halogen, OR³, SR⁴, NR⁵R⁶ and/or phenyl; C₁-C₁₂alkyl or C₂-C₁₂alkenyl, which is interrupted by one or more -O-, -S-, -NR⁵- and/or phenylene; C₃-C₈cycloalkyl or C₃-C₈cycloalkenyl, which is unsubstituted or substituted by one or more halogen, OR³, SR⁴, NR⁵R⁶; C₃-C₈cycloalkyl or C₃-C₈cycloalkenyl, which is interrupted by one or more -O-, -S- and/or -NR⁵-; phenyl or naphthyl, which is unsubstituted or substituted by one or more by halogen, C₁-C₁₂alkyl, OR³, SR⁴ and/or NR⁵R⁶; and/or -C(O)R⁸;
- R⁷: is C₁-C₂₀alkylene or C₁-C₂₀alkenylene, which is unsubstituted or substituted by one or more halogen, OR³, SR⁴ and/or NR⁵R⁶; C₁-C₂₀alkylene or C₁-C₂₀alkenylene, which is interrupted by one or more -O-, -S-, -NR⁵-, phenylene and/or naphthylene; C₃-C₈cycloalkylene or C₃-C₈cycloalkenylene, which is unsubstituted or substituted by one or more halogen, OR³, SR⁴, NR⁵R⁶, phenyl; C₃-C₃cycloalkylene or C₃-C₈cycloalkenylene, which is interrupted by one or more -O-, -S- and/or -NR⁵-; phenylene or naphthylene, which is unsubstituted or substituted by one or more by halogen, C₁-C₁₂alkyl, OR³, SR⁴, NR⁵R⁶ and/or -C(O)R;
- R₈: is OR³, SR⁴ and/or NR⁵R⁶; C₁-C₁₂alkyl or C₂-C₁₂alkenyl, which is unsubstituted or substituted by one or more halogen, OR³, SR⁴, NR⁵R⁶, phenyl; C₁-C₁₂alkyl or C₂-C₁₂alkenyl, which is interrupted by one or more -O-, -S-, -NR⁵-, phenylene and/or naphthylene; C₃-C₈cycloalkyl or C₃-C₈cycloalkenyl, which is unsubstituted or substituted by one or more halogen, OR³, SR⁴, NR⁵R⁶; C₃-C₈cycloalkyl or C₃-C₈cycloalkenyl, which is interrupted by one or more -O-, -S- and/or -NR⁵-; phenyl, naphthyl, furanyl, thienyl, pyrroryl, benzofuranyl, benzothienyl, indoryl and/or benzoimidazoyl, which is unsubstituted or substituted by one or more halogen, C₁-C₁₂alkyl, OR³, SR⁴ and/or NR⁵R⁶; and/or
OR³, SR⁴, and/or NR⁵R⁶ form together with other via the radicals R³, R⁴, R⁵ and/or R⁶ one or more 5- or 6-membered heterocycles; and/or
R⁵ and R⁶ form together with the N atom to which they are attached a 5- or 6-membered heterocycle;
under the proviso that when n is 1, Z is R¹; and/or
at least one radical photoinitiator G-1B of the general formula (lb), wherein
R³, R⁴, R⁵, R⁶, and R⁸ have the meanings as defined above; and
Ch² is Ar² or Het² or a group of the general formula (B) 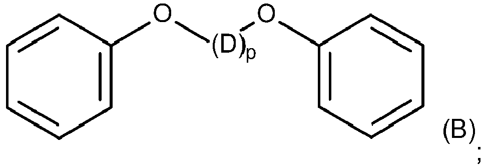 wherein
   - D: is C₁-C₂₀alkyl, which is unsubstituted or substituted by one or more halogen, CN, OR³, SR⁴, NR⁵R⁶, phenyl and/or naphthyl or C₁-C₂₀alkyl or C₂-C₂₀alkenyl, which is interrupted by one or more -O-, -S-, -NR⁵-, phenylene and/or naphthylene;
   - p: is 1;
   - R²: is hydrogen; C₁-C₂₀alkyl or C₂-C₂₀alkenyl, which is unsubstituted or substituted by one or more halogen, CN, OR³, SR⁴, NR⁵R⁶, phenyl and/or naphthyl; C₁-C₂₀alkyl or C₂-C₂₀alkenyl, which is interrupted by one or more -O-, -S-, -NR⁵-, phenylene and/or naphthylene; C₃-C₈cycloalkyl or C₃-C₈cycloalkenyl, which is unsubstituted or substituted by one or more halogen, OR³, SR⁴, NR⁵R⁶, phenyl; C₃-C₃cycloalkyl or C₃-C₈cycloalkenyl, which is interrupted by one or more -O-, -S- and/or -NR⁵-; phenyl, which is unsubstituted or substituted by one or more by halogen, C₁-C₁₂alkyl, OR³, SR⁴ and/or NR⁵R⁶;
   - Ar²: is phenylene, naphthylene, biphenylene, styrylene, stilbenylene, diphenylacetylenylene, terphenylene, anthracenylene, phenanthrenylene, pyrenylene, triphenylene, diphenylmethylene, triphenylmethylene, tetraphenylmethylene or a group of the general formula (A) 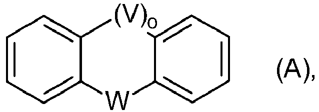 wherein
   V and W are independently from each other a direct bond, O, S or NR⁵;
   o is 0 or 1; each of which is unsubstituted or substituted by one or more substituents selected from the group consisting of halogen, OR³, SR⁴ and/or NR⁵R⁶; C₁-C₁₂alkyl and/or C₂-C₁₂alkenyl, which is unsubstituted or substituted by one or more halogen, OR³, SR⁴, NR⁵R⁶, phenyl; C₁-C₁₂alkyl and/or C₂-C₁₂alkenyl, which is interrupted by one or more -O-, -S-, -NR⁵-, phenylene; C₃-C₈cycloalkyl and/or C₃-C₈cycloalkenyl, which is unsubstituted or substituted by one or more halogen, OR³, SR⁴ and/or NR⁵R⁶; C₃-C₈cycloalkyl and/or C₃-C₈cycloalkenyl, which is interrupted by one or more -O-, -S- and/or -NR⁵-; phenyl, which is unsubstituted or substituted by one or more halogen, C₁-C₁₂alkyl, OR³, SR⁴ and/or NR⁵R⁶; and/or -C(O)R⁸;
   and/or
   - Het²: OR₃, SR⁴, and/or NR⁵R⁶ form together with other substituents on Ar² via the radicals R³, R⁴, R⁵ and/or R⁶ one or more 5- or 6-membered heterocycles; is furylene, thienylene, pyrrolylene, oxazolylene, isoxazolylene, thiazolylene, isothiazolylene, imidazolylene, pyrazolylene, oxadiazolylene, thiadiazolylene, triazolylene, pyridylene, pyrimidinylene, pyrazinylene, pyridazinylene, triazinylene, benzofurylene, benzothienylene, indolylene, benzoxazolylene, benzothiazolylene, benzoimidazolylene, indazolylen, quinolylene, isoquinolylene, phthalazinylene, quinoxalinylene, pteridinylene, bithienylene, trithienylene, acridinylene, phenazinylene or purinylene; each of which is unsubstituted or substituted by one or more halogen, OR³, SR⁴ and/or NR⁵R⁶; C₁-C₁₂alkyl and/or C₂-C₁₂alkenyl, which is unsubstituted or substituted by one or more halogen, OR³, SR⁴, NR⁵R⁶, phenyl; C₁-C₁₂alkyl and/or C₂-C₁₂alkenyl, which is interrupted by one or more -O-, -S-, -NR⁵-, phenylene; C₃-C₈cycloalkyl and/or C₃-C₈cycloalkenyl, which is unsubstituted or substituted by one or more halogen, OR³, SR⁴ and/or NR⁵R⁶; C₃-C₈cycloalkyl and/or C₃-C₈cycloalkenyl, which is interrupted by one or more -O-, -S- and/or -NR⁵-; phenyl, which is unsubstituted or substituted by one or more halogen, C₁-C₁₂alkyl, OR³, SR⁴ and/or NR⁵R⁶; and/or -C(O)R⁸;
   and/or
   OR₃, SR⁴, and/or NR⁵R⁶ form together with other substituents on Het², if present at adjacent ring atoms, via the radicals R³, R⁴, R⁵ and/or R⁶ one or more 5- or 6-membered heterocycles; and
   wherein m, and Y have the meanings as defined in claim 1.

In another preferred embodiment the at least one radical photoinitiator is at least one radical photoinitiator G-1A of the general formula (la), wherein Z, X and n have the meanings as defined above, and
wherein
- Ch¹: is Ar¹ or Het¹ ;
- Ar¹: is selected from the group consisting of phenyl, naphthyl, biphenyl, styryl, stilbenyl, diphenylacetylenyl, terphenylyl, anthracenyl, phenanthrenyl, pyrenyl or triphenylenyl; which is unsubstituted or substituted with one or more substituents selected from the group consisting of halogen; NO₂; CN; OR³; SR⁴; NR⁵R⁶; C₁-C₁₂alkyl and/or C₂-C₁₂alkenyl, which are independently from each other unsubstituted or substituted by one or more halogen, CN, OR³, SR⁴, NR⁵R⁶, phenyl; C₁-C₁₂alkyl and/or C₂-C₁₂alkenyl, which are independently from each other interrupted by one or more -O-, -S-, -NR⁵-, phenylene; C₃-C₈cycloalkyl and/or C₃-C₈cycloalkenyl, which are independently from each unsubstituted or substituted by one or more halogen, OR³, SR⁴ and/or NR⁵R⁶; C₃-C₈cycloalkyl and/or C₃-C₈cycloalkenyl, which are independently from each other interrupted by one or more -O-, -S- and/or -NR⁵-; phenyl, which is independently from each other unsubstituted or substituted by one or more halogen, C₁-C₁₂alkyl, OR³, SR⁴ and/or NR⁵R⁶; and/or -C(O)R⁸;
and/or
OR₃, SR⁴, and/or NR⁵R⁶ form together with other substituents on Ar¹, if present at adjacent ring atoms on Ar¹ via the radicals R³, R⁴, R⁵ and/or R⁶ one or more 5- or 6-membered heterocycles;
- Het¹: is selected from the group consisting of furyl, thienyl, pyrrolyl, oxazolyl, isoxazolyl, thiazolyl, isothiazole, imidazolyl, pyrazolyl, oxadiazolyl, thiadiazolyl, triazolyl, pyridyl, pyrimidinyl, pyrazinyl, pyridazinyl, triazinyl, 2- or 3-benzofuryl, 2- or 3-benzothienyl, 2- or 3-indolyl, 2-benzoxazolyl, 2-benzothiazolyl, 2-benzoimidazolyl, 3-indazolyl, 2-, 3- or 4-quinolyl, 1-, 3- or 4-isoquinolyl, 3-phthalazinyl, 2- or 3-quinoxalinyl, pteridinyl, bithienyl, trithienyl, acridinyl, phenazinyl or purinyl; which is unsubstituted or substituted with one or more substituents selected from the group consisting of halogen, OR³, SR⁴ and/or NR⁵R⁶; C₁-C₁₂alkyl and/or C₂-C₁₂alkenyl, which are independently from each other unsubstituted or substituted by one or more halogen, OR³, SR⁴, NR⁵R⁶, phenyl; C₁-C₁₂alkyl and/or C₂-C₁₂alkenyl, each of which is interrupted by one or more -O-, -S-, -NR⁵-, phenylene; C₃-C₈cycloalkyl and/or C₃-C₈cycloalkenyl, which are independently from each other unsubstituted or substituted by one or more halogen, OR³, SR⁴ and/or NR⁵R⁶; C₃-C₈cycloalkyl and/or C₃-C₈cycloalkenyl, each of which is interrupted by one or more -O-, -S- and/or -NR⁵-; phenyl, which is independently from each other unsubstituted or substituted by one or more halogen, C₁-C₁₂alkyl, OR³, SR⁴ and/or NR⁵R⁶; and/or -C(O)R⁸,
and/or
OR₃, SR⁴, and/or NR⁵R⁶ form together with other substituents on Het¹, if present at adjacent ring atoms, via the radicals R³, R⁴, R⁵ and/or R⁶ one or more 5- or 6-membered heterocycles;
- R¹: is hydrogen; C₁-C₁₂alkyl, which is unsubstituted or substituted by one or more halogen, OR³, SR⁴, NR⁵R⁶, phenyl ; C₁-C₁₂alkyl, which is interrupted by one or more -O-, or phenylene; C₃-C₈cycloalkyl, which is unsubstituted or substituted by one or more halogen, and/or OR³; phenyl, which is unsubstituted or substituted by one or more halogen, C₁-C₁₂alkyl, OR³, SR⁴ and/or NR⁵R⁶;
- R³: is hydrogen; C₁-C₁₂alkyl, which is unsubstituted or substituted by one or more halogen, OR³, SR⁴, NR⁵R⁶ and/or phenyl; C₁-C₁₂alkyl, which is interrupted by one or more -O and/or phenylene; C₃-C₈cycloalkyl, which is unsubstituted or substituted by one or more halogen; phenyl, which is unsubstituted or substituted by one or more by halogen, C₁-C₁₂alkyl, OR³;
- R⁴: is hydrogen; C₁-C₁₂alkyl, which is unsubstituted or substituted by one or more halogen, OR³, SR⁴, NR⁵R⁶ and/or phenyl; C₁-C₁₂alkyl , which is interrupted by one or more -O-, or phenylene; C₃-C₈cycloalkyl, which is unsubstituted or substituted by one or more halogen,; phenyl which is unsubstituted or substituted by one or more by halogen, C₁-C₁₂alkyl, and/or OR³;
- R⁵,: R⁶ are independently of each other hydrogen; C₁-C₁₂alkyl, which is unsubstituted or substituted by one or more halogen, OR³, and/or phenyl; C₁-C₁₂alkyl, which is interrupted by one or more -O-, or phenylene; C₃-C₈cycloalkyl, which is unsubstituted or substituted by one or more halogen phenyl, which is unsubstituted or substituted by one or more by halogen, C₁-C₁₂alkyl, and/or OR³; and/or -C(O)R⁸;
- R⁷: is C₁-C₁₂alkylene, which is unsubstituted or substituted by one or more halogen, OR³; C₁-C₂₀alkylene, which is interrupted by one or more -O-, and/or phenylene; C₃-C₈cycloalkylene which is unsubstituted or substituted by one or more halogen, OR³,; C₃-C₈cycloalkylene, which is interrupted by one or more -O-; phenylene, which is unsubstituted or substituted by one or more by halogen, C₁-C₁₂alkyl, and/or OR³;
- R₈: is OR³ and/or NR⁵R⁶; C₁-C₁₂alkyl, which is unsubstituted or substituted by one or more halogen, OR³, and/or phenyl; C₁-C₁₂alkyl, which is interrupted by one or more -O-, and/or phenylene; C₃-C₃cycloalkyl, which is unsubstituted or substituted by one or more halogen; phenyl, naphthyl, furanyl, thienyl, pyrroryl, benzofuranyl, benzothienyl, indoryl and/or benzoimidazoyl, which is unsubstituted or substituted by one or more halogen, C₁-C₁₂alkyl, OR³, and/or NR⁵R⁶; and/or
R⁵ and R⁶ form together with the N atom to which they are attached a 5- or 6-membered heterocycle; under the proviso that when n is 1, Z is R¹;
and/or
at least one radical photoinitiator G-1B of the general formula (lb), wherein Y and m have the meanings as defined above, and
wherein
Ch² is Ar² or Het² or a group of the general formula (B) 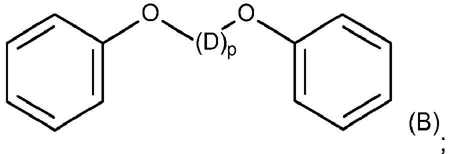 wherein
D is C₁-C₂₀alkyl, which is unsubstituted; or C₁-C₂₀alkyl, which is interrupted by one or more -O-;
p is 1;
R² is hydrogen; C₁-C₂₀alkyl or C₂-C₂₀alkenyl, which is unsubstituted or substituted by one or more halogen, CN, OR³, SR⁴, NR⁵R⁶, phenyl and/or naphthyl; C₁-C₂₀alkyl or C₂-C₂₀alkenyl, which is interrupted by one or more -O-, -S-, -NR⁵-, phenylene and/or naphthylene; C₃-C₈cycloalkyl or C₃-C₈cycloalkenyl, which is unsubstituted or substituted by one or more halogen, OR³, SR⁴, NR⁵R⁶, phenyl; C₃-C₈cycloalkyl or C₃-C₈cycloalkenyl, which is interrupted by one or more -O-, -S- and/or -NR⁵-; phenyl, which is unsubstituted or substituted by one or more by halogen, C₁-C₁₂alkyl, OR³, SR⁴ and/or NR⁵R⁶;
Ar² is phenylene, naphthylene, biphenylene, styrylene, stilbenylene, diphenylacetylenylene, terphenylene, anthracenylene, phenanthrenylene, pyrenylene, triphenylene, diphenylmethylene, triphenylmethylene, tetraphenylmethylene or a group of the general formula (A) 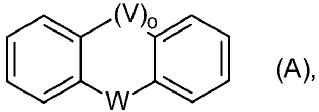 wherein
V and W are independently from each other a direct bond, O, S or NR⁵;
o is 0 or 1;
each of which is unsubstituted or substituted by one or more substituents selected from the group consisting of halogen, OR³, SR⁴ and/or NR⁵R⁶; C₁-C₁₂alkyl and/or C₂-C₁₂alkenyl, which is unsubstituted or substituted by one or more halogen, OR³, SR⁴, NR⁵R⁶, phenyl; C₁-C₁₂alkyl and/or C₂-C₁₂alkenyl, which is interrupted by one or more -O-, -S-, -NR⁵-, phenylene; C₃-C₈cycloalkyl and/or C₃-C₈cycloalkenyl, which is unsubstituted or substituted by one or more halogen, OR³, SR⁴ and/or NR⁵R⁶; C₃-C₈cycloalkyl and/or C₃-C₈cycloalkenyl, which is interrupted by one or more -O-, -S- and/or -NR⁵-; phenyl, which is unsubstituted or substituted by one or more halogen, C₁-C₁₂alkyl, OR³, SR⁴ and/or NR⁵R⁶; and/or -C(O)R⁸;
   and/or
OR₃, SR⁴, and/or NR⁵R⁶ form together with other substituents on Ar², if present at adjacent ring atoms, via the radicals R³, R⁴, R⁵ and/or R⁶ one or more 5- or 6-membered heterocycles;
Het² is furylene, thienylene, pyrrolylene, oxazolylene, isoxazolylene, thiazolylene, isothiazolylene, imidazolylene, pyrazolylene, oxadiazolylene, thiadiazolylene, triazolylene, pyridylene, pyrimidinylene, pyrazinylene, pyridazinylene, triazinylene, benzofurylene, benzothienylene, indolylene, benzoxazolylene, benzothiazolylene, benzoimidazolylene, indazolylen, quinolylene, isoquinolylene, phthalazinylene, quinoxalinylene, pteridinylene, bithienylene, trithienylene, acridinylene, phenazinylene or purinylene; each of which is unsubstituted or substituted by one or more halogen, OR³, SR⁴ and/or NR⁵R⁶; C₁-C₁₂alkyl and/or C₂-C₁₂alkenyl, which is unsubstituted or substituted by one or more halogen, OR³, SR⁴, NR⁵R⁶, phenyl; C₁-C₁₂alkyl and/or C₂-C₁₂alkenyl, which is interrupted by one or more -O-, -S-, -NR⁵-, phenylene; C₃-C₃cycloalkyl and/or C₃-C₈cycloalkenyl, which is unsubstituted or substituted by one or more halogen, OR³, SR⁴ and/or NR⁵R⁶; C₃-C₈cycloalkyl and/or C₃-C₈cycloalkenyl, which is interrupted by one or more -O-, -S- and/or -NR⁵-; phenyl, which is unsubstituted or substituted by one or more halogen, C₁-C₁₂alkyl, OR³, SR⁴ and/or NR⁵R⁶; and/or -C(O)R⁸;
and/or
OR₃, SR⁴, and/or NR⁵R⁶ form together with other substituents on Het², if present at adjacent ring atoms, via the radicals R³, R⁴, R⁵ and/or R⁶ one or more 5- or 6-membered heterocycles.

In a further embodiment of the composition according to the invention, the at least one radical photoinitiator G is
at least one radical photoinitiator G-1A of the general formula (la), wherein the radicals and indices have the following meanings:
- n: is 1 to 4;
- Z: is R¹ or R⁷;
- X: is O, S or NR⁵;
- R¹: C₁-C₁₂alkyl, which is unsubstituted or substituted by one or more OR³, NR⁵R⁶, or phenyl; C₁-C₁₂alkyl, which is interrupted by one or more -O-, or phenylene; phenyl, which is unsubstituted;
- Ch¹: is Ar¹ or Het¹;
- Ar¹: is phenyl, naphthyl, or biphenyl, which is unsubstituted or substituted by one or more substituents selected from OR³, SR⁴, NR⁵NR⁶, C(O)R⁸ and/or C₁-C₁₂alkenyl, which is unsubstituted or substituted by one or more phenyl;
- Het¹: furyl, thienyl; pyrrolyl, which is unsubstituted or substituted with one or more C₁-C₁₂alkyl;
- R³: is C₁-C₁₂alkyl or phenyl;
- R⁴: is C₁-C₁₂alkyl or phenyl; each unsubstituted or substituted by -C(O)R⁸;
- R⁵, R⁶: are independently of each other C₁-C₁₂alkyl; or form together with the N atom to which they are attached a 5- or 6-membred heterocycle, preferably morpholinyl;
- R⁷: is C₁-C₁₂alkylene, or C₁-C₁₂alkylene, which is interrupted by one or more -O-;
- R⁸: is phenyl, unsubstituted or substituted by one or more C₁-C₁₂alkyl; and/or
at least one radical photoinitiator G-1B of the general formula (lb), wherein the radicals and indices have the following meanings:
- m: is 2 to 4
- Ch²: is Ar² or Het²;
- Ar²: is diphenylmethylene, phenylene, biphenylene, naphthylene, triphenylmethylene, or tetraphenylmethylene;
- Het²: is a group (A) 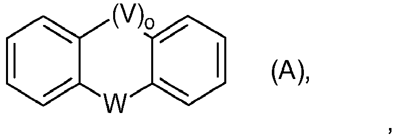
wherein
V and W are independently from each other a direct bond, O, S or NR⁵;
- o: is 0 or 1;
- Y: is O;
- R²: is C₁-C₁₂alkyl, or phenyl;
- R⁵: is C₁-C₁₂alkyl.

Preferred compounds G-1A of the general formula (Ia) are summarized in the following list:

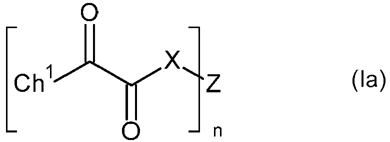

| Example G-1A- | Ch¹ | X | Z | n |
|---|---|---|---|---|
| 1 | 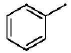 | O | -CH₃ | 1 |
| 2 | 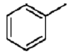 | O | -C₂H₅ | 1 |
| 3 | 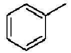 | O | -C₆H₁₃ | 1 |
| 4 | 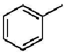 | O | -CH₂CH(C₂H₅)C₄H₉ | 1 |
| 5 | 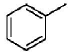 | O | -C₆H₅ | 1 |
| 6 | 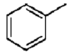 | S | -C₆H₁₃ | 1 |
| 7 | 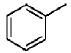 | N | -C₂H₅, -C₂H₅ | 1 |
| 8 | 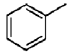 | O | -CH₂CH₂-N(C₂H₅)₂ | 1 |
| 9 | 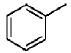 | O | -CH₂-Phenyl | 1 |
| 10 | 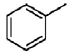 | O | -CH₂-CH₂-O-CH₃ | 1 |
| 11 | 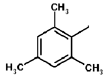 | O | -C₂H₅ | 1 |
| 12 | 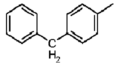 | O | -C₂H₅ | 1 |
| 13 | 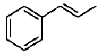 | O | -C₂H₅ | 1 |
| 14 | 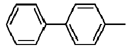 | O | -C₂H₅ | 1 |
| 15 | 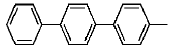 | O | -C₂H₅ | 1 |
| 16 | 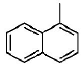 | O | -C₂H₅ | 1 |
| 17 | 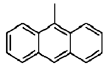 | O | -C₂H₅ | 1 |
| 18 | 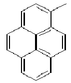 | O | -C₂H₅ | 1 |
| 19 | 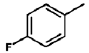 | O | -C₂H₅ | 1 |
| 20 | 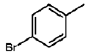 | O | -C₂H₅ | 1 |
| 21 | 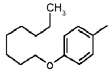 | O | -C₂H₅ | 1 |
| 22 | 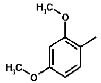 | O | -C₂H₅ | 1 |
| 23 | 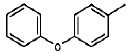 | O | -C₂H₅ | 1 |
| 24 | 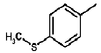 | O | -C₂H₅ | 1 |
| 25 | 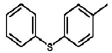 | O | -C₂H₅ | 1 |
| 26 | 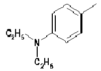 | O | -C₂H₅ | 1 |
| 27 | 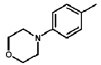 | O | -C₂H₅ | 1 |
| 28 | 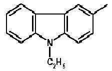 | O | -C₂H₅ | 1 |
| 29 | 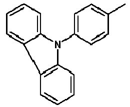 | O | -CH₂CH(C₂H₅)C₄H₉ | 1 |
| 30 | 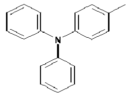 | O | -C₂H₅ | 1 |
| 31 | 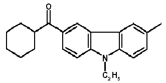 | O | -C₂H₅ | 1 |
| 32 | 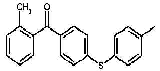 | O | -C₂H₅ | 1 |
| 33 | 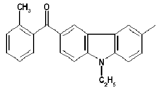 | O | -C₂H₅ | 1 |
| 34 | 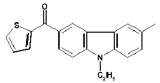 | O | -CH₂CH(C₂H₅)C₄H₉ | 1 |
| 35 | 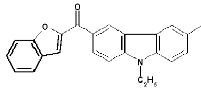 | O | -CH₂CH(C₂H₅)C₄H₉ | 1 |
| 36 | 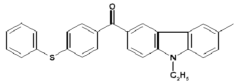 | O | -CH₂CH(C₂H₅)C₄H₉ | 1 |
| 37 | 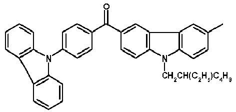 | O | -CH₂CH(C₂H₅)C₄H₉ | 1 |
| 38 | 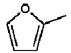 | O | -C₂H₅ | 1 |
| 39 | 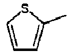 | O | -C₂H₅ | 1 |
| 40 | 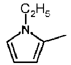 | O | -C₂H₅ | 1 |
| 41 | 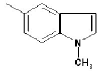 | O | -C₂H₅ | 1 |
| 42 | 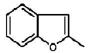 | O | -C₂H₅ | 1 |
| 43 | 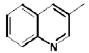 | O | -C₂H₅ | 1 |
| 44 | 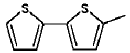 | O | -C₂H₅ | 1 |
| 45 | 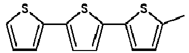 | O | -C₂H₅ | 1 |
| 46 | 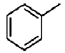 | O | -CH₂-CH₂-O- | 2 |
| 47 | 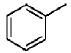 | O | -CH₂-CH₂-O-CH₂-CH₂O- | 2 |
| 48 | 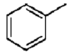 | O | 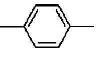 | 2 |
| 49 | 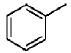 | O | -(CH₂)₃CC₂H₅ | 3 |
| 50 | 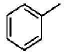 | O | -(CH₂)₄C | 4 |
| 51 | 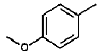 | O | -C₂H₅ | 1 |

Preferred compounds G-1B of the general formula (Ib) are summarized in Table 2 in regard of the radicals and indices Ch², Y, R² and m:

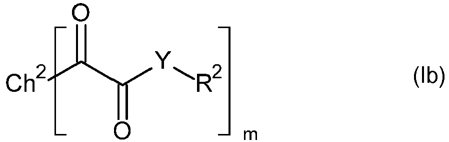

| Example G- 1B- | Ch² | Y | R₇ | N |
|---|---|---|---|---|
| 1 | 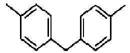 | O | -C₂H₅ | 2 |
| 2 | 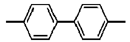 | O | -C₂H₅ | 2 |
| 3 | 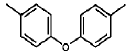 | O | -C₂H₅ | 2 |
| 4 | 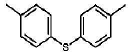 | O | -C₂H₅ | 2 |
| 5 | 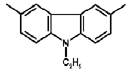 | O | -CH₆H₁₃ | 2 |
| 6 | 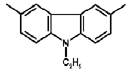 | O | -CH₂CH(C₂H₅)C₄H₉ | 2 |
| 7 | 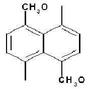 | O | -C₂H₅ | 2 |
| 8 | 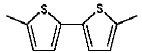 | O | -C₂H₅ | 2 |
| 9 | 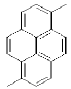 | O | -C₂H₅ | 2 |
| 10 | 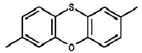 | O | -C₂H₅ | 2 |
| 11 | 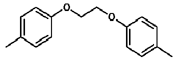 | O | -C₂H₅ | 2 |
| 12 | 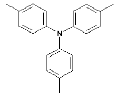 | O | -CH₂CH(C₂H₅)C₄H₉ | 3 |
| 13 | 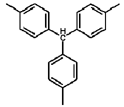 | O | -C₂H₅ | 3 |
| 14 | 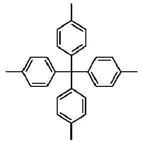 | O | -C₂H₅ | 4 |
| 15 | 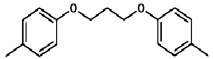 | O | -C₂H₅ | 2 |

Particularly preferred photoinitiator compounds G-1A are the following:

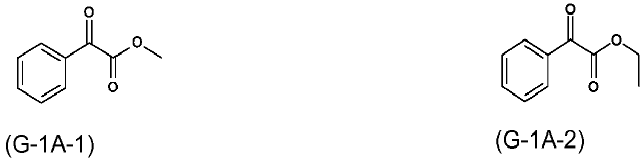

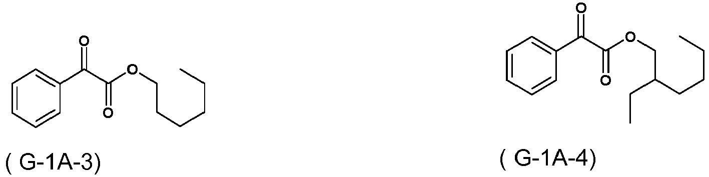

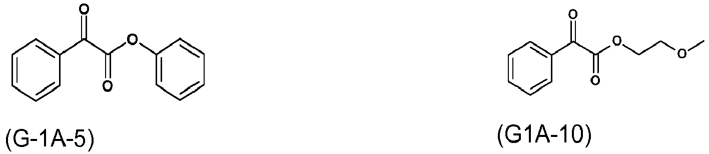

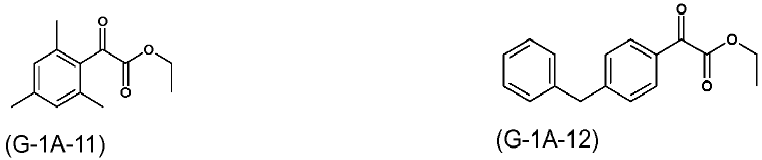

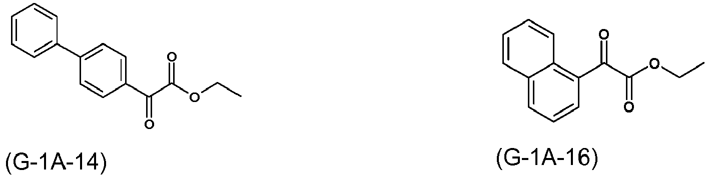

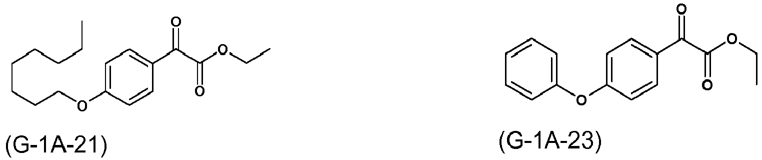

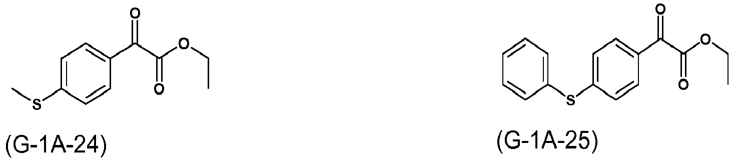

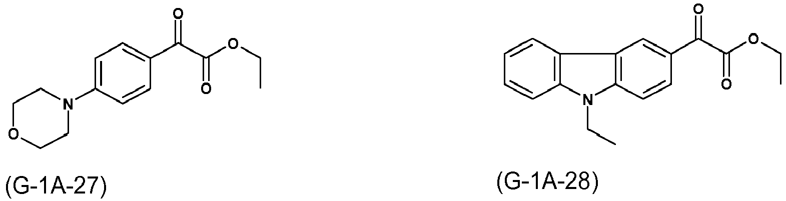

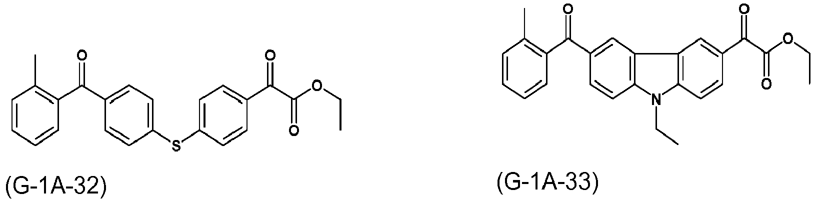

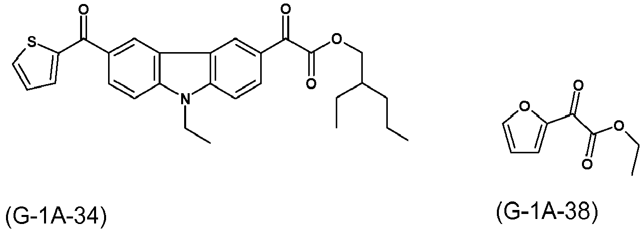

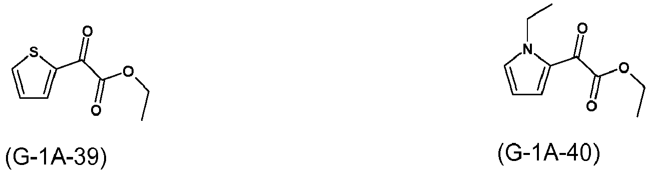

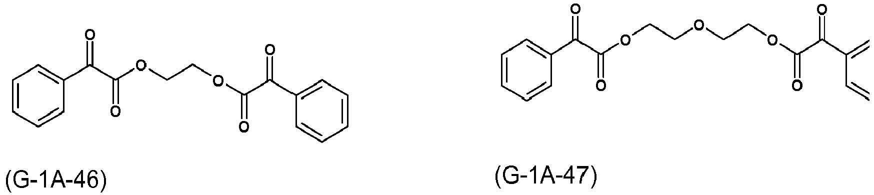

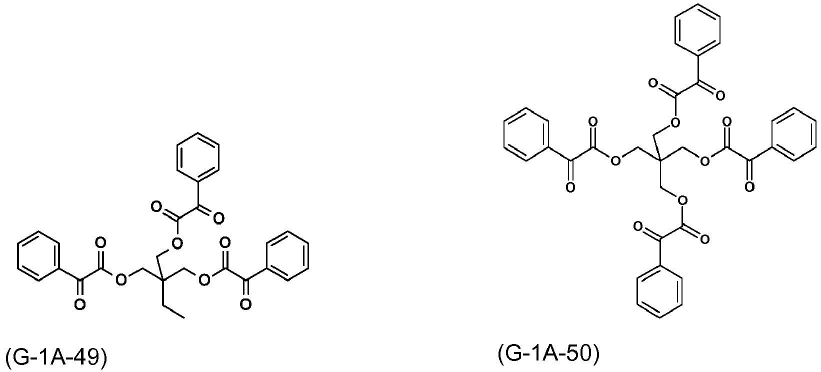

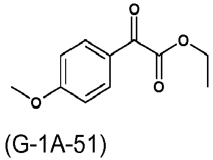

Particularly preferred photoinitiator compounds G-1B are the following:

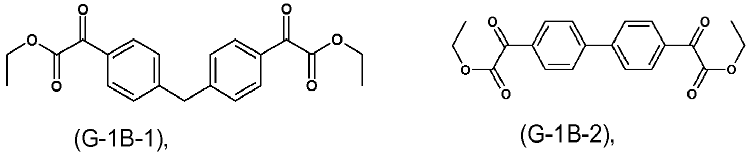

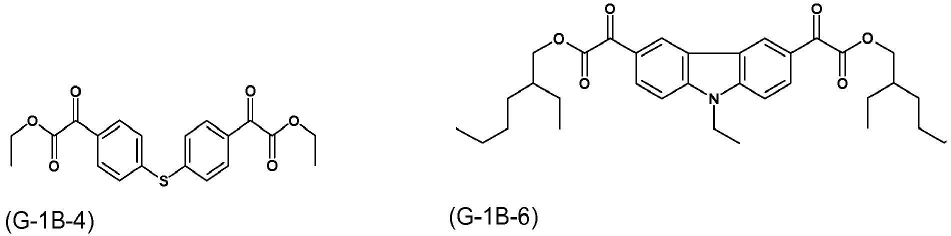

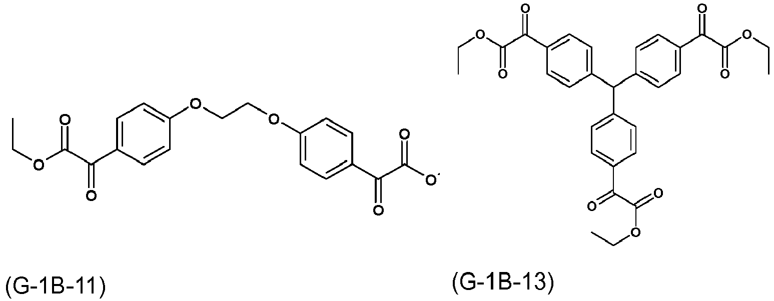

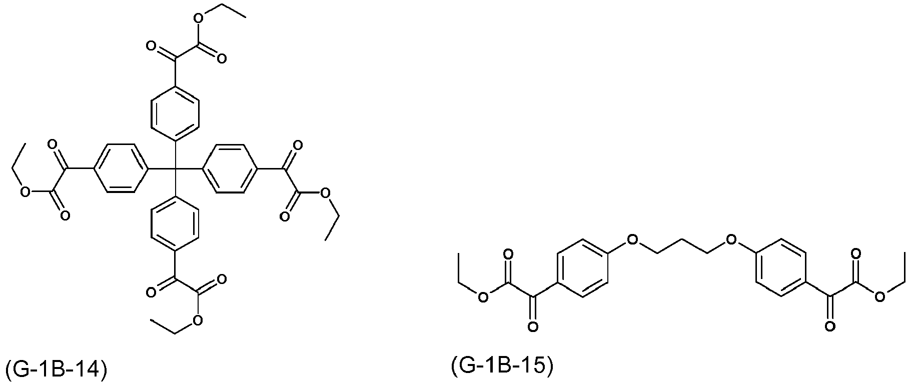

In a preferred embodiment of the invention the at least one radical photoinitiator is at least one radical photoinitiator G-1A. Preferred compounds G-1A of the general formula (Ia) are represented by the formulae (G-1A-1), (G-1A-2), (G-1A-3), (G-1A-5), (G-1A-24), (G-1A-25), (G-1A-28), (G-1A-32), and (G-1A-33).

In one preferred embodiment of the invention the photocurable composition comprises one kind of the at least one photoinitiator G.

In another preferred embodiment the photocurable composition comprises a mixture of two or more different photoinitiators G. Suitable mixtures are mixtures of two or more different photoinitiators G-1A, or mixtures of two or more different photoinitiators G-1 B, or mixtures of one or more photoinitiators G-1A and one or more photoinitiators G-1B.

### Ethylenically unsaturated photopolymerizable compound

The photocurable composition according to the invention comprises at least one ethylenically unsaturated photopolymerizable compound.

The at least one ethylenically unsaturated photopolymerizable compound is capable of causing a polymerization reaction and/or a crosslinking reaction by irradiation with actinic radiation in the presence of the at least one radical photoinitiator.

The at least one ethylenically unsaturated compound comprises one or more olefinic double bonds, for example, one, two, three, four, five or six double bonds.

In a preferred embodiment of the invention the at least one ethylenically unsaturated photopolymerizable compound is selected from acrylates, methacrylates, vinylethers, styrenes, and organosiloxanes, or a mixture of two or more thereof.

### (Meth)acrylates

In the present invention, the term "(meth)acrylic acid" encompasses both acrylic acid and methacrylic acid. Likewise, the term "(meth)acrylate" encompasses both acrylate and methacrylate.

Suitable (meth)acrylates for the purpose of the invention are (meth)acrylates containing one double bond, for example alkyl or hydroxyalkyl (meth)acrylates, for example methyl, ethyl, butyl, 2-ethylhexyl or 2-hydroxyethyl and isobornyl (meth)acrylate.

Further preferred (meth)acrylates include urethane (meth)acrylates, polyester (meth)acrylates, epoxy (meth)acrylates and (meth)acrylic esters of alcohols.

Epoxy (meth)acrylates for the purpose of the invention are reaction products of at least one epoxy compound and and at least one (meth)acrylic acid.

Suitable epoxy-compounds are selected from aromatic epoxy compounds, alicyclic epoxy compounds and/or an aliphatic epoxy compounds, preferably aromatic epoxy compounds. Preferred aromatic epoxy compounds are aromatic glycidyl ether, preferably glycidyl ether of a bisphenol compound, preferably bisphenol A or bisphenol F.

Particularly suitable epoxy (meth)acrylates are for example epoxy di(meth)acrylates as described in WO 2016/071811 A1 obtained by the reaction of 1 mol of a diepoxy compound with 2 mol of (meth)acrylic acid, represented by the following general formula (XII-ii):

Eⁱⁱ-{C(H)(OH)-CH₂-O-CO-C(R³ⁱⁱ)=CH₂}₂ (XII-ii)

wherein
- R³ⁱⁱ: represents a hydrogen atom or a methyl group, and Eⁱⁱ represents a diepoxy compound residue (group after removing two epoxy groups from diepoxy compound).

In the above general formula (XII-ii), the diepoxy compound residue Eⁱⁱ may be any of an aromatic diepoxy compound residue, an aliphatic diepoxy compound residue, and an alicyclic diepoxy compound residue.

Non-limiting examples of the di(meth)acrylate compound (XII-ii) include a di(meth)acrylate compound obtained by reacting 1 mol of a diepoxy compound composed of one, or two or more aromatic diepoxy compound(s), alicyclic diepoxy compound(s), and aliphatic diepoxy compound(s) with 2 mol of (meth)acrylic acid, and a di(meth)acrylate compound obtained by reacting 1 mol of an aromatic diepoxy compound with 2 mol of (meth)acrylic acid is preferably used in view of availability, mechanical properties and compatibility with the human body.

Specific examples thereof include a di(meth)acrylate compound obtained by reacting 1 mol of diglycidyl ether of a bisphenol-based compound such as bisphenol A or bisphenol F with 2 mol of (meth)acrylic acid, a di(meth)acrylate compound obtained by reacting 1 mol of diglycidyl ether, which is obtained by reacting an alkylene oxide adduct of a bisphenol-based compound such as bisphenol A or bisphenol F with an epoxydating agent such as epichlorohydrin, with 2 mol of (meth)acrylic acid, a di(meth)acrylate compound obtained by reacting 1 mol of a novolake type diepoxy compound with 2 mol of (meth)acrylic acid, and the like, and one, or two or more di(meth)acrylate compound(s) can be used.

Of these di(meth)acrylate compounds, a dimethacrylate compound obtained by reacting 1 mol of diglycidyl ether, which is obtained by reacting a bisphenol A compound with epichlorohydrin, with 2 mol of methacrylic acid is preferably used as the epoxy-based di(meth)acrylate compound (XII-ii).

Suitable (meth)acrylic esters of alcohols are (meth)acrylates obtained by the reaction of an aromatic alcohol, aliphatic alcohol, alicyclic alcohol having one or more, preferably at least two, hydroxyl groups in the molecule, and/or the alkylene oxide adduct thereof, with (meth)acrylic acid.

Suitable alcohols are aromatic, aliphatic and cycloaliphatic polyols, preferably aliphatic polyols, preferably comprising at least two hydroxyl groups.

Examples of aromatic polyols are hydroquinone, 4,4'-dihydroxydiphenyl, 2,2-di(4-hydroxyphenyl)propane, and also novolaks and resols. Other suitable polyols are polymers and copolymers containing hydroxyl groups in the polymer chain or in side groups, examples being polyvinyl alcohol and copolymers thereof or polyhydroxyalkyl methacrylates or copolymers thereof. Further polyols which are suitable are oligoesters having hydroxyl end groups.

Examples of aliphatic and cycloaliphatic polyols are alkylenediols having preferably 2 to 12 C atoms, such as ethylene glycol, 1 ,2- or 1 ,3-propanediol, 1 ,2-, 1 ,3- or 1 ,4-butanediol, pentanediol, hexanediol, octanediol, dodecanediol, diethylene glycol, triethylene glcyol, polyethylene glycols having molecular weights of preferably from 200 to 1500, 1 ,3-cyclopentanediol, 1 ,2-, 1 ,3- or 1 ,4-cyclohexanediol, 1 ,4-dihydroxymethylcyclohexane, 4,8-bis(hydroxymethyl)tricyclo[5.2.1.0^{2,6}]decane, glycerol, tris(β-hydroxyethyl)amine, trimethylolethane, trimethylolpropane, pentaerythritol, dipentaerythritol and sorbitol.

The polyols may be partially or completely esterified with (meth)acrylic acid, and in partial esters the free hydroxyl groups may be modified, for example etherified or esterified with other carboxylic acids different from (meth)acrylic acid, such as crotonic acid, itaconic acid, cinnamic acid, and unsaturated fatty acids such as linolenic acid or oleic acid.

Examples of preferred esters are: trimethylolpropane triacrylate, trimethylolethane triacrylate, trimethylolpropane trimethacrylate, trimethylolethane trimethacrylate, tetramethylene glycol dimethacrylate, triethylene glycol dimethacrylate, tetraethylene glycol diacrylate, pentaerythritol diacrylate, pentaerythritol triacrylate, pentaerythritol tetraacrylate, dipentaerythritol diacrylate, dipentaerythritol triacrylate, dipentaerythritol tetraacrylate, dipentaerythritol pentaacrylate, dipentaerythritol hexaacrylate, tricyclo[5.2.1.0^{2,6}] decane dimethanol diacrylate, tripentaerythritol octaacrylate, pentaerythritol dimethacrylate, pentaerythritol trimethacrylate, dipentaerythritol dimethacrylate, dipentaerythritol tetramethacrylate, tripentaerythritol octamethacrylate, pentaerythritol diitaconate, dipentaerythritol tris-itaconate, dipentaerythritol pentaitaconate, dipentaerythritol hexaitaconate, ethylene glycol diacrylate, 1 ,3-butanediol diacrylate, 1 ,3-butanediol dimethacrylate, 1 ,4-butanediol diitaconate, sorbitol triacrylate, sorbitol tetraacrylate, pentaerythritol-modified triacrylate, sorbitol tetra methacry- late, sorbitol pentaacrylate, sorbitol hexaacrylate, oligoester acrylates and methacrylates, glycerol diacrylate and triacrylate, 1 ,4-cyclohexane diacrylate, bisacrylates and bismethacrylates of polyethylene glycol with a molecular weight of from 200 to 1500, or mixtures thereof.

Preferred are (meth)acrylate esters of alcohols, obtained from (meth)acrylates having one (meth)acrylic group in one molecule and a polyhydric alcohol.

Suitable polyester (meth)acrylates for the purpose of the invention are condensation products of polyesterols (polyhydrofunctional polyesters) and (meth)acrylic acids or anhydrides thereof. Raw materials for polyesterols are polyols and polycarboxylic acids or anhydrides.

Examples for polyols are ethylene glycol, 1,2-propane diol, diethylene glycol, 1,4-butane diol, 1,6-hexanediol, neopentylglycol, trimethylpentanediol, 1,4-cyclohexane dimethanol, treyclodecanedimethanol, trimethylolopropane, glycerol, hydroxpivalic acidneopentylglycol ester, pentaerythritol.

Examples for carboxylic acids, esters and anhydrides are phthalic anhydride, isophthalic acid, therephthalic acid and their lower alkyl ester derivatives, hexahydrophthalic anhydride, tetrahydrophthalic anhydride, hexahydroterephthalic acid, 5-tert-butylisophthalic acid, adipic acid azelaic acid, sebacic acid, decane dicarboxylic acid and their lower alkyl ester derivatives, dimerised fatty acids, trimellitic anhydride, pyromellitic anhydride.

Polyesteracrylates can be further modified for example chlorinated or fluorinated, amine modified or can be functionalized for further crosslinking or reaction with acid or hydroxyl groups. The polyester acrylate in context with the current invention is a material with a medium molecular weight ranging from 500 to 6000, preferred are products with a molecular weight from 500 to 3000, more specific from 700 to 2000. The functionality of the polyester acrylate ranges from 1 to 8, preferred are tetra to hexafunctional types.

Commercial examples for polyester acrylates are EBECRYL 436, EBECRYL 438, EBECRYL 446, EBECRYL 450, EBECRYL 505, EBECRYL 524, EBECRYL 525, EBECRYL 584, EBECRYL 586, EBECRYL 657, EBECRYL 770, EBECRYL 800, EBECRYL 810, EBECRYL 811 , EBECRYL 812, EBECRYL 830, EBECRYL 851 , EBECRYL 852, EBECRYL 870, EBECRYL 880, EBECRYL 1657, EBECRYL 2047, EBECRYL 531 , Laromer PE 55 F, Laro-mer PE 56 F, Laromer PE 44 F, Laromer LR 8800, Laromer LR 8981 , Photomer 5018, Pho-tomer 5029, Jagalux UV 1 100, Jagalux UV 1200, Jagalux UV 1300, Setacure AP 578, Seta-cure AP 576, Setacure AP 578, Setacure AP 579, Syntaalat UV 190, Synocure AC-1007, Synocure AC-1309, Craynor CN 292. Further examples of commercially available polyester acrylate binders can be found in Karsten "Lackrohstoff-Tabellen" 10. edition, Vincentz Verlag Hannover, 2000, ISBN 3-87870-561-1.

Preferred are EBECRYL 800, EBECRYL 810, EBECRYL 830, EBECRYL 885.

### Vinylethers

In another preferred embodiment the at least one ethylenically unsaturated photopolymerizable compound is at least one vinyl ether. Suitable vinyl ether for the purpose of the invention are alkyl vinyl ether, preferably methyl vinylether, ethyl vinylether, isobutyl vinylether, or the like.

### Styrene

In another preferred embodiment the at least one ethylenically unsaturated photopolymerizable compound is at least one styrene, wherein the at least one styrene is preferably styrene or alpha-methyl styrene, particularly preferably styrene.

### Urethane (meth)acrylates

In another preferred embodiment the at least one ethylenically unsaturated photopolymerizable compound is at least one urethan (meth)acrylate.

Suitable urethan (meth)acrylates for the purpose of the inventionen are described in WO2016/071811.

Preferred urethane (meth)acrylates are urethane-based di(meth)acrylates obtainable by the reaction of 1 mol of an organic diisocyanate and 2 mol of hydroxyalkyl (meth)acrylate and are represented by the following formula (XII-i)

Dⁱ-{NH-CO-O-R²ⁱ-O-CO-C(R¹ⁱ)=CH₂}₂ (XII-i),

wherein
- R¹ⁱ: represents a hydrogen atom or a methyl group, R²ⁱ represents an alkylene group, and Dⁱ represents an organic diisocyanate compound residue (group after removing two isocyanate groups from organic diisocyanate compound); and

In the above general formula (A-1 a), the organic diisocyanate compound residue Dⁱ may be any of an aromatic diisocyanate compound residue, an aliphatic diisocyanate compound residue, and an alicyclic diisocyanate compound residue.

Examples of the urethane-based di(meth)acrylate-based compounds of forumula (XIIi) include, but are not limited to, urethane di(meth)acrylates obtained by the reaction of 1 mol of an organic diisocyanate compound composed of one, or two or more aliphatic diisocyanate compound(s) such as hexamethylene diisocyanate, 2,2,4-trimethylhexamethylene diisocyanate, isophorone diisocyanate, hydrogenated diphenylmethane diisocyanate, hydrogenated m-xylylene diisocyanate, and hydrogenated toluene diisocyanate, and aromatic diisocyanates such as diphenylmethane diisocyanate, toluene diisocyanate, and xylylene diisocyanate with 2 mol of a hydroxyalkyl ester whose (meth)acrylic acid has 2 to 6 carbon atoms, such as hydroxyethyl (meth)acrylate, hydroxypropyl (meth)acrylate, hydroxybutyl (meth)acrylate, hydroxypentyl (meth)acrylate and hydroxyhexyl (meth)acrylate [(meth)acrylic acid ester obtained by the reaction of 1 mol of an alkylenediol having 2 to 6 carbon atoms with 1 mol of (meth)acrylic acid.

More specific examples thereof include urethane di(meth)acrylate obtained by reacting 1 mol of 2,2,4-trimethylhexamethylene diisocyanate with 2 mol of hydroxyethyl (meth)acrylate, urethane di(meth)acrylate obtained by reacting 1 mol of isophorone diisocyanate with 2 mol of hydroxyethyl (meth)acrylate, urethane di(meth)acrylate obtained by reacting 1 mol of hydrogenated diphenylmethane diisocyanate with 2 mol of hydroxyethyl (meth)acrylate, urethane di(meth)acrylate obtained by reacting 1 mol of 2,2,4- trimethylhexamethylene diisocyanate with 2 mol of hydroxypropyl (meth)acrylate, urethane di(meth)acrylate obtained by reacting 1 mol of isophorone diisocyanate with 2 mol of hydroxypropyl (meth)acrylate, urethane di(meth)acrylate obtained by reacting 1 mol of 2,2,4-trimethylhexamethylene diisocyanate with 2 mol of hydroxyethyl (meth)acrylate, urethane di(meth)acrylate obtained by reacting 1 mol of diphenylmethane diisocyanate with 2 mol of hydroxyethyl (meth)acrylate, urethane di(meth)acrylate obtained by reacting 1 mol of diphenylmethane diisocyanate with 2 mol of hydroxypropyl (meth)acrylate, urethane di(meth)acrylate obtained by reacting 1 mol of toluene diisocyanate with 2 mol of hydroxyethyl (meth)acrylate, urethane di(meth)acrylate obtained by reacting 1 mol of toluene diisocyanate with 2 mol of hydroxypropyl (meth)acrylate, and the like, and one, or two or more urethane di(meth)acrylate(s) can be used.

Of these compounds, urethane dimethacrylate obtained by reacting 1 mol of 2,2,4-trimethylhexamethylene diisocyanate with 2 mol of hydroxyethyl methacrylate, so-called UDMA, is preferably used as the urethane-based di(meth)acrylate compound (XIIi).

### Further suitable ethylenically unsaturated photopolymerizable compounds

Further suitable examples for ethylenically unsaturated photopolymerizable compound are esters of the above mentioned alcohols and polyols, preferably polyol and ethylenically unsaturated carboxylic acids different from (meth)acrylic acid.

Preferred unsaturated carboxylic acids are crotonic acid, itaconic acid, cinnamic acid, and unsaturated fatty acids such as linolenic acid or oleic acid.

### Organosiloxanes

Examples of organosiloxane are: alkenyl-containing organopolysiloxane, mercapto-containing organopolysiloxane and alkenyl-containing MQ resin, for example, disclosed in US 6,013,693, US 5,877,228, US 8,293,810 and EP 1 757 979.

Organosiloxanes that may be used in the present invention include, but are not limited to, acrylamide-functional organopolysiloxane, see for example JP Sho 57-52371 and EP 0400785; an organopolysiloxane having at least 2 mercaptoalkyl groups in each molecule and an organopolysiloxane having at least 2 alkenyl groups in each molecule, (US 4,707,503); an alkenyl-functional organopolysiloxane; an acrylic-functional or methacrylic-functional organopolysiloxane; and an organopolysiloxane having at least 2 alkenyl groups in each molecule and an organopolysiloxane having at least 2 silicon-bonded hydrogen atoms in each molecule. Preferred for use in the present invention are acrylamide-functional organopolysiloxane and an organopolysiloxane having at least 2 mercaptoalkyl groups in each molecule and an organopolysiloxane having at least 2 alkenyl groups in each molecule.

Examples for mercaptoalkyl-functional organopolysiloxanes dimethyl(3-mercaptopropyl)siloxy-endblocked dimethylpolysiloxane, dimethyl(3-mercaptopropyl)siloxy-endblocked dimethylsiloxanemethylphenylsiloxane copolymer, dimethyl(3-mercaptopropyl)siloxy-endblocked dimethylsiloxanediphenylsiloxane copolymer, methyl(3-mercaptopropyl)siloxane-dimethylsiloxane copolymer, methyl(3-mercaptopropyl)siloxane-methylphenylsiloxane copolymer, methyl(3-mercaptopropyl)siloxane-diphenylsiloxane copolymer, 3-mercaptopropyl(phenyl)siloxane-dimethylsiloxane copolymer, and 3-mercaptopropyl(phenyl)siloxane-diphenylsiloxane copolymer. The aforesaid organopolysiloxanes may be used alone or as mixtures of two or more thereof.

The alkenyl-functional organopolysiloxane is exemplified by, but not limited to, dimethylvinylsiloxy-endblocked dimethylpolysiloxane dimethylvinylsiloxy-endblocked dimethylsiloxanemethylphenylsiloxane copolymer, dimethylvinylsiloxy-endblocked dimethylsiloxane-diphenylsiloxane copolymer, dimethylvinylsiloxy-endblocked dimethylsiloxanemethylvinylsiloxane copolymer, dimethylvinylsiloxy-endblocked dimethylsiloxanephenylvinylsiloxane copolymer, dimethylvinylsiloxy-endblocked methylvinylpolysiloxane, methylvinylsiloxane-dimethylsiloxane copolymer, methylvinylsiloxane-methylphenylsiloxane copolymer, methylvinylsiloxane-diphenylsiloxane copolymer, phenylvinylsiloxane-dimethylsiloxane copolymer, and phenylvinylsiloxane-diphenylsiloxane copolymer. The aforesaid organopolysiloxanes may be used alone or as mixtures of two or more thereof.

MQ resins are organopolysiloxane resins of three-dimensional network structure essentially containing triorganosiloxy units (i.e., monofunctional siloxane units Me₃SiO) and SiO₄/₂ units as described for example in US 8,293,810 and EP 1 757 979.

In one preferred embodiment of the invention, the photocurable composition comprises one kind of the at least one ethylenically unsaturated photopolymerizable compound.

In another preferred embodiment, the photocurable composition comprises two or more different ethylenically unsaturated photopolymerizable compounds, e.g. two, three, four or five different ethylenically unsaturated photopolymerizable compounds.

Accordingly, the photocurable composition comprises two or more ethylenically unsaturated compounds selected from (meth)acrylates, vinylethers, styrenes, and organosiloxanes, particularly preferably a mixture of two or more (meth)acrylates, particularly preferably two or more esters of (meth)acrylic acid and polyols, e.g. a mixture of tricyclo[5.2.1.0^{2,6}] decane dimethanol diacrylate and dipentaerythritol hexaacrylate.

Depending on the choice of the particular ethylenically unsaturated compound(s) the photocurable resin composition is liquid, or solid, preferred are liquid photocurable resin compositions. Preferably, the at least one ethylenically unsaturated compound(s) the photocurable resin composition are selected in that the photocurable resin composition is liquid.

### Epoxy-containing compound (E)

The resin composition according to the invention comprise at least one epoxy-containg compound.

The at least one epoxy-containing compound is at least one cationically curable compound comprising at least one epoxy group which is capable of reacting via or as a result of ring-opening mechanism to from a polymeric network. The epoxy-compound according to the present invention comprises aliphatic, aromatic, cycloaliphatic, araliphatic or heterocyclic structures.

In general, any epoxy-containg compound is suitable for the purpose of the photocurable resin according to the invention, for example the epoxy-compounds described in US 5,476,748.

In one preferred embodiment of the invention the at least one epoxy-containing compound (E) is selected from an epoxy monomer, epoxy prepolymer, oxirane-containing polymer and mixtures thereof.

In a further preferred embodiment of the inventive composition the at least one epoxy-containing compound (E) is selected from
- glycidyl-based epoxy monomers, dimers, and polymers; and
- non-glycidyl epoxy compounds.

In one preferred embodiment the at least one epoxy-containing compound (E) is selected from glycidyl-based epoxy monomers, dimers, and polymers, more preferably form glycidyl-based epoxy dimers.

Glycidiyl-based monomers preferably include glycidol.

Glycidyl-based dimers preferably are diglycidiyl ether of bisphenol compounds, for example of Bisphenol A (4,4'-(1-methylethylidene)bisphenol; 2,2-bis(4-hydroxyphenyl)propane), Bisphenol AF (4,4'-[2,2,2-trifluoro-1-(trifluoromethyl)ethylidenyl]bisphenol; 2,2-bis(4-hydroxyphenyl)hexafluoropropane), Bisphenol AP (4,4'-(1-phenylethylidene)bisphenol; 1,1-bis(4-hydroxyphenyl)-1-phenylethane), Bisphenol B (4,4'-(1-methylpropylidene)bisphenol; 2,2-bis(4-hydroxyphenyl)butane), Bisphenol BP (4,4'-(diphenylmethylene)bisphenol; bis-(4-hydroxyphenyl)diphenylmethane), Bisphenol E (4,4'-ethylidenebisphenol; 1,1-bis(4-hydroxyphenyl)ethane), Bisphenol F (4,4'-Methylenebisphenol, bis(4-hydroxyphenyl)methane), Bisphenol FL (4,4'-(9*H*-Fluorene-9-ylidene)bisphenol; 9,9-bis(4-hydroxyphenyl)fluorene), Bisphenol G (4,4'-(1-methylethylidene)bis[2-(1-methylethyl)phenol, 2,2-bis(4-hydroxy-3-isopropyl-phenyl)propane), Bisphenol M (4,4'-[1,3-phenylenebis(1-methylethylidene)]bisphenol, 1,3-bis(2-(4-hydroxyphenyl)-2-propyl)benzene), Bisphenol P (4,4'-[1,4-phenylenebis(1-methylethylidene)]bisphenol; 1,4-bis(2-(4-hydroxyphenyl)-2-propyl)benzene), Bisphenol PH (5,5"-(1-Methylethylidene)bis([1,1'-biphenyl]-2-ol); 2,2-[5,5'-bis[1,1'-(biphenyl)-2-ol]]propane), Bisphenol S (4,4'-sulfonylbisphenol, bis(4-hydroxyphenyl)sulfone), Bisphenol TMC (4,4'-(3,3,5-trimethylcyclohexyliden)bisphenol;1,1-bis(4-hydroyphenyl)-3,3,5-trimethyl-cyclohexane), or Bisphenol Z (4,4'-cyclohexylidenebisphenol, 1,1-bis(4-hydroxyphenyl)-cyclohexane).

Glycidyl-based dimers are also preferably diglycidiyl ether of dehydrogenated bisphenol compounds as described above.

Glycidyl-based polymers include polyglycidyl or poly(beta-methylglycidyl) ethers obtainable by the reaction of a compound having at least two free alcoholic hydroxy groups and/or phenolic hydroxy groups and a suitably substituted epichlorohydrin under alkaline conditions, or in the presence of an acidic catalyst with subsequent alkali treatment.

Ethers of that type are derived, for example, from acyclic alcohols, such as ethylene glycol, diethylene glycol and higher poly(oxyethylene) glycols, propane-1,2-diol, or poly(oxypropylene) glycols, propane-1,3-diol, butane-1,4-diol, poly(oxytetramethylene) glycols, pentane-1,5-diol, hexane-1,6-diol, hexane-2,4,6-triol, glycerol, 1,1,1-trimethylolpropane, bistrimethylolpropane, pentaerythritol, sorbitol, and also from polyepichlorohydrins.

They are, however, also derived, for example, from cycloaliphatic alcohols, such as 1,3- or 1,4-dihydroxycyclohexane, bis(4-hydroxycyclohexyl)methane, 2,2-bis(4-hydroxycyclohexyl)propane or 1,1-bis(hydroxymethyl)cyclohex-3-ene, or they possess aromatic nuclei, such as N,N-bis(2-hydroxyethyl)aniline or p,p'-bis(2-hydroxyethylamino)diphenylmethane.

The epoxy compounds may also be derived from mononuclear phenols, such as, for example, from resorcinol or hydroquinone, or they are based on polynuclear phenols, such as, for example, bis(4-hydroxyphenyl)methane (bisphenol F), 2,2-bis(4-hydroxyphenyl)propane (bisphenol A), or on condensation products, obtained under acidic conditions, of phenols or cresols with formaldehyde, such as phenol novolaks and cresol novolaks.

Glycidyl-based polymers also include poly(N-glycidyl) compounds for example, obtainable by dehydrochlorination of the reaction products of epichlorohydrin with amines that comprise at least two amine hydrogen atoms. Those amines are, for example, n-butylamine, aniline, toluidine, m-xylylenediamine, bis(4-aminophenyl)methane or bis(4-methylaminophenyl)methane.

The poly(N-glycidyl) compounds also include, however, N,N'-diglycidyl derivatives of cycloalkyleneureas, such as ethyleneurea or 1,3-propyleneurea, and N,N'-diglycidyl derivatives of hydantoins, such as of 5,5-dimethylhydantoin.

Glycidyl-based polymers also include poly(S-glycidyl) compounds such as di-S-glycidyl derivatives which are derived from dithiols, such as, for example, ethane-1,2-dithiol or bis(4-mercaptomethylphenyl) ether.

Preferred examples for such glycidyl-based epoxy compounds are glycidiyl-based epoxy dimers of the general formula (IV) 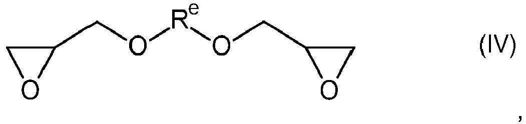 wherein
- R^{e}: represents a bisphenol A residue, a hydrogenated bisphenol A residue, a bisphenol F residue, a hydrogenate bisphenol F residue, a bisphenol Z residue, a hydrogenated bisphenol Z residue a cyclohexanedimethanol residue, or a tricyclodecandimethanol residue, preferably a hydrogenated bisphenol A residue.

The term "hydrogenated bisphenol residue" refers to a bisphenol residue which is completely hydrogenated. Accordingly, hydrogenated bisphenol A is 2,2-Bis(4-hydroxycyclohexyl)propane.

Accordingly, in a preferred embodiment of the invention the at least one epoxy-containg compound (E) is hydrogenated bisphenol A diglycidyl ether.

In another preferred embodiment the epoxy-containing compound (E) is a non-glycidyl epoxide as described for example in WO 2007/031505.

These epoxies may be linear, branched, or cyclic in structure. Examples are epoxide-containing compounds in which the epoxide groups form part of an alicyclic or heterocyclic ring system, and epoxy-containing compounds with at least one epoxycyclohexyl group that is bonded directly or indirectly to a group containing at least one silicon atom. Examples are disclosed in US 5,639,413. Further examples are epoxide-containg compounds which contain one or more cyclohexene oxide groups and epoxides which contain one or more cyclopentene oxide groups.

Particularly suitable non-glycidyl epoxies are for example difunctional non-glycidyl epoxide compounds in which the epoxide groups form part of an alicyclic or heterocyclic ring system: bis(2,3-epoxycyclopentyl) ether, 1 ,2-bis(2,3-epoxycyclopentyloxy)ethane, 3,4- epoxycyclohexyl-methyl 3,4-epoxycyclohexanecarboxylate, 3,4-epoxy-6-methyl- cyclohexylmethyl S^-epoxy-θ-methylcyclohexanecarboxylate, di(3,4- epoxycyclohexylmethyl)hexanedioate, di(3,4-epoxy-6-methylcyclohexylmethyl) hexanedioate, ethylenebis(3,4-epoxycyclohexanecarboxylate, ethanediol di(3,4- epoxycyclohexylmethyl)ether, vinylcyclohexene dioxide, dicyclopentadiene diepoxide or 2- (3,4-epoxycyclohexyl-5,5-spiro-3,4-epoxy)cyclohexane-1 ,3-dioxane, and 2,2'-Bis-(3,4-epoxy- cyclohexyl)-propane.

In a preferred embodiment the difunctional non-glycidyl epoxies is a cycloaliphatic difunctional non-glycidyl epoxies, such as 3,4-epoxycyclohexyl-methyl 3',4'-epoxycyclohexanecarboxylate and 2,2'-Bis-(3,4-epoxy-cyclohexyl)-propane.

In the invention, the above described epoxy-containing compounds (E) may be used by one kind alone, or two or more kinds may be used in combination.

Preferably, the composition according to the invention comprises
- 5 to 70 wt.-%, preferably 20 to 35% of the at least one ethylenically unsaturated photopolymerizable compound (C), and
- 30 to 95 wt.-%, preferably 65 to 80% of the at least one epoxy-containing compound (E),
wherein the given amounts are based on the total amount of the at least one ethylenically unsaturated photopolymerizable compound (C) and the at least one epoxy resin compound (E).

### Oxetane compound (O)

In a preferred embodiment the composition according to the invention comprises at least one oxetane compound (O). For the purpose of the invention the at least one oxetane compound (O) is selected from monooxetane compound (O1) having one oxetane group per molecule thereof, and a polyoxetane compound (02) comprising two or more, for example 2, 3, 4 or 5 oxetane groups per molecule.

Preferred monooxetane compounds (O1) have the general formula (V-1) 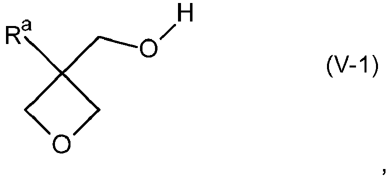 wherein
- R^{a}: is an C₁-C₅alkyl group.

Preferred monooxetane compounds are 3-methyl-3-hydroxymethyl-oxetane, 3-ethyl-3-hydroxymethyl-oxetane, 3-n-propyl-3-hydroxymethyl-oxetane, and 3-isopropyl-3-hydroxymethyl-oxetane.

In one preferred embodment the at least one monooxetane compounds (O1) is 3ethyl-3-hydroxymethyl-oxetane.

Preferred polyoxetane compounds (02) have the general formula (V-2) 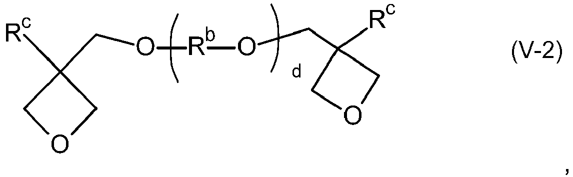 wherein
- R^{b}: is a C₁-C₁₂alkylene group; or a C₁-C₁₂alkylene group, which is interrupted by one or more phenyl, a hydrogenated bisphenol A residue, hydrogenated bisphenol F residue, hydrogenated bisphenol Z residue, cyclohexanedimethanol residue, and tricyclodecanedimethanol residue; and
- each R^{c}: is independently from each other a C₁-C alkyl group; and
- d: is 0 or 1.

In another preferred embodiment the polyoxetane compound (02) is a compound having the general formula (V-2a) or (V-2b) 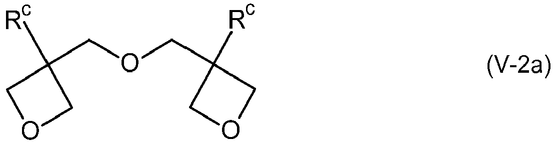 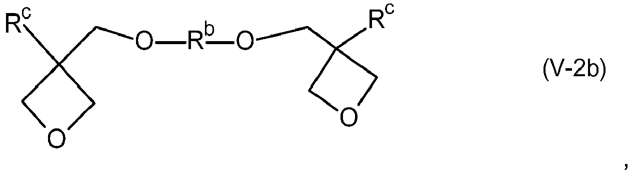 wherein
R^{b} and R^{c} have the meanings as defined above.

In one preferred embodiment of the invention the dioxetane compounds represented by formula (V-2a) include bis(3-methyl-3-oxetanylmethyl) ether, bis(3-ethyl-3-oxetanylmethyl) ether, bis(3-propyl-3-oxetanylmethyl) ether, and bis(3-butyl-3-oxetanylmethyl) ether.

In another preferred embodiment of the invention the dioxetane compounds represented by formula (V-2b) are compounds wherein two R^{c} both represent a methyl, ethyl, propyl, butyl or pentyl group, and R^{b} represents an ethylene group, a propylene group, a butylene group, a neopentylene group, an n-pentamethylene group, an n-hexamethylene group, etc.), a divalent group represented by the formula -CH₂-Ph-CH₂- or -CH₂-Ph-Ph-CH₂-, a hydrogenated bisphenol A residue, a hydrogenated bisphenol F residue, a hydrogenated bisphenol Z residue, a cyclohexanedimethanol residue or a tricyclodecane-dimethanol residue can be exemplified.

The oxetane compound (O) is an optional compound and can be used for example as a diluent, or can be used to reduce the amount of the at least one epoxy-containing compound (E) in the composition.

### Photo-acid generator

The composition of the invention comprises at least one photo-acid generator which serves as a as a photo initiator for cationic polymerization. In other words, the photo-acid generator may also be denoted as "cationic polymerization initiator".

Suitable photo-acid generator compounds for the purpose of the invention are any polymerization initiators capable of initiating cationic polymerization of the epoxy compound (E) by irradiation with actinic radiation, preferably having a wavelength in the range of 200 to 600 nm, preferably 350 to 450 nm.

In a preferred embodiment of the invention the at least one photo-acid generator is selected from onium salts capable of releasing a Lewis acid by irradiation with actinic radiation. As the examples of the onium salts, aromatic sulfonium salts of the elements of the group Vila, aromatic onium salts of the elements belonging to the group Via, and aromatic onium salts of the elements belonging to the group Va can be exemplified. Specifically, triarylsulfonium hexafluoroantimonate, triphenylphen-acylphosphonium tetrafluoroborate, triphenylsulfonium hexafluoroantimonate, bis[4-(diphenylsulfonio)phenyl]sulfide bisdihexafluoroantimonate, bis[4-(di-4'-hydroxy-ethoxyphenylsulfonio)-phenyl]sulfide bisdihexafluoroantimonate, bis[4-(diphenyl-sulfonio)phenyl]sulfide bisdihexafluorophosphate, and diphenyliodonium tetrafluoroborate can be exemplified.

In another preferred embodiment of the invention, one or two or more of these photo-acid generators can be used in the photocurable resin composition. In a further preferred embodiment aromatic sulfonium salts are used, for example diphenyl[(4-phenylthio)phenyl] sulfonium hexafluoro antimonate (e.g. purchase as DTS-103 from Midori Kagaku Co. Ltd.) or 4-Isopropyl-4'-methyldipehyl-iodonium-tetrakis(Pentafluorophenyl)borate (for example purchased as 10519 of Tokyo Chemical Industry).

### Photosensitizer PS

In one preferred embodiment the photocurable composition according to the invention comprises at least one photoinitiator system comprising at least one photoinitiator G as described above and at least one photosensitizer PS selected from the group consisting of benzophenone-based, xanthon-based, thioxanthone-based, and acridone-based compounds.

Photosensitizers are known in the art as compounds which are added to photocurable resin compositions in order to broaden or to shift the spectral sensitivity.

Preferred photosensitizers PS for the purpose of the present invention are compounds which absorbs light in the range from 375 to 450 nm.

In a preferred embodiment the composition according to the invention comprises at least one photosensitizer PS selected from the group consisting of benzophenone-based , xanthon-based, thioxanthone-based, and acridone-based compounds.

The term "benzophenone-based compounds" for the purpose of the present invention relates to compounds comprising as a parent compound benzophenone, wherein optionally one or more, up to the maximum number of hydrogen atoms, i.e. 10, are substituted with radicals different from hydrogen. Suitable substituents are all substituents which lead to a benzophenone-based compound which absorbs light in the preferred range of 375 to 450 nm. The same applies for the "xanthon-based", "thioxanthone-based", and "acridone-based compounds" as used herein accordingly.

In a further preferred embodiment the composition according to the invention the at least one photosensitizer PS is a compound of the formula (IIa) and/or (IIb) 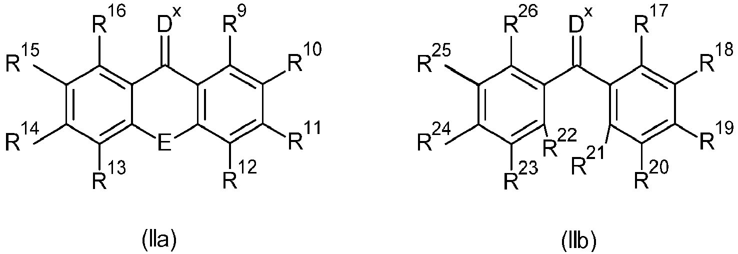 wherein
D^{x} is O or S;
E is direct bond, CH₂, O, S or NR⁵
R₉, R₁₀, R₁₁, R₁₂, R₁₃, R₁₄, R₁₅, R₁₆, R₁₇, R₁₈, R₁₉, R₂₀, R₂₁, R₂₂, R₂₃, R₂₄, R₂₅, R₂₆ are independently from each other hydrogen, halogen, NO₂, CN, OR³, SR⁴ and/or NR⁵R⁶; C₁-C₂₀alkyl and/or C₂-C₂₀alkenyl, which is unsubstituted or substituted by one or more halogen, CN, OR³, SR⁴, NR⁵R⁶, phenyl and/or naphthyl; C₁-C₂₀alkyl and/or C₂-C₂₀alkenyl, which is interrupted by one or more -O-, -S-, -NR₅-, phenylene and/or naphthylene; C₃-C₈cycloalkyl and/or C₃-C₈cycloalkenyl, which is unsubstituted or substituted by one or more halogen, CN, R⁸, OR³, SR⁴ and/or NR⁵R⁶; C₃-C₈cycloalkyl and/or C₃-C₈cycloalkenyl, which is interrupted by one or more -O-, -S- and/or -NR⁵-; phenyl and/or naphthyl, which is unsubstituted or substituted by one or more halogen, CN, C₁-C₂₀alkyl, C₃-C₈cycloalkyl, OR³, SR⁴ and/or NR⁵R⁶; and/or -C(O)R⁸;
   and/or
   R₅ and R₆ form together with the N atom to which they are attached a 5- or 6-membered heterocycle;
   and/or
   two of R⁹, R¹⁰, R¹¹, R¹², R¹³, R¹⁴, R¹⁵, R¹⁶, R¹⁷, R¹⁸, R¹⁹, R²⁰, R²¹, R²², R²³, R²⁴, R²⁵ and/or R²⁶ if present at adjacent carbon atoms together form a 5- or 6-membered carbocycle or heterocycle; and
   wherein R³, R⁴, R⁵, R⁶ and R⁸ is has the meaning as defined in any one of the preceding claims.

In the compounds of formula (IIa) from 0 to 8 hydrogen atoms can be substituted with a radical different from hydrogen, preferably the number of substituents different from hydrogen is from 0 to 4, preferably from 0 to 2, also preferably from 1 to 3.

In the compounds of formula (IIb) from 0 to 10 hydrogen atoms can be substituted with a radical different from hydrogen, preferably the number of substituents different from hydrogen is from 0 to 4, preferably 1 or 2.

Also preferred are compositions according to the invention, wherein the at least one photosensitizer PS is a compound of the formula (IIa) or (lib), wherein the radicals and indices have the following meanings:
D^{x} is O;
E is S or NR⁵;
R₉, R₁₀, R₁₁, R₁₂, R₁₃, R₁₄, R₁₅, R₁₆, R¹⁷, R¹⁸, R¹⁹, R²⁰, R²¹, R²², R²³, R²⁴, R²⁵ and/or R²⁶ are independently from each other hydrogen, halogen, OR³, SR⁴ and/or NR⁵R⁶; C₁-C₁₂alkyl, which is unsubstituted or substituted by one or more halogen, and/or OR³; C₁-C₁₂alkyl, which is interrupted by one or more -O; C₃-C₈cycloalkyl , which is unsubstituted or substituted by one or more halogen,; C₃-C₈cycloalkyl, which is interrupted by one or more -O- ; phenyl naphthyl, which is unsubstituted or substituted by one or more halogen, C₁-C₁₂alkyl, OR³, SR⁴ and/or NR⁵R⁶; and/or -C(O)R⁸;
   and
   wherein R³, R⁴, R⁵, R⁶ and R⁸ is has the meaning as defined above.

In another preferred embodiment the photocurable composition according to the invention comprises at least one photosensitizer PS wherein the at least one photosensitizer PS is a compound of the formula (IIa) wherein the radicals and indices have the following meanings:
- D^{x}: is O;
- E: is S or NR⁵;
wherein
R⁹, R¹⁰, R¹¹, R¹², R¹³, R¹⁴, R¹⁵,
and/or R¹⁶ are independently of each other hydrogen, halogen, OR³, and/or C₁-C₁₂alkyl;
R³ is C₁-C₁₂alkyl;
R⁵ is C₁-C₁₂alkyl;
wherein preferably 4 to 8, more preferably 5 to 7 of the radicals R⁹, R¹⁰, R¹¹, R¹², R¹³, R¹⁴, R¹⁵, and/or R¹⁶ are hydrogen;
and/or a compound of formula (lib), wherein the radicals and indices have the following meanings:
D^{x} is O,
R¹⁷, R¹⁸, R¹⁹, R²⁰, R²¹, R²², R²³, R²⁴, R²⁵
and/or R²⁶ are independently of each other hydrogen, NR⁵R⁶, C₁-C₁₂alkyl;
   wherein
preferably 6 to 10, more preferably 7 to 9 of the radicals R¹⁷, R¹⁸, R¹⁹, R²⁰, R²¹, R²², R²³, R²⁴, R²⁵ and/or R²⁶ are hydrogen;
   wherein
R⁵, R⁶ are independently of each other hydrogen, C₁-C₁₂alkyl, or form together with the N atom to which they are attached a 5- or 6-membered heterocycle.

Further preferred photosensitizers PS of the general formula (IIa) are the following:

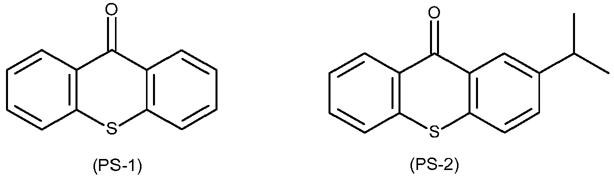

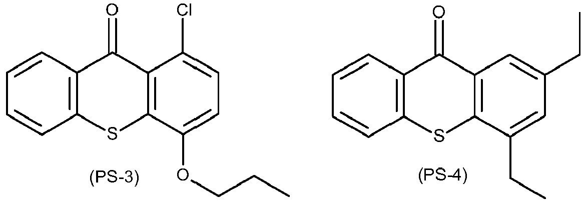

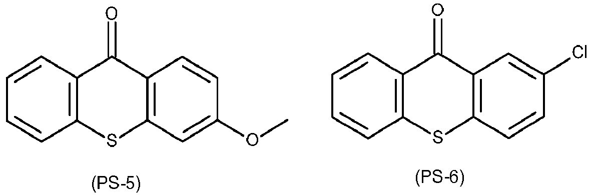

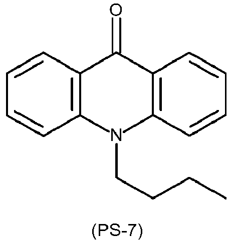

In another preferred embodiment of the composition according to the invention the photosensitizers PS of the general formula (IIb) are represented by the following compounds:

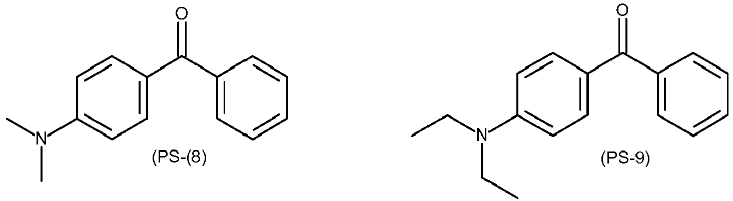

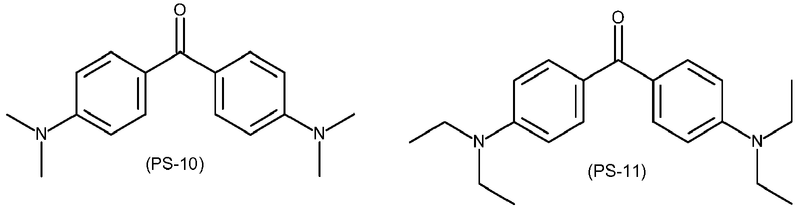

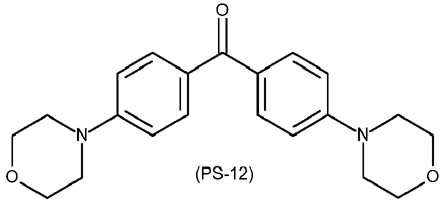

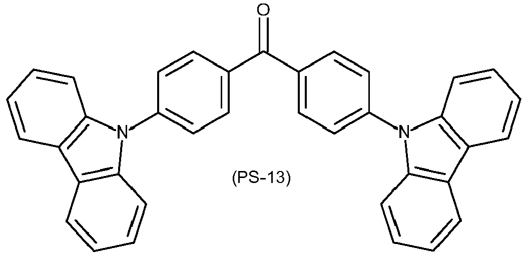

In a further preferred embodiment of the invention the photosensitizer PS is selected from compounds (PS-1), (PS-2), (PS-4), (PS-10) and (PS-11).

In another preferred embodiment the at least one photosensitizer is compound (PS-4).

The composition of the invention may comprise one photosensitizer PS or a mixture of two or more thereof, preferably the composition comprises one photosensitizer PS. In one preferred embodiment the photocurable resin composition of the invention comprises at least one radical photoinitiator G and at least one photosensitizer PS, wherein the photoinitiator system comprises
(a) from 50 to 99 wt.-%, preferably 70 to 97 wt.-%, more preferably 80 to 95 wt.-% of the at least one radical photoinitiator G-1 of the general formula (Ia) and/or the at least one photoinitiator G-2 of the general formula (Ib); and
(b) from 1 to 50 wt.-%, preferably, 3 to 30 wt.-%, more preferably 5 to 20 wt.-% of at least one photosensitizer PS of the formula (IIa) or (lib),
wherein the given amounts are based on the total amount of the at least one radical photoinitiator G and at least one photosensitizer PS.

As mentioned above the at least one photosensitizer PS preferably absorbs light in a wave length preferably in the range from 375 to 450 nm. Accordingly, in one preferred embodiment of the invention the present photocurable resin composition is curable with light having a wavelength in the range from 375 to 450 nm, for example originating from UV and blue emitting LEDs.

### Diluent

In one embodiment of the invention the composition according to the invention may comprise one or more diluents. As described above the photocurable resin composition is liquid or solid, preferably liquid. In embodiments, wherein the photocurable resin composition is solid, it may be - depending on the particular application of the resin - necessary to add a diluent in a sufficient amount to obtain a liquid photocurable resin composition.

Suitable diluents are for example water, methanol, ethanol, n-propanol, and isopropanol or a mixture of two or more thereof, preferably water.

However, in a preferred embodiment the composition of the invention does not comprise any diluent.

### Further additives

The present photocurable resin composition may comprise one or more additives, for example binders, diluents, film forming components, colorants, e.g. pigments or dyes. In addition, additives customary in the art, such as, for example, defoaming agents, a filler, a flame-retardant, thermal inhibitors, light stabilizers, UV absorber, curing depth control agents, blowing agents, leveling agents, rheology modifiers, dispersants, optical brightners, waxes, and other initiators as co-initiator, e.g. thermal-radical initiators, other photo-radical initiators, photo-acid generators or photo-base generators, or other photo-sensitizers can be used.

These additives are in general known for the skilled person in the field of photocurable resins.

Examples for suitable dispersants are for example as described in WO 2011/069947

Examples for suitable colorants are dyes, pigments or a combination thereof. Organic and/or inorganic pigments may be used.

Suitable binders are for example binder described on US 6,048,660. The choice of binder is made depending on the field of application and on properties required for this field, such as the capacity for development in aqueous and organic solvent systems, adhesion to substrates and sensitivity to oxygen.

Examples of suitable binders are polymers having a molecular weight of about 5000 to 2000000, preferably 10000 to 1000000. Examples are: homo- and copolymers of acrylates and methacrylates, for example copolymers of methyl methacrylate/ethyl acrylate/methacrylic acid, poly(alkyl methacrylates), poly(alkyl acrylates); cellulose esters and cellulose ethers, such as cellulose acetate, cellulose acetobutyrate, methylcellulose, ethylcellulose; polyvinylbutyral, polyvinylformal, cyclized rubber, polyethers such as polyethylene oxide, polypropylene oxide and polytetrahydrofuran; polystyrene, polycarbonate, polyurethane, chlorinated polyolefins, polyvinyl chloride, vinyl chloride/vinylidene copolymers, copolymers of vinylidene chloride with acrylonitrile, methyl methacrylate and vinyl acetate, polyvinyl acetate, copoly(ethylene/vinyl acetate), polymers such as polycaprolactam and poly(hexamethylenadipamide), and polyesters such as poly(ethylene glycol terephtalate) and poly(hexamethylene glycol succinate) and polyimides.

The at least one ethylenically unsaturated photopolymerizable compound according to the present invention can also be used as a mixture with non-photopolymerizable, film-forming components. These may, for example, be physically drying polymers or solutions thereof in organic solvents, for instance nitrocellulose or cellulose acetobutyrate. They may also, however, be chemically and/or thermally curable (heat-curable) resins, examples being polyisocyanates, polyepoxides and melamine resins, as well as polyimide precursors. The use of heat-curable resins at the same time is important for use in systems known as hybrid systems, which in a first stage are photopolymerized and in a second stage are crosslinked by means of thermal aftertreatment.

Examples for further additives are thermal inhibitors, which are intended to prevent premature polymerization, examples being hydroquinone, hydroquinine derivatives, p-methoxyphenol, .beta.-naphthol or sterically hindered phenols, such as 2,6-di-tert-butyl-p-cresol. In order to increase the stability on storage in the dark it is possible, for example, to use copper compounds, such as copper naphthenate, stearate or octoate, phosphorus compounds, for example triphenylphosphine, tributylphosphine, triethyl phosphite, triphenyl phosphite or tribenzyl phosphite, quaternary ammonium compounds, for example tetramethylammonium chloride or trimethylbenzylammonium chloride, or hydroxylamine derivatives, for example N-diethylhydroxylamine. To exclude atmospheric oxygen during the polymerization it is possible to add paraffin or similar wax-like substances which, being of inadequate solubility in the polymer, migrate to the surface in the beginning of polymerization and form a transparent surface layer which prevents the ingress of air. It is also possible to apply an oxygen-impermeable layer. Light stabilizers which can be added in a small quantity are UV absorbers, for example those of the hydroxyphenylbenzotriazole, hydroxyphenyl-benzophenone, oxalamide or hydroxyphenyl-s-triazine type. These compounds can be used individually or in mixtures, with or without sterically hindered amines (HALS).

Examples of such UV absorbers and light stabilizers are
1. 2-(2'-hydroxyphenyl)benzotriazoles for example 2-(2'-hydroxy-5'-methylphenyl)benzo-triazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chlorobenzotriazole, 2-(3'-tert-butyl-2'-hydroxy-5'-methylphenyl)-5-chlorobenzotriazole, 2-(3'-sec-butyl-5'-tert-butyl-2'-hydroxyphenyl)benzotrizole, 2-(2'-hydroxy-4'-octoxyphenyl)benzotriazole, 2-(3',5'-di-tert-amyl-2'-hydroxyphenyl)benzotriazole, 2-(3',5'-bis-(.alpha.,.alpha.-dimethylbenzyl)-2'-hydroxyphenyl)-benzotriazole, mixture of 2-(3'-tert-butyl-2'-hydroxy-5'-(2-octyloxycarbonylethyl)phenyl)-5-chlorobe nzotriazole, 2-(3'-tert-butyl-5'-[2-(2-ethyl-hexyl-oxy)carbonylethyl]-2'-hydroxyphenyl) -5-chlorobenzotriazole, 2-(3'-tert-butyl-2'-hydroxy-5'-(2-methoxycarbonylethyl)phenyl)-5-chlorobenzotriazole, 2-(3'-tert-butyl-2'-hydroxy-5'-(2-methoxycarbonylethyl)phenyl)-benzotriazole, 2-(3'-tert-butyl-2'-hydroxy-5'-(2-octyloxycarbonylethyl)phenyl)benzotriazole, 2-(3'-tert-butyl-5'-[2-(2-ethylhexybxy)carbonylethyl]-2'-hydroxyphenyl)benzotriazole, 2-(3'-dodecyl-2'-hydroxy-5'-methylphenyl)benzotriazole, and 2-(3'-tert-butyl-2'-hydroxy-5'-(2-isooctyloxycarbonylethyl)phenylbenzotriazole, 2,2'-methylenebis[4-(1,1,3,3-tetramethylbutyl)-6-benzotriazol-2-yl-phenol] ; transesterification product of 2-[3'-tert-butyl-5'-(2-methoxycarbonylethyl)-2'-hydroxy-phenyl]-benzotriazole with polyethylene glycol 300; [R--CH2CH2--COO(CH2)3]2-- where R=3'-tert-butyl-4'-hydroxy-5'-2H-benzotriazol-2-yl-phenyl.
2. 2-Hydroxybenzophenones, for example the 4-hydroxy-, 4-methoxy-, 4-octoxy-, 4-decyloxy-, 4-dodecyloxy-, 4-benzyloxy-, 4,2',4'-trihydroxy- and 2'-hydroxy-4,4'-dimethoxy derivative.
3. Esters of substituted or unsubstituted benzoicacids, for example 4-tert-butylphenyl salicylate, phenyl salicylate, octylphenyl salicylate, dibenzoylresorcinol, bis(4-tert-butylbenzoy)resorcinol, benzoylresorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, and 2-methyl-4,6-di-tert-butylphenyl 3,5-di-tert-butyl-4-hydroxybenzoate.
4. Acrylates, for example isooctyl or ethyl-alpha-cyano-beta, beta-diphenyl acrylate, methyl-alpha-carbomethoxycinnamate, butyl or methyl-alpha-cyano-beta,beta-methyl-p-methoxycinnamate, methyl alpha-carboxymethoxy-p-methoxycinnamate and N-(beta-carbomethoxy-beta-cyanovinyl)-2-methylindoline.
5. Sterically hindered amines, for example bis-(2,2,6,6-tetramethylpiperidyl) sebacate, bis-(2,2,6,6-tetramethylpiperidyl) succinate, bis-(1,2,2,6,6-pentamethylpiperidyl) sebacate, bis-(1,2,2,6,6-pentamethylpiperidyl) n-butyl-3,5-di-tert-butyl-4-hydroxybenzylmalonate, condensation product of 1-hydroxyethyl-2,2,6,6-tetramethyl-4-hydroxypiperidine and succinic acid, condensation product of N,N'-bis-(2,2,6,6-tetramethyl-4-piperidyl)hexamethylenediamine and 4-tert-octylamino-2,6-dichloro-1,3,5-s-triazine, tris-(2,2,6,6-tetramethyl-4-piperidyl) nitrilotriacetate, tetrakis-(2,2,6,6-tetramethyl-4-piperidyl)-1,2,3,4-butane tetraoate, 1,1'-(1,2-ethandiyl)bis(3,3,5,5-tetramethyl-piperazinone), 4-benzoyl-2,2,6,6-tetramethylpiperidine, 4-stearyloxy-2,2,6,6-tetramethylpiperidine, bis-(1,2,2,6,6-pentamethylpiperidyl) 2-n-butyl-2-(2-hydroxy-3,5-di-tert-butylbenzyl) malonate, 3-n-octyl-7,7,9,9-tetramethyl-1,3,8-triazaspiro-[4.5]decane-2,4-dione, bis-(1-octyloxy-2,2,6,6-tetramethylpiperidyl) sebacate, bis-(1-octyloxy-2,2,6,6-tetramethylpiperidyl) succinate, condensation product of N,N'-bis-(2,2,6,6-tetramethyl-4-piperidyl)hexamethylenediamine and 4-morpholino-2,6-dichloro-1,3,5-triazine, condensation product of 2-chloro-4,6-di-(4-n-butylamino-2,2,6,6-tetramethylpiperidyl)-1,3,5-triazine and 1,2-bis-(3-aminopropyl-amino)ethane, condensation product of 2-chloro-4,6-di-(4-n-butylamino-1,2,2,6,6-pentamethylpiperidyl)-1,3,5-triazine and 1,2-bis-(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidine-2,5-dione and 3-dodecyl-1-(1,2,2,6,6-penta-methyl-4-piperidyl)-pyrrolidine-2,5-dione.
6. Oxalamides, for example 4,4'-dioctyloxyoxanilide, 2,2'-diethoxyoxanilide, 2,2'-dioctyloxy-5,5'-di-tert-butyloxanilide, 2,2'-didodecyloxy-5,5'di-tert-butyloxanilide, 2-ethoxy-2'-ethyl-oxanilide, N,N'-bis-(3-dimethylaminopropyl)oxalamide, 2-ethoxy-5-tert-butyl-2'-ethyloxanilide and its mixture with 2-ethoxy-2'-ethyl-5,4'-di-tert-butyloxanilide, mixtures of o- and p-methoxy- and of o- and p-ethoxy-disubstituted oxanalides.
7. 2-(2-Hydroxyphenyl)-1,3,5-triazines, for example 2,4,6-tris(2-hydroxy-4-octyloxyphenyl)-1,3,5-triazine, 2-(2-hydroxy-4-octyloxyphenyl)-4,6-bis-(2,4-dimethylphenyl)-1,3,5-triazine , 2-(2,4-dihydroxyphenyl)-4,6-bis(2,4-dimethylphenyl)-1,3,5-triazine, 2,4-bis(2-hydroxy-4-propyloxy-phenyl)-6-(2,4-dimethylphenyl)-1,3,5-triazin e, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazin e, 2-[2-hydroxy-4-(2-hydroxy-3-butyloxy-propyloxy)phenyl]-4,6-bis(2,4-dimethylphenyl)-1,3,5-triazine, 2-[2-hydroxy-4-(2-hydroxy-3-octyloxy-propyloxy)phenyl]-4,6-bis(2,4-dimethylphenyl)-1,3,5-triazine, 2-[4-dodecyl/tridecyl-oxy-(2-hydroxypropyl)oxy-2-hydroxy-phenyl]-4,6-bis(2 ,4-dimethylphenyl)-1,3,5-triazine.
8. Phosphites and phosphonites, for example triphenyl phosphite, diphenyl alkyl phosphites, phenyl dialkyl phosphites, tris(nonylphenyl) phosphite, trilauryl phosphite, trioctadecyl phosphite, distearyl pentaerythrityl diphosphite, tris-(2,4-di-tert-butylphenyl) phosphite, diisodecyl pentaerythrityl diphosphite, bis-(2,4-di-tert-butylphenyl) pentaerythrityl diphosphite, bis-(2,6-di-tert-butyl-4-methylphenyl) pentaerythrityl diphosphite, bis-isodecyloxy pentaerythrityl diphosphite, bis-(2,4-di-tert-butyl-6-methylphenyl) pentaerythrityl diphosphite, bis-(2,4,6-tri-tert-butylphenyl) pentaerythrityl diphosphite, tristearyl sorbityl triphosphite, tetrakis-(2,4-di-tert-butylphenyl)-4,4'-biphenylene diphosphonite, 6-isooctyloxy-2,4,8,10-tetra-tert-butyl-12H-dibenzo[d,g]-1,3,2-dioxaphosph ocine, 6-fluoro-2,4,8,10-tetra-tert-butyl-12-methyl-dibenzo[d,g]-1,3,2-dioxaphosp hocine, bis-(2,4-di-tert-butyl-6-methylphenyl) methyl phosphite and bis(2,4-di-tert-butyl-6-methylphenyl) ethyl phosphite.

In a preferred embodiment of the invention, the composition comprises
a) 5 to 70 wt.-% of the at least one ethylenically unsaturated photopolymerizable compound (C);
b) 25 to 90 wt.-% of the at least one epoxy-containing compound (E);
c) 0.5 to 2.5 wt.-% of the at least one photo-acid generator;
d) 0.5 to 2.5 wt.-% of the at least one radical photoinitiator G;
e) 0 to 10.0 wt.-% of the at least one diluent;
f) 0 to 10.0 wt.-% of at least one additive;
g) 0 to 25.0 wt.-% of at least one oxetane-compound (O); and
h) 0 to 1.5 wt.-% of at least one photosensitizer PS,
wherein the given amounts are based on the total amount of the composition.

In another preferred embodiment the resin composition comprises
a) 5 to 35 wt.-% of the at least one ethylenically unsaturated photopolymerizable compound (C);
b) 50 to 80 wt.-% of the at least one epoxy-containing compound (E);
c) 0.5 to 2.5 wt.-% of the at least one photo-acid generator;
d) 0.5 to 2.5 wt.-% of the at least one radical photoinitiator G;
e) 0 to 10.0 wt.-% of the at least one diluent;
f) 0 to 10.0 wt.-% of at least one additive;
g) 5 to 25.0 wt.-% of at least one oxetane-compound (O); and
h) 0 to 1.5 wt.-% of at least one photosensitizer PS,
wherein the given amounts are based on the total amount of the composition.

In another preferred embodiment the resin composition comprises
a) 5 to 35 wt.-% of the at least one ethylenically unsaturated photopolymerizable compound (C);
b) 50 to 75 wt.-% of the at least one epoxy-containing compound (E);
c) 0.5 to 2.5 wt.-% of the at least one photo-acid generator;
d) 0.5 to 2.5 wt.-% of the at least one radical photoinitiator G;
e) 0 to 10.0 wt.-% of the at least one diluent;
f) 0 to 10.0 wt.-% of at least one additive;
g) 5 to 25.0 wt.-% of at least one oxetane-compound (O); and
h) 0.05 to 1.5 wt.-% of at least one photosensitizer PS,
wherein the given amounts are based on the total amount of the composition.

In a preferred embodiment the resin composition according to the invention essentially consists of at least one ethylenically unsaturated photopolymerizable compound (C); at least one epoxy-containing compound (E); at least one photo-acid generator; and at least one radical photoinitiator G.

In another preferred embodiment the resin composition according to the invention essentially consists of at least one ethylenically unsaturated photopolymerizable compound (C); at least one epoxy-containing compound (E); at least one photo-acid generator; at least one radical photoinitiator (G), and at least one photosensitizer PS.

In another preferred embodiment the resin composition according to the invention essentially consists of at least one ethylenically unsaturated photopolymerizable compound (C); at least one epoxy-containing compound (E); at least one photo-acid generator; at least one radical photoinitiator (G), at least one oxetane compound (O) and at least one photosensitizer PS.

In a further preferred embodiment the resin composition according to the invention essentially consists of at least one ethylenically unsaturated photopolymerizable compound (C); at least one epoxy-containing compound (E); at least one photo-acid generator; at least one radical photoinitiator (G), and at least one oxetane compound (O).

In a preferred embodiment the composition according to the invention comprises from 0.05 to 15 wt.-% of the at least one radical photoinitiator G, based on the total weight of the composition.

In a further preferred embodiment the composition according to the invention is curable with light having a wave length in the range from 200 to 600 nm, preferably from 350 to 450 nm, also preferably form 375 to 450 nm.

In a further aspect, the present invention relates to a method for the preparation of the photocurable resin composition according to the invention, comprising the step of mixing
a) the at least one unsaturated photopolymerizable compound (C),
b) the at least one epoxy-containing compound (E);
c) the at least one photo-acid generator;
d) the at least one at least one photoinitiator G, wherein the at least one photoinitiator G is at least one photoinitiator G-1A of the general formula (Ia) and/or at least one photoinitiator G-1 B of the general formula (Ib) as described above, and
e) optionally the at least one photosensitizer PS,
f) optionally at least one oxetane compound (O);
g) optionally one or more diluent; and
h) optionally further additives.
until a homogenous composition is obtained.

The term "homogenous mixture" for the purpose of the invention relates to a mixture wherein the single components of the mixture cannot be differentiated from each other anymore. In other words, all components of the mixture are present in the same phase.

The temporal sequence of the addition of the single components a) to f) is not critical.

The photocurable composition of the invention can - in general - be used for a multitude of purposes. In a preferred embodiment however, the photocurable composition is used in a method for 3D printing by 3D stereolithography.

Accordingly, in a further aspect of the invention a method for producing a three dimensional object by means of stereolithography is provided, comprising the steps of
a) providing the photocurable resin composition according to the invention;
b) imagewise irradiation of a first liquid layer of the photocurable resin with light to form a cured layer;
c) forming a further liquid layer on the cured layer;
d) imagewise irradiation of the further liquid layer of the photocurable resin with light to form a further cured layer;
e) multiple repetitions of steps c) and d) wherein by stacking of the cured layers a three dimensional object is obtained;
wherein the light has a wave length from 375 to 450 nm and is operated by a control system.

Optionally, it is possible to apply heat and/or light to the object to complete the curing as a post curing process.

In principle, any known stereolithographic method and apparatus can be used. Methods for producing three dimensional objects by means of stereolithography are known to the skilled person in the art and for example described in EP 1 939 234, WO 2016/071811, and WO 2007/031505. Stereolithography equipment is commercially available from various manufacturers. Typically, the liquid photocurable resin composition according to the invention is placed in a shaping contained, which comprises a light permeable bottom.

Afterwards imagewise irradiation of a first liquid layer of the photocurable resin with light is conducted, wherein a first cured layer is formed. Imagewise irradiation in this context means that the composition is irradiated with light in a predetermined shape pattern through the light permeable bottom to obtain a cured layer having the desired shape. Subsequently, new layers of the liquid photocurable resin are coated onto the previous, cured layer and exposed to radiation until a three dimensional object is formed.

With the help of a control system, for example a computer aided manufacturing or computer-aided design (CAM/CAD) software the light is controlled to draw a preprogrammed design or shape in the photocurable liquid.

The light used in the method according to the invention has a wavelength from 375 to 450 nm and is preferably originating from UV, blue emitting LED or blue LD, preferably from UV or blue emitting LED with a Digital Light Processing (DLP) unit or a Liquid Crystal (LC) panel, or UV or blue LD with Galvanometer mirror or X-Y plotter.

In principle any stereolithography machine that uses 375 to 450 nm light may be used to carry out the inventive process. Commercially available stereolithograpy 3D printers are, for example, Vida and Vida HD by EnvisionTEC and M1 and M2 by Carbon (UV-LED with DLP), DigitalWax 009J by DWS and Value3D MagiX ML-200 by MUTOH (blue LED with DLP), DentaForm by Structo (blue LED with LC panel), VECTOR 3SP by EnvisionTEC (UV-LD with Galvanometer mirror), Form 2 by Formlabs and DigitalWax 030X by DWS (blue LD with Galvanometer mirror) and DigitalWax 008J by DWS (blue LD scanned by X-Y plotter). Thus, in a preferred embodiment of the method according to the invention the irradiation in step b) and c) is conducted by means of imagewise irradiation of UV or blue emitting LEDs or UV or blue LDs.

In another preferred embodiment of the invention, the photocurable composition of the present invention is used in a method for 3D printing by material jetting.

In principle, any known material jetting method and apparatus can be used. Methods for producing three dimensional objects by means of material jetting are known to the skilled person in the art and for example described in WO 2000/52624, JP-A 2002-067174 and JP-A_2010-155926. Material jetting equipment is commercially available from various manufacturers, for example, Objet 30 by Stratasys and AGILISTA-3200 by KEYENCE.

In a further aspect of the invention a method for producing a three dimensional object by means of material jetting is provided, comprising the steps of
(a) applying a first layer of the photocurable composition according to the invention onto a base plate in a specific drawn pattern;
(b) curing of the first layer of the photocurable composition by irradiation with light;
(c) applying a further layer of the photocurable composition in a specific drawn pattern;
(d) curing of the further layer of the photocurable composition by irradiation with light;
(e) multiple repetitions of steps c) and d) wherein by stacking of the cured layers a three dimensional object is obtained;
wherein the light has a wave length from 375 to 450 nm.

In step a) of the inventive method typically fine droplets of the liquid photocurable composition are discharged from nozzles onto a base plate in a specified drawn pattern with the help of e.g. computer aided manufacturing or computer-aided design (CAM/CAD) software, followed by light irradiation to effect curing in step b). Then, further fine droplets of the liquid photocurable resin are discharged thereon from the nozzles in a specified drawn pattern, producing a superimposed layer in step c), followed again by light irradiation according to step d). Multiple repetition of steps c) and d) finally leads to a fabricated 3D object. In a preferred embodiment of the method according to the invention the curing steps are conducted by light having a wavelength from 375 to 450 nm, preferably originating form UV or blue emitting LEDs.

Optionally, it is possible to apply heat and/or light to the object to complete the curing as a post curing process.

### Use of the invention

The composition according to the invention can be used in general in all application wherein the photocurable resin composition is suitable and applicable. Examples are the use for producing pigmented and non-pigmented paints and varnishes, powder coatings, printing inks, printing plates, adhesives, pressure sensitive adhesives, dental compositions, gel coats, photoresists, electroplating resists, etch resists, both liquid and dry films, solder resists, resists to manufacture color filters, resists to generate structures in the manufacturing processes of plasma-display panels, electroluminescence displays and LCD, spacers for LCD, for holographic data storage (HDS), as composition for encapsulating electrical and electronic components, for producing magnetic recording materials, micromechanical parts, waveguides, optical switches, plating masks, etch masks, color proofing systems, glass fibre cable coatings, screen printing stencils, for producing three-dimensional objects by means of stereo-lithography or material jetting, as image recording material, for holographic recordings, microelectronic circuits, decolorizing materials, decolorizing materials for image recording materials, for image recording materials using microcapsules, as a photoresist material for a UV and visible laser direct imaging system, as a photoresist material used for forming dielectric layers in a sequential build-up layer of a printed circuit board.

In a preferred embodiment of the invention the photocurable resin composition is used for producing a three dimensional object by means of stereolithography or material jetting. Three dimensional objects for the purpose of the invention are not limited but, for example, a toy, a medical instrument, an electronic part, an automotive part, a motorcycle part, a train part, an aircraft part, another industrial part, a dental material such as an artificial tooth and a dental corrective devices, a jewelry, a hearing aid, an earpiece, a positive die for lost wax mold to produce thereof, and a prototype for design verification or performance check for development and manufacture of industrial products.

The following examples are included for illustrative purposes only and do not limit the scope of the claims. Unless otherwise stated, all parts and percentages are by weight. In the examples, all experiments are carried out under following or similar test conditions in a yellow room at 25 degree C unless otherwise indicated.

### A. Compound Examples

### 1. Radical photoinitiator

In the examples the photoinitiator compounds summarized in Table 1 have been used, wherein the numbering of the compounds in Table 1 corresponds to the numbering of the particular compounds in the general description:

**Table 1: Used radical photoinitiator**

| Compound | Name, Supplyier, Purity |
|---|---|
| G-1A-1 | Methyl benzoylformate (>97.0%), Tokyo Chemical Industry Co., Ltd. |
| G-1A-2 | Ethyl benzoylformate (>96.0%), Tokyo Chemical Industry Co., Ltd. |
| G-1A-3 | prepared according to the method given below |
| G-1A-5 | prepared according to the method given below |
| G-1A-24 | prepared according to the method given below |
| G-1A-25 | prepared according to the method given below |
| G-1A-28 | prepared according to the method given below |
| G-1A-32 | prepared according to the method given below |
| G-1A-33 | prepared according to the method given below |

The used radical photoinitiator compounds and photosensitizers were purchased from chemical suppliers, e.g. Aldrich, Tokyo Chemical Industry, otherwise they were easily prepared by the following synthesis methods or will be prepared by alternative organic reactions which are not limited.

### a) Synthesis of example G-1A-3

In 500ml reactor with Dean-Stark apparatus 4.00 g (26.6 mmol) of phenylglyoxylic acid, 2.47 g (24.2 mmol) of 1-hexanol, 0.33 g (1.92 mmol) of p-toluene sulfonic acid monohydride and 250ml of toluene were placed. The mixture was stirred at reflux for 24 hours. After the reaction was completed, the reaction mixture was concentrated under reduced pressure, then the crude product was purified by column chromatography on silica gel with heptane/ethyl acetate=20/1 to 1/1 as eluent. 5.25 g of G-1 A-3 was obtained as colorless oil (92.7% yield).

The structure is confirmed by the 1H-NMR spectrum (CDCl₃) δ [ppm]: 8.00 (dd, 2H), 7.66 (td, 1H), 7.51 (td, 2H), 4.39 (t, 2H), 0.9-1.78 (m, 11H).

### b) Synthesis of example G-1A-25

In 250ml 2 neck flask 5.00 g (26.8 mmol) of diphenylsulfide, 3.66 g (26.8 mmol) of ethylchloroglyoxylate, 3.58 g (26.8 mmol) of aluminium trichloride and 60 ml of dichloromethane were placed. The mixture was stirred at 0°C to room temperature for 3 hours. After the reaction was completed, the reaction mixture was poured into cold water, and the organic layer was washed with saturated NaHCO₃(aq), and brine. The organic layer was dried over MgSO₄, concentrated under reduced pressure, then the crude product was purified by column chromatography on silica gel with heptane/ethyl acetate= 1/4 as eluent. 2.10 g of G-1 A-25 was obtained as pale yellow oil (27.3% yield).

The structure is confirmed by the 1H-NMR spectrum (CDCl₃) δ [ppm]: 7.86 (d, 2H), 7.53 (m, 2H), 7.43 (m, 3H), 7.19 (d, 2H), 4.42 (q, 2H), 1.39 (t, 3H).

Other photoinitiator compounds have been prepared according to the exemplary described methods given for G-1A-3 and G-1A-25.

### 2. Photosensitizers PS

In the examples the photosensitizers PS summarized in Table 2 have been used, wherein the numbering of the compounds in Table 2 corresponds to the numbering of the particular compounds in the general description:

**Table 2: Used photosensitizers PS**

| Compound | |
|---|---|
| PS1 | Thioxanthone, Tokyo Chemical Industry Co., Ltd., (>98.0%) |
| PS2 | 2-Isopropylthioxanthone (>98.0%), Tokyo Chemical Industry Co., Ltd. |
| PS4 | 2,4-Diethylthioxanthen-9-one (>98.0%), Tokyo Chemical Industry Co., Ltd. |

### B. Application Examples

### 1. Example A-I and A-II : Preparation of photosensitive resin and light exposure

The following substances summarized in Table 3 and 4 are introduced into a 20 ml amber screw bottle and applied to sonication at 40 degree C for 15 minutes then kept at 25 degree C for overnight.

**Table 3: Used components in compositions comprising no photosensitizer**

| | | |
|---|---|---|
| Photo radical initiator | 0.20 g | 1.92 wt.-% |
| Photo acid generator | 0.20 g | 1.92 wt.-% |
| Photosensitizer | 0.00 g | - |
| Hydrogenated bisphenol A diglycidyl ether, EPOLIGHT E4000, KYOEISHA CHEMICAL Co., Ltd. | 5.81 g | 55.86 wt.-% |
| 3-Ethyl-3-hydroxymethyl-oxetane ARON OXETANE OXT-101, TOAGOSEI Co., Ltd. | 1.61 g | 15.48 wt.-% |
| Tricyclo[5.2.1.0^{2,6}]decanedimethanol diacrylate, LIGHT ACRYLATE DCP-A, KYOEISHA CHEMICAL Co., Ltd. | 1.61 g | 15.48 wt.-% |
| Dipentaerythritol hexaacrylate, LIGHT ACRYLATE DPE-6A, KYOEISHA CHEMICAL Co., Ltd. | 0.97 g | 9.33 wt.-% |

**Table 4: Used components in compositions comprising a photosensitizer**

| | | |
|---|---|---|
| Photo radical initiator | 0.20 g | 1.92 wt.-% |
| Photo acid generator | 0.20 g | 1.92 wt.-% |
| Photosensitizer | 0.02 g | 0.19 wt.-% |
| Hydrogenated bisphenol A diglycidyl ether, EPOLIGHT E4000, KYOEISHA CHEMICAL Co., Ltd. | 5.81 g | 55.76 wt.-% |
| 3-Ethyl-3-hydroxymethyl-oxetane ARON OXETANE OXT-101, TOAGOSEI Co., Ltd. | 1.61 g | 15.45 wt.-% |
| Tricyclo[5.2.1.0^{2,6}]decanedimethanol diacrylate, LIGHT ACRYLATE DCP-A, KYOEISHA CHEMICAL Co., Ltd. | 1.61 g | 15.45 wt.-% |
| Dipentaerythritol hexaacrylate, LIGHT ACRYLATE DPE-6A, KYOEISHA CHEMICAL Co., Ltd. | 0.97 g | 9.31 wt.-% |

Photo acid generators used in the experiments are:
- PAG-1: Diphenyl[(4-phenylthio)phenyl] sulfonium hexafluoro antimonite, DTS-103, Midori Kagaku Co., Ltd.
- PAG-2: 4-Isopropyl-4'-methyldiphenyliodonium tetrakis(pentafluorophenyl) borate, 10591, TOKYO CHEMICAL INDUSTRY Co., Ltd., (>98.0%)

0.13 g of the photocurable resin is charged on a hole of hole slide glass (Matsunami Glass Ind., Ltd). Light exposure is carried out by using a LED exposure source equipped with 405nm, 385nm and 365nm LED lamp units (UVT300-C, Micro Square Inc.) which exposure power is adjusted to be 10 mW/cm² by use of a light power meter (UV-M03A, ORC MANUFACTURING Co., Ltd.) and the exposed energy is controlled by an exposure timer of UVT300-C. The exposed slide glass is kept for 40 hours in dark. The cured film is peeled off and put in a 20 mL screw bottle with 5 mL of ethanol then applied to sonication (Ultrasonic cleaner 1510J-DTH, BRANSON) for 10 minutes. The curing degree is assessed by eye observation of the film quality before and after sonication. The results are summarized in Table 5 and 6.

**Table 5: Cure properties of resins by light exposure at 365 nm at 200 mJ**

| Example A-I- | Photo radical initiator | Photo acid generator | Sensitizer | Film quality after sonication in ethanol |
|---|---|---|---|---|
| 1 | G-1A-1 | PAG-1 | None | Good |
| 2 | G-1A-2 | PAG-1 | None | Good |
| 3 | G-1A-3 | PAG-1 | None | Good |
| 4 | G-1A-5 | PAG-1 | None | Good |
| 5 | G-1A-24 | PAG-1 | None | Good |
| 6 | G-1A-25 | PAG-1 | None | Good |
| 7 | G-1A-28 | PAG-1 | None | Good |
| 8 | G-1A-32 | PAG-1 | None | Good |
| 9 | G-1A-33 | PAG-1 | None | Good |

**Table 6: Cure properties of resins by light exposure at 405 nm at 200 mJ**

| Example A-II- | Photo radical initiator | Photo acid generator | Sensitizer | Film quality after sonication in ethanol |
|---|---|---|---|---|
| 1 | G-1A-1 | PAG-2 | PS-4 | Good |
| 2 | G-1A-2 | PAG-2 | PS-4 | Good |
| 3 | G-1A-3 | PAG-2 | PS-4 | Good |
| 4 | G-1A-5 | PAG-2 | PS-4 | Good |
| 5 | G-1A-24 | PAG-2 | PS-4 | Good |
| 6 | G-1A-25 | PAG-2 | PS-4 | Good |
| 7 | G-1A-28 | PAG-2 | PS-4 | Good |
| 8 | G-1A-32 | PAG-2 | PS-4 | Good |
| 9 | G-1A-33 | PAG-2 | PS-4 | Good |

### 2. Comparative example C-I and C-II : Preparation of photosensitive resin and light exposure

Comparative experiments are carried out in the same manner as Example A-1 and A-II but using following commercially available photoinitiators:
- Irgacure 819: Bis(2,4,6-trimethylbenzoyl)-phenylphosphineoxide, BASF SE, (>98.0%)
- Irgacure TPO: Diphenyl(2,4,6-trimethylbenzoyl)phosphineoxide, BASF SE, (>97.0%)

The results are summarized in Tables 7 and 8;

**Table 7: Cure properties of resins by light exposure at 365 nm at 200 mJ**

| Example C-I- | Photo radical initiator | Photo acid generator | Sensitizer | Film quality after sonication in ethanol |
|---|---|---|---|---|
| 1 | None | PAG-1 | None | Decomposed |
| 2 | None | PAG-2 | None | Decomposed |
| 3 | Irgacure 819 | PAG-1 | None | Decomposed |
| 4 | Irgacure TPO | PAG-1 | None | Decomposed |

**Table 8: Cure properties of resins by light exposure at 405 nm at 200 mJ**

| Example C-II- | Photo radical initiator | Photo acid generator | Sensitizer | Film quality after sonication in ethanol |
|---|---|---|---|---|
| 1 | Irgacure 819 | PAG-2 | PS-4 | Decomposed |
| 2 | Irgacure TPO | PAG-2 | PS-4 | Decomposed |

As can be seen in the Examples and Comparative Examples only acrylate/epoxy hybrid resins comprising a photo radical initiator according to the invention can be cured by light exposing at 365 or 405 nm.

## Claims

1. Photocurable resin composition for 3D printing, comprising:
a) at least one ethylenically unsaturated compound (C)
b) at least one epoxy-containing compound (E);
c) at least one photo-acid generator;
d) at least one radical photoinitiator G selected from at least one radical photoinitiator G-1A and/or at least one radical photoinitiator G-1B, wherein the at least one radical photoinitiator G-1A is represented by the general formula (Ia) 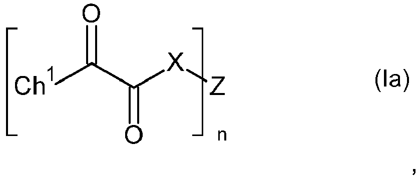 wherein
Z is R¹ or R⁷;
X is O, S, or NR⁵;
Ch¹ is Ar¹ or Het¹ ;
n is 1 to 4;
with the proviso that when n is 1, Z is R¹;
Ar¹ is selected from the group consisting of phenyl, naphthyl, biphenyl, styryl, stilbenyl, diphenylacetylenyl, terphenylyl, anthracenyl, phenanthrenyl, pyrenyl or triphenylenyl; which is unsubstituted or substituted with one or more substituents selected from the group consisting of halogen; NO₂; CN; OR³; SR⁴; NR⁵R⁶; C₁-C₂₀alkyl and/or C₂-C₂₀alkenyl, which are independently from each other unsubstituted or substituted by one or more halogen, CN, OR³, SR⁴, NR⁵R⁶, phenyl and/or naphthyl; C₁-C₂₀alkyl and/or C₂-C₂₀alkenyl, which are independently from each other interrupted by one or more -O-, -S-, -NR⁵-, phenylene and/or naphthylene; C₃-C₈cycloalkyl and/or C₃-C₈cycloalkenyl, which are independently from each unsubstituted or substituted by one or more halogen, CN, OR³, SR⁴ and/or NR⁵R⁶; C₃-C₈cycloalkyl and/or C₃-C₈cycloalkenyl, which are independently from each other interrupted by one or more -O-, -S- and/or -NR⁵-; phenyl and/or naphthyl, which are independently from each other unsubstituted or substituted by one or more halogen, CN, C₁-C₂₀alkyl, C₃-C₈cycloalkyl, OR³, SR⁴ and/or NR⁵R⁶; and/or -C(O)R⁸;
and/or
OR₃, SR⁴, and/or NR⁵R⁶ form together with other substituents, if present on adjacent ring atoms, on Ar¹ via the radicals R³, R⁴, R⁵ and/or R⁶ one or more 5- or 6-membered heterocycles;
and/or
R⁵ and R⁶ form together with the N atom to which they are attached a 5- or 6-membered heterocycle;
Het¹ is from the group consisting of furyl, thienyl, pyrrolyl, oxazolyl, isoxazolyl, thiazolyl, isothiazole, imidazolyl, pyrazolyl, oxadiazolyl, thiadiazolyl, triazolyl, pyridyl, pyrimidinyl, pyrazinyl, pyridazinyl, triazinyl, 2- or 3-benzofuryl, 2- or 3-benzothienyl, 2- or 3-indolyl, 2-benzoxazolyl, 2-benzothiazolyl, 2-benzoimidazolyl, 3-indazolyl, 2-, 3- or 4-quinolyl, 1-, 3- or 4-isoquinolyl, 3-phthalazinyl, 2- or 3-quinoxalinyl, pteridinyl, bithienyl, trithienyl, acridinyl, phenazinyl or purinyl; which is unsubstituted or substituted with one or more substituents selected from the group consisting of halogen, NO₂, CN, OR³, SR⁴ and/or NR⁵R⁶; C₁-C₂₀alkyl and/or C₂-C₂₀alkenyl, which are independently from each other unsubstituted or substituted by one or more halogen, CN, OR³, SR⁴, NR⁵R⁶, phenyl and/or naphthyl; C₁-C₂₀alkyl and/or C₂-C₂₀alkenyl, each of which is interrupted by one or more -O-, -S-, -NR⁵-, phenylene and/or naphthylene; C₃-C₈cycloalkyl and/or C₃-C₈cycloalkenyl, which are independently from each other unsubstituted or substituted by one or more halogen, CN, OR³, SR⁴ and/or NR⁵R⁶; C₃-C₈cycloalkyl and/or C₃-C₈cycloalkenyl, each of which is interrupted by one or more -O-, -S- and/or -NR⁵-; phenyl and/or naphthyl, which are independently from each other unsubstituted or substituted by one or more halogen, CN, C₁-C₂₀alkyl, C₃-C₈cycloalkyl, OR³, SR⁴ NR⁵R⁶; and/or -C(O)R⁸; and/or OR₃, SR⁴, and/or NR⁵R⁶ form together with other substituents, if present on adjacent ring atoms on Het¹ via the radicals R³, R⁴, R⁵ and/or R⁶ one or more 5- or 6-membered heterocycles;
R¹ is hydrogen; C₁-C₂₀alkyl or C₂-C₂₀alkenyl, which is unsubstituted or substituted by one or more halogen, CN, OR³, SR⁴, NR⁵R⁶, phenyl and/or naphthyl; C₁-C₂₀alkyl or C₂-C₂₀alkenyl, which is interrupted by one or more -O-, -S-, -NR₅-, phenylene and/or naphthylene; C₃-C₈cycloalkyl or C₃-C₈cycloalkenyl, which is unsubstituted or substituted by one or more halogen, CN, OR³, SR⁴, NR⁵R⁶, phenyl and/or naphthyl; C₃-C₈cycloalkyl or C₃-C₈cycloalkenyl, which is interrupted by one or more -O-, -S- and/or -NR⁵-; phenyl or naphthyl, which is unsubstituted or substituted by one or more halogen, CN, C₁-C₂₀alkyl, OR³, SR⁴, NR⁵R⁶ and/or -C(O)R⁸;
R³ is hydrogen; C₁-C₂₀alkyl or C₂-C₂₀alkenyl, which is unsubstituted or substituted by one or more halogen, CN, OR³, SR⁴, NR⁵R⁶, phenyl and/or naphthyl; C₁-C₂₀alkyl or C₂-C₂₀alkenyl, which is interrupted by one or more -O-, -S-, -NR₅-, phenylene and/or naphthylene; C₃-C₈cycloalkyl or C₃-C₈cycloalkenyl, which is unsubstituted or substituted by one or more halogen, CN, OR³, SR⁴, NR⁵R⁶, phenyl and/or naphthyl; C₃-C₈cycloalkyl or C₃-C₈cycloalkenyl, which is interrupted by one or more -O-, -S- and/or -NR⁵-; phenyl or naphthyl, which is unsubstituted or substituted by one or more by halogen, CN, C₁-C₂₀alkyl, OR³, SR⁴, NR⁵R⁶ and/or -C(O)R⁸;
R⁴ is hydrogen; C₁-C₂₀alkyl or C₂-C₂₀alkenyl, which is unsubstituted or substituted by one or more halogen, CN, OR³, SR⁴, NR⁵R⁶, phenyl and/or naphthyl; C₁-C₂₀alkyl or C₂-C₂₀alkenyl, which is interrupted by one or more -O-, -S-, -NR⁵-, phenylene and/or naphthylene; C₃-C₈cycloalkyl or C₃-C₈cycloalkenyl, which is unsubstituted or substituted by one or more halogen, CN, OR³, SR⁴, NR⁵R⁶, phenyl and/or naphthyl; C₃-C₈cycloalkyl or C₃-C₈cycloalkenyl, which is interrupted by one or more -O-, -S- and/or -NR⁵-; phenyl or naphthyl, which is unsubstituted or substituted by one or more by halogen, CN, C₁-C₂₀alkyl, OR³, SR⁴,NR⁵R⁶ and/or -C(O)R⁸;
R⁵, R⁶ are independently of each other hydrogen; C₁-C₂₀alkyl or C₂-C₂₀alkenyl, which is unsubstituted or substituted by one or more halogen, CN, OR³, SR⁴, NR⁵R⁶, phenyl and/or naphthyl; C₁-C₂₀alkyl or C₂-C₂₀alkenyl, which is interrupted by one or more -O-, -S-, -NR⁵-, phenylene and/or naphthylene; C₃-C₈cycloalkyl or C₃-C₈cycloalkenyl, which is unsubstituted or substituted by one or more halogen, CN, OR³, SR⁴, NR⁵R⁶, phenyl and/or naphthyl; C₃-C₈cycloalkyl or C₃-C₈cycloalkenyl, which is interrupted by one or more -O-, -S- and/or -NR⁵-; phenyl or naphthyl, which is unsubstituted or substituted by one or more by halogen, CN, C₁-C₂₀alkyl, OR³, SR⁴ and/or NR⁵R⁶; and/or -C(O)R⁸;
R⁷ is C₁-C₂₀alkylene or C₁-C₂₀alkenylene, which is unsubstituted or substituted by one or more halogen, CN, OR³, SR⁴ and/or NR⁵R⁶; C₁-C₂₀alkylene or C₁-C₂₀alkenylene, which is interrupted by one or more -O-, -S-, -NR⁵-, phenylene and/or naphthylene; C₃-C₈cycloalkylene or C₃-C₈cycloalkenylene, which is unsubstituted or substituted by one or more halogen, CN, OR³, SR⁴, NR⁵R⁶, phenyl and/or naphthyl; C₃-C₈cycloalkylene or C₃-C₈cycloalkenylene, which is interrupted by one or more -O-, -S- and/or -NR⁵-; phenylene or naphthylene, which is unsubstituted or substituted by one or more by halogen, C₁-C₂₀alkyl, OR³, SR⁴,NR⁵R⁶ and/or -C(O)R⁸;
R₈ is OR³, SR⁴ and/or NR⁵R⁶; C₁-C₂₀alkyl or C₂-C₂₀alkenyl, which is unsubstituted or substituted by one or more halogen, CN, OR³, SR⁴, NR⁵R⁶, phenyl and/or naphthyl; C₁-C₂₀alkyl or C₂-C₂₀alkenyl, which is interrupted by one or more -O-, -S-, -NR⁵-, phenylene and/or naphthylene; C₃-C₈cycloalkyl or C₃-C₈cycloalkenyl, which is unsubstituted or substituted by one or more halogen, CN, OR³, SR⁴, NR⁵R⁶, phenyl and/or naphthyl; C₃-C₈cycloalkyl or C₃-C₈cycloalkenyl, which is interrupted by one or more -O-, -S- and/or -NR₅-; phenyl, naphthyl, furanyl, thienyl, pyrroryl, benzofuranyl, benzothienyl, indoryl and/or benzoimidazoyl, which is unsubstituted or substituted by one or more halogen, CN, C₁-C₂₀alkyl, OR³, SR⁴ and/or NR⁵R⁶; and/or OR₃, SR⁴, and/or NR⁵R⁶ form together with other substituents via the radicals R³, R⁴, R⁵ and/or R⁶ one or more 5- or 6-membered heterocycles;
and/or
R⁵ and R⁶ form together with the N atom to which they are attached a 5- or 6-membered heterocycle;
and the at least one radical photoinitiator G-1B is represented by the general formula (Ib) 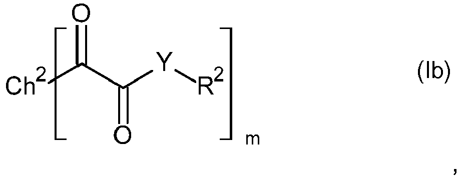 wherein
R³, R⁴, R⁵, R⁶, and R⁸ have the meanings as defined above; and
m is 2 to 4;
Ch² is Ar², Het² or a group of the general formula B 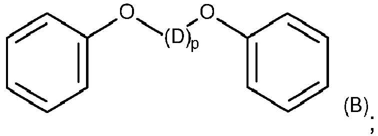 wherein
each D is independently from each other C₁-C₂₀alkyl, which is unsubstituted or substituted by one or more halogen, CN, OR³, SR⁴, NR⁵R⁶, phenyl and/or naphthyl or C₁-C₂₀alkyl or C₂-C₂₀alkenyl, which is interrupted by one or more -O-, -S-,
-NR⁵-, phenylene and/or naphthylene;
p is 1 to 5;
Y is O, S or NR⁵;
R² is hydrogen; C₁-C₂₀alkyl or C₂-C₂₀alkenyl, which is unsubstituted or substituted by one or more halogen, CN, OR³, SR⁴, NR⁵R⁶, phenyl and/or naphthyl; C₁-C₂₀alkyl or C₂-C₂₀alkenyl, which is interrupted by one or more -O-, -S-, -NR⁵-, phenylene and/or naphthylene; C₃-C₈cycloalkyl or C₃-C₈cycloalkeny, which is unsubstituted or substituted by one or more halogen, CN, OR³, SR⁴, NR⁵R⁶, phenyl and/or naphthyl; C₃-C₈cycloalkyl or C₃-C₈cycloalkenyl, which is interrupted by one or more -O-, -S- and/or -NR⁵-; phenyl or naphthyl, which is unsubstituted or substituted by one or more by halogen, CN, C₁-C₂₀alkyl, OR³, SR⁴ and/or NR⁵R⁶;
Ar² is phenylene, naphthylene, biphenylene, styryylen, stilbenylene, diphenylacetylenylene, terphenylene, anthracenylene, phenanthrenylene, pyrenylene, triphenylene, diphenylmethylene, triphenylmethylene, tetraphenylmethylene or a group of the general formula (A) 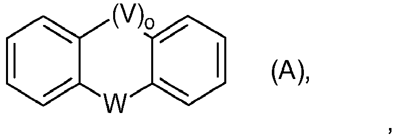 wherein
V and W are independently from each other a direct bond, O, S or NR⁵;
o is 0 or 1;
each of which is unsubstituted or substituted by one or more substituents selected from the group consisting of halogen, NO₂, CN, OR³, SR⁴ and/or NR⁵R⁶; C₁-C₂₀alkyl and/or C₂-C₂₀alkenyl, which is unsubstituted or substituted by one or more halogen, CN, OR³, SR⁴, NR⁵R⁶, phenyl and/or naphthyl; C₁-C₂₀alkyl and/or C₂-C₂₀alkenyl, which is interrupted by one or more -O-, -S-, -NR⁵-, phenylene and/or naphthylene; C₃-C₈cycloalkyl and/or C₃-C₈cycloalkenyl, which is unsubstituted or substituted by one or more halogen, CN, OR³, SR⁴ and/or NR⁵R⁶; C₃-C₈cycloalkyl and/or C₃-C₈cycloalkenyl, which is interrupted by one or more -O-, -S- and/or -NR⁵-; phenyl and/or naphthyl, which is unsubstituted or substituted by one or more halogen, CN, C₁-C₂₀alkyl, C₃-C₈cycloalkyl, OR³, SR⁴ and/or NR⁵R⁶; and/or -C(O)R⁸; and/or OR₃, SR⁴, and/or NR⁵R⁶ form together with other substituents - if present at adjacent ring atoms - on Ar² via the radicals R³, R⁴, R⁵ and/or R⁶ one or more 5- or 6-membered heterocycles;
Het² is furylene, thienylene, pyrrolylene, oxazolylene, isoxazolylene, thiazolylene, isothiazolylene, imidazolylene, pyrazolylene, oxadiazolylene, thiadiazolylene, triazolylene, pyridylene, pyrimidinylene, pyrazinylene, pyridazinylene, triazinylene, benzofurylene, benzothienylene, indolylene, benzoxazolylene, benzothiazolylene, benzoimidazolylene, indazolylen, quinolylene, isoquinolylene, phthalazinylene, quinoxalinylene, pteridinylene, bithienylene, trithienylene, acridinylene, phenazinylene, N,N-diphenylanilin or purinylene; each of which is unsubstituted or substituted by one or more halogen, NO₂, CN, OR³, SR⁴ and/or NR⁵R⁶; C₁-C₂₀alkyl and/or C₂-C₂₀alkenyl, which is unsubstituted or substituted by one or more halogen, CN, OR³, SR⁴, NR⁵R⁶, phenyl and/or naphthyl; C₁-C₂₀alkyl and/or C₂-C₂₀alkenyl, which is interrupted by one or more -O-, -S-, -NR⁵-, phenylene and/or naphthylene; C₃-C₈cycloalkyl and/or C₃-C₈cycloalkenyl, which is unsubstituted or substituted by one or more halogen, CN, OR³, SR⁴ and/or NR⁵R⁶; C₃-C₈cycloalkyl and/or C₃-C₈cycloalkenyl, which is interrupted by one or more -O-, -S- and/or -NR⁵-; phenyl and/or naphthyl, which is unsubstituted or substituted by one or more halogen, CN, C₁-C₂₀alkyl, C₃-C₈cycloalkyl, OR³, SR⁴ and/or NR⁵R⁶; and/or -C(O)R⁸;
and/or
OR₃, SR⁴, and/or NR⁵R⁶ form together with other substituents if present at adjacent ring atoms on Het² via the radicals R³, R⁴, R⁵ and/or R⁶ one or more 5- or 6-membered heterocycles.

2. Composition according to claim 1, wherein the at least one radical photoinitiator is a radical photoinitiator G-1A of the general formula (Ia), wherein Z, X and n have the meanings as defined in claim 1 and
wherein
Ch¹ is Ar¹ or Het¹ ;
Ar¹ is selected from the group consisting of phenyl, naphthyl, biphenyl, styryl, stilbenyl, diphenylacetylenyl, terphenylyl, anthracenyl, phenanthrenyl, pyrenyl or triphenylenyl; which is unsubstituted or substituted with one or more substituents selected from the group consisting of halogen; NO₂; CN; OR³; SR⁴; NR⁵R⁶; C₁-C₁₂alkyl and/or C₂-C₁₂alkenyl, which are independently from each other unsubstituted or substituted by one or more halogen, CN, OR³, SR⁴ , NR⁵R⁶, phenyl; C₁-C₁₂alkyl and/or C₂-C₁₂alkenyl, which are independently from each other interrupted by one or more -O-, -S-, -NR⁵-, phenylene; C₃-C₈cycloalkyl and/or C₃-C₈cycloalkenyl, which are independently from each unsubstituted or substituted by one or more halogen, OR³, SR⁴ and/or NR⁵R⁶; C₃-C₈cycloalkyl and/or C₃-C₈cycloalkenyl, which are independently from each other interrupted by one or more -O-, -S- and/or -NR⁵-; phenyl, which is independently from each other unsubstituted or substituted by one or more halogen, C₁-C₁₂alkyl, OR³, SR⁴ and/or NR⁵R⁶; and/or -C(O)R⁸; and/or
OR₃, SR⁴, and/or NR⁵R⁶ form together with other substituents, if present at adjacent ring atoms at Ar¹ via the radicals R³, R⁴, R⁵ and/or R⁶ one or more 5- or 6-membered heterocycles;
Het¹ is selected from the group consisting of furyl, thienyl, pyrrolyl, oxazolyl, isoxazolyl, thiazolyl, isothiazole, imidazolyl, pyrazolyl, oxadiazolyl, thiadiazolyl, triazolyl, pyridyl, pyrimidinyl, pyrazinyl, pyridazinyl, triazinyl, 2- or 3-benzofuryl, 2- or 3-benzothienyl, 2- or 3-indolyl, 2-benzoxazolyl, 2-benzothiazolyl, 2-benzoimidazolyl, 3-indazolyl, 2-, 3- or 4-quinolyl, 1-, 3- or 4-isoquinolyl, 3-phthalazinyl, 2- or 3-quinoxalinyl, pteridinyl, bithienyl, trithienyl, acridinyl, phenazinyl or purinyl; which is unsubstituted or substituted with one or more substituents selected from the group consisting of halogen, OR³, SR⁴ and/or NR⁵R⁶; C₁-C₁₂alkyl and/or C₂-C₁₂alkenyl, which are independently from each other unsubstituted or substituted by one or more halogen, OR³, SR⁴, NR⁵R⁶, phenyl; C₁-C₁₂alkyl and/or C₂-C₁₂alkenyl, each of which is interrupted by one or more -O-, -S-, -NR⁵-, phenylene; C₃-C₈cycloalkyl and/or C₃-C₈cycloalkenyl, which are independently from each other unsubstituted or substituted by one or more halogen, OR³, SR⁴ and/or NR⁵R⁶; C₃-C₈cycloalkyl and/or C₃-C₈cycloalkenyl, each of which is interrupted by one or more -O-, -S- and/or -NR⁵-; phenyl, which is independently from each other unsubstituted or substituted by one or more halogen, C₁-C₁₂alkyl, OR³, SR⁴ and/or NR⁵R⁶; and/or -C(O)R⁸;
and/or
OR₃, SR⁴, and/or NR⁵R⁶ form together with other substituents, if present at adjacent ring atoms on Het¹ via the radicals R³, R⁴, R⁵ and/or R⁶ one or more 5- or 6-membered heterocycles;
R¹ is hydrogen; C₁-C₂₀alkyl or C₂-C₂₀alkenyl, which is unsubstituted or substituted by one or more halogen, CN, OR³, SR⁴, NR⁵R⁶, phenyl and/or naphthyl; C₁-C₂₀alkyl or C₂-C₂₀alkenyl, which is interrupted by one or more -O-, -S-, -NR₅-, phenylene and/or naphthylene; C₃-C₈cycloalkyl or C₃-C₈cycloalkeny, which is unsubstituted or substituted by one or more halogen, OR³, SR⁴, NR⁵R⁶, phenyl; C₃-C₈cycloalkyl or C₃-C₈cycloalkenyl, which is interrupted by one or more -O-, -S- and/or -NR⁵-; phenyl, which is unsubstituted or substituted by one or more halogen, C₁-C₁₂alkyl, OR³, SR⁴, NR⁵R⁶ and/or -C(O)R;
R³ is hydrogen; C₁-C₂₀alkyl or C₂-C₂₀alkenyl, which is unsubstituted or substituted by one or more halogen, CN, OR³, SR⁴, NR⁵R⁶ and/or phenyl; C₁-C₂₀alkyl or C₂-C₂₀alkenyl, which is interrupted by one or more -O-, -S-, -NR₅- and/or phenylene; C₃-C₈cycloalkyl or C₃-C₈cycloalkenyl, which is unsubstituted or substituted by one or more halogen, OR³, SR⁴, NR⁵R⁶, phenyl; C₃-C₈cycloalkyl or C₃-C₈cycloalkenyl, which is interrupted by one or more -O-, -S- and/or -NR⁵-; phenyl, which is unsubstituted or substituted by one or more by halogen, CN, C₁-C₁₂alkyl, OR³, SR⁴,NR⁵R⁶ and/or -C(O)R;
R⁴ is hydrogen; C₁-C₁₂alkyl or C₂-C₁₂alkenyl, which is unsubstituted or substituted by one or more halogen, OR³, SR⁴, NR⁵R⁶, and/or phenyl; C₁-C₁₂alkyl or C₂-C₁₂alkenyl, which is interrupted by one or more -O-, -S-, -NR⁵- and/or phenylene; C₃-C₈cycloalkyl or C₃-C₈cycloalkenyl, which is unsubstituted or substituted by one or more halogen, OR³, SR⁴, NR⁵R⁶; C₃-C₈cycloalkyl or C₃-C₈cycloalkenyl, which is interrupted by one or more -O-, -S- and/or -NR⁵-; phenyl or naphthyl, which is unsubstituted or substituted by one or more by halogen, C₁-C₁₂alkyl, OR³, SR⁴, NR⁵R⁶ and/or -C(O)R;
R⁵, R⁶ are independently of each other hydrogen; C₁-C₁₂alkyl or C₂-C₁₂alkenyl, which is unsubstituted or substituted by one or more halogen, OR³, SR⁴, NR⁵R⁶ and/or phenyl; C₁-C₁₂alkyl or C₂-C₁₂alkenyl, which is interrupted by one or more -O-, -S-, -NR⁵- and/or phenylene; C₃-C₈cycloalkyl or C₃-C₈cycloalkenyl, which is unsubstituted or substituted by one or more halogen, OR³, SR⁴, NR⁵R⁶; C₃-C₈cycloalkyl or C₃-C₈cycloalkenyl, which is interrupted by one or more -O-, -S- and/or -NR⁵-; phenyl or naphthyl, which is unsubstituted or substituted by one or more by halogen, C₁-C₁₂alkyl, OR³, SR⁴ and/or NR⁵R⁶; and/or -C(O)R⁸;
R⁷ is C₁-C₂₀alkylene or C₁-C₂₀alkenylene, which is unsubstituted or substituted by one or more halogen, OR³, SR⁴ and/or NR⁵R⁶; C₁-C₂₀alkylene or C₁-C₂₀alkenylene, which is interrupted by one or more -O-, -S-, -NR⁵-, phenylene and/or naphthylene; C₃-C₈cycloalkylene or C₃-C₈cycloalkenylene, which is unsubstituted or substituted by one or more halogen, OR³, SR⁴, NR⁵R⁶, phenyl; C₃-C₃cycloalkylene or C₃-C₈cycloalkenylene, which is interrupted by one or more -O-, -S- and/or -NR⁵-; phenylene or naphthylene, which is unsubstituted or substituted by one or more by halogen, C₁-C₁₂alkyl, OR³, SR⁴, NR⁵R⁶ and/or -C(O)R;
R₈ is OR³, SR⁴ and/or NR⁵R⁶; C₁-C₁₂alkyl or C₂-C₁₂alkenyl, which is unsubstituted or substituted by one or more halogen, OR³, SR⁴, NR⁵R⁶, phenyl; C₁-C₁₂alkyl or C₂-C₁₂alkenyl, which is interrupted by one or more -O-, -S-, -NR⁵-, phenylene and/or naphthylene; C₃-C₈cycloalkyl or C₃-C₈cycloalkenyl, which is unsubstituted or substituted by one or more halogen, OR³, SR⁴, NR⁵R⁶; C₃-C₈cycloalkyl or C₃-C₈cycloalkenyl, which is interrupted by one or more -O-, -S- and/or -NR₅-; phenyl, naphthyl, furanyl, thienyl, pyrroryl, benzofuranyl, benzothienyl, indoryl and/or benzoimidazoyl, which is unsubstituted or substituted by one or more halogen, C₁-C₁₂alkyl, OR³, SR⁴ and/or NR⁵R⁶; and/or
OR₃, SR⁴, and/or NR⁵R⁶ form together with other via the radicals R³, R⁴, R⁵ and/or R⁶ one or more 5- or 6-membered heterocycles;
and/or
R⁵ and R⁶ form together with the N atom to which they are attached a 5- or 6-membered heterocycle;
under the proviso that when n is 1, Z is R¹; and/or
- at least one radical photoinitiator G-1B of the general formula (lb),
wherein
R³, R⁴, R⁵, R⁶, and R⁸ have the meanings as defined above; and
Ch² is Ar² or Het² or a group of the general formula (B) 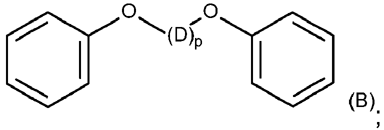
wherein
D is C₁-C₂₀alkyl, which is unsubstituted or substituted by one or more halogen, CN, OR³, SR⁴, NR⁵R⁶, phenyl and/or naphthyl or C₁-C₂₀alkyl or C₂-C₂₀alkenyl, which is interrupted by one or more -O-, -S-, -NR⁵-, phenylene and/or naphthylene;
p is 1;
R² is hydrogen; C₁-C₂₀alkyl or C₂-C₂₀alkenyl, which is unsubstituted or substituted by one or more halogen, CN, OR³, SR⁴, NR⁵R⁶, phenyl and/or naphthyl; C₁-C₂₀alkyl or C₂-C₂₀alkenyl, which is interrupted by one or more -O-, -S-, -NR⁵-, phenylene and/or naphthylene;
C₃-C₈cycloalkyl or C₃-C₈cycloalkenyl, which is unsubstituted or substituted by one or more halogen, OR³, SR⁴, NR⁵R⁶, phenyl;
C₃-C₈cycloalkyl or C₃-C₈cycloalkenyl, which is interrupted by one or more -O-, -S- and/or -NR⁵-; phenyl, which is unsubstituted or substituted by one or more by halogen, C₁-C₁₂alkyl, OR³, SR⁴ and/or NR⁵R⁶;
Ar² is phenylene, naphthylene, biphenylene, styrylene, stilbenylene, diphenylacetylenylene, terphenylene, anthracenylene, phenanthrenylene, pyrenylene, triphenylene, diphenylmethylene, triphenylmethylene, tetraphenylmethylene or a group of the general formula (A) 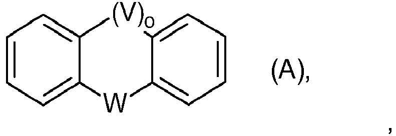 wherein
V and W are independently from each other a direct bond, O, S or NR⁵;
o is 0 or 1;
each of which is unsubstituted or substituted by one or more substituents selected from the group consisting of halogen, OR³, SR⁴ and/or NR⁵R⁶;
C₁-C₁₂alkyl and/or C₂-C₁₂alkenyl, which is unsubstituted or substituted by one or more halogen, OR³, SR⁴, NR⁵R⁶, phenyl; C₁-C₁₂alkyl and/or C₂-C₁₂alkenyl, which is interrupted by one or more -O-, -S-, -NR⁵-, phenylene; C₃-C₈cycloalkyl and/or C₃-C₈cycloalkenyl, which is unsubstituted or substituted by one or more halogen, OR³, SR⁴ and/or NR⁵R⁶; C₃-C₈cycloalkyl and/or C₃-C₈cycloalkenyl, which is interrupted by one or more -O-, -S- and/or -NR⁵-; phenyl, which is unsubstituted or substituted by one or more halogen, C₁-C₁₂alkyl, OR³, SR⁴ and/or NR⁵R⁶; and/or -C(O)R⁸;
and/or
OR³, SR⁴, and/or NR⁵R⁶form together with other substituents on Ar² via the radicals R³, R⁴, R⁵ and/or R⁶ one or more 5- or 6-membered heterocycles;
Het² is furylene, thienylene, pyrrolylene, oxazolylene, isoxazolylene, thiazolylene, isothiazolylene, imidazolylene, pyrazolylene, oxadiazolylene, thiadiazolylene, triazolylene, pyridylene, pyrimidinylene, pyrazinylene, pyridazinylene, triazinylene, benzofurylene, benzothienylene, indolylene, benzoxazolylene, benzothiazolylene, benzoimidazolylene, indazolylen, quinolylene, isoquinolylene, phthalazinylene, quinoxalinylene, pteridinylene, bithienylene, trithienylene, acridinylene, phenazinylene or purinylene; each of which is unsubstituted or substituted by one or more halogen, OR³, SR⁴ and/or NR⁵R⁶; C₁-C₁₂alkyl and/or C₂-C₁₂alkenyl, which is unsubstituted or substituted by one or more halogen, OR³, SR⁴, NR⁵R⁶, phenyl; C₁-C₁₂alkyl and/or C₂-C₁₂alkenyl, which is interrupted by one or more -O-, -S-, -NR⁵-, phenylene; C₃-C₈cycloalkyl and/or C₃-C₈cycloalkenyl, which is unsubstituted or substituted by one or more halogen, OR³, SR⁴ and/or NR⁵R⁶; C₃-C₈cycloalkyl and/or C₃-C₈cycloalkenyl, which is interrupted by one or more -O-, -S- and/or -NR⁵-; phenyl, which is unsubstituted or substituted by one or more halogen, C₁-C₁₂alkyl, OR³, SR⁴ and/or NR⁵R⁶; and/or -C(O)R⁸;
and/or
OR³, SR⁴, and/or NR⁵R⁶form together with other substituents on Het², if present at adjacent ring atoms, via the radicals R³, R⁴, R⁵ and/or R⁶ one or more 5- or 6-membered heterocycles;
and wherein m, and Y have the meanings as defined in claim 1.

3. Composition according to claim 1 or 2, wherein the at least one radical photoinitiator G is at least one radical photoinitiator G-1A of the general formula (Ia), wherein Z, X and n have the meanings as defined in claim 1 or 2 and
wherein
Ch¹ is Ar¹ or Het¹ ;
Ar¹ is selected from the group consisting of phenyl, naphthyl, biphenyl, styryl, stilbenyl, diphenylacetylenyl, terphenylyl, anthracenyl, phenanthrenyl, pyrenyl or triphenylenyl; which is unsubstituted or substituted with one or more substituents selected from the group consisting of halogen; NO₂; CN; OR³;
SR⁴; NR⁵R⁶; C₁-C₁₂alkyl and/or C₂-C₁₂alkenyl, which are independently from each other unsubstituted or substituted by one or more halogen, CN, OR³, SR⁴, NR⁵R⁶, phenyl; C₁-C₁₂alkyl and/or C₂-C₁₂alkenyl, which are independently from each other interrupted by one or more -O-, -S-, -NR⁵-, phenylene; C₃-C₃cycloalkyl and/or C₃-C₈cycloalkenyl, which are independently from each unsubstituted or substituted by one or more halogen, OR³, SR⁴ and/or NR⁵R⁶; C₃-C₈cycloalkyl and/or C₃-C₈cycloalkenyl, which are independently from each other interrupted by one or more -O-, -S- and/or -NR⁵-; phenyl, which is independently from each other unsubstituted or substituted by one or more halogen, C₁-C₁₂alkyl, OR³, SR⁴ and/or NR⁵R⁶; and/or -C(O)R⁸;
and/or
OR³, SR⁴, and/or NR⁵R⁶ form together with other substituents on Ar¹, if present at adjacent ring atoms, via the radicals R³, R⁴, R⁵ and/or R⁶ one or more 5- or 6-membered heterocycles;
Het¹ is selected from the group consisting of furyl, thienyl, pyrrolyl, oxazolyl, isoxazolyl, thiazolyl, isothiazole, imidazolyl, pyrazolyl, oxadiazolyl, thiadiazolyl, triazolyl, pyridyl, pyrimidinyl, pyrazinyl, pyridazinyl, triazinyl, 2- or 3-benzofuryl, 2- or 3-benzothienyl, 2- or 3-indolyl, 2-benzoxazolyl, 2-benzothiazolyl, 2-benzoimidazolyl, 3-indazolyl, 2-, 3- or 4-quinolyl, 1-, 3- or 4-isoquinolyl, 3-phthalazinyl, 2- or 3-quinoxalinyl, pteridinyl, bithienyl, trithienyl, acridinyl, phenazinyl or purinyl; which is unsubstituted or substituted with one or more substituents selected from the group consisting of halogen, OR³, SR⁴ and/or NR⁵R⁶; C₁-C₁₂alkyl and/or C₂-C₁₂alkenyl, which are independently from each other unsubstituted or substituted by one or more halogen, OR³, SR⁴, NR⁵R⁶, phenyl; C₁-C₁₂alkyl and/or C₂-C₁₂alkenyl, each of which is interrupted by one or more -O-, -S-, -NR⁵-, phenylene; C₃-C₈cycloalkyl and/or C₃-C₈cycloalkenyl, which are independently from each other unsubstituted or substituted by one or more halogen, OR³, SR⁴ and/or NR⁵R⁶; C₃-C₈cycloalkyl and/or C₃-C₈cycloalkenyl, each of which is interrupted by one or more -O-, -S- and/or -NR⁵-; phenyl, which is independently from each other unsubstituted or substituted by one or more halogen, C₁-C₁₂alkyl, OR³, SR⁴ and/or NR⁵R⁶; and/or -C(O)R⁸,
and/or
OR³, SR⁴, and/or NR⁵R⁶ form together with other substituents on Het¹ , if present at adjacent ring atoms, via the radicals R³, R⁴, R⁵ and/or R⁶ one or more 5- or 6-membered heterocycles;
R¹ is hydrogen; C₁-C₁₂alkyl, which is unsubstituted or substituted by one or more halogen, OR³, SR⁴, NR⁵R⁶, phenyl ; C₁-C₁₂alkyl, which is interrupted by one or more -O-, or phenylene; C₃-C₈cycloalkyl, which is unsubstituted or substituted by one or more halogen, and/or OR³; phenyl, which is unsubstituted or substituted by one or more halogen, C₁-C₁₂alkyl, OR³, SR⁴ and/or NR⁵R⁶;
R³ is hydrogen; C₁-C₁₂alkyl, which is unsubstituted or substituted by one or more halogen, OR³, SR⁴, NR⁵R⁶ and/or phenyl; C₁-C₁₂alkyl, which is interrupted by one or more -O and/or phenylene; C₃-C₈cycloalkyl, which is unsubstituted or substituted by one or more halogen; phenyl, which is unsubstituted or substituted by one or more by halogen, C₁-C₁₂alkyl, OR³;
R⁴ is hydrogen; C₁-C₁₂alkyl, which is unsubstituted or substituted by one or more halogen, OR³, SR⁴, NR⁵R⁶ and/or phenyl; C₁-C₁₂alkyl , which is interrupted by one or more -O-, or phenylene; C₃-C₈cycloalkyl, which is unsubstituted or substituted by one or more halogen,; phenyl which is unsubstituted or substituted by one or more by halogen, C₁-C₁₂alkyl, and/or OR³;
R⁵, R⁶ are independently of each other hydrogen; C₁-C₁₂alkyl, which is unsubstituted or substituted by one or more halogen, OR³, and/or phenyl; C₁-C₁₂alkyl, which is interrupted by one or more -O-, or phenylene; C₃-C₈cycloalkyl, which is unsubstituted or substituted by one or more halogen phenyl, which is unsubstituted or substituted by one or more by halogen, C₁-C₁₂alkyl, and/or OR³; and/or -C(O)R⁸;
R⁷ is C₁-C₁₂alkylene, which is unsubstituted or substituted by one or more halogen, OR³; C₁-C₂₀alkylene, which is interrupted by one or more -O-, and/or phenylene; C₃-C₈cycloalkylene which is unsubstituted or substituted by one or more halogen, OR³,; C₃-C₈cycloalkylene, which is interrupted by one or more -O- ; phenylene, which is unsubstituted or substituted by one or more by halogen, C₁-C₁₂alkyl, and/or OR³;
R₈ is OR³ and/or NR⁵R⁶; C₁-C₁₂alkyl, which is unsubstituted or substituted by one or more halogen, OR³, and/or phenyl; C₁-C₁₂alkyl, which is interrupted by one or more -O-, and/or phenylene; C₃-C₈cycloalkyl, which is unsubstituted or substituted by one or more halogen; phenyl, naphthyl, furanyl, thienyl, pyrroryl, benzofuranyl, benzothienyl, indoryl and/or benzoimidazoyl, which is unsubstituted or substituted by one or more halogen, C₁-C₁₂alkyl, OR³, and/or NR⁵R⁶; and/or
R⁵ and R⁶ form together with the N atom to which they are attached a 5- or 6-membered heterocycle;
under the proviso that when n is 1, Z is R¹; and/or at least one radical photoinitiator G-1B of the general formula (lb), wherein Y and m have the meanings as defined in claim 1 or 2, and wherein
Ch² is Ar² or Het² or a group of the general formula (B) 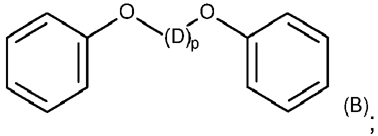 wherein
D is C₁-C₂₀alkyl, which is unsubstituted; or C₁-C₂₀alkyl, which is interrupted by one or more -O-;
p is 1;
R² is hydrogen; C₁-C₂₀alkyl or C₂-C₂₀alkenyl, which is unsubstituted or substituted by one or more halogen, CN, OR³, SR⁴, NR⁵R⁶, phenyl and/or naphthyl; C₁-C₂₀alkyl or C₂-C₂₀alkenyl, which is interrupted by one or more -O-, -S-, -NR⁵-, phenylene and/or naphthylene; C₃-C₈cycloalkyl or C₃-C₈cycloalkenyl, which is unsubstituted or substituted by one or more halogen, OR³, SR⁴, NR⁵R⁶, phenyl; C₃-C₈cycloalkyl or C₃-C₈cycloalkenyl, which is interrupted by one or more -O-, -S- and/or -NR⁵-; phenyl, which is unsubstituted or substituted by one or more by halogen, C₁-C₁₂alkyl, OR³, SR⁴ and/or NR⁵R⁶;
Ar² is phenylene, naphthylene, biphenylene, styrylene, stilbenylene, diphenylacetylenylene, terphenylene, anthracenylene, phenanthrenylene, pyrenylene, triphenylene, diphenylmethylene, triphenylmethylene, tetraphenylmethylene or a group of the general formula (A) 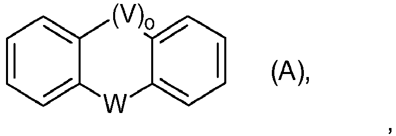 wherein
V and W are independently from each other a direct bond, O, S or NR⁵;
o is 0 or 1;
each of which is unsubstituted or substituted by one or more substituents selected from the group consisting of halogen, OR³, SR⁴ and/or NR⁵R⁶; C₁-C₁₂alkyl and/or C₂-C₁₂alkenyl, which is unsubstituted or substituted by one or more halogen, OR³, SR⁴, NR⁵R⁶, phenyl; C₁-C₁₂alkyl and/or C₂-C₁₂alkenyl, which is interrupted by one or more -O-, -S-, -NR⁵-, phenylene; C₃-C₈cycloalkyl and/or C₃-C₈cycloalkenyl, which is unsubstituted or substituted by one or more halogen, OR³, SR⁴ and/or NR⁵R⁶; C₃-C₈cycloalkyl and/or C₃-C₆cycloalkenyl, which is interrupted by one or more -O-, -S- and/or -NR⁵-; phenyl, which is unsubstituted or substituted by one or more halogen, C₁-C₁₂alkyl, OR³, SR⁴ and/or NR⁵R⁶; and/or -C(O)R⁸;
and/or
OR³, SR⁴, and/or NR⁵R⁶form together with other substituents on Ar², if present at adjacent ring atoms, via the radicals R³, R⁴, R⁵ and/or R⁶ one or more 5- or 6-membered heterocycles;
Het² is furylene, thienylene, pyrrolylene, oxazolylene, isoxazolylene, thiazolylene, isothiazolylene, imidazolylene, pyrazolylene, oxadiazolylene, thiadiazolylene, triazolylene, pyridylene, pyrimidinylene, pyrazinylene, pyridazinylene, triazinylene, benzofurylene, benzothienylene, indolylene, benzoxazolylene, benzothiazolylene, benzoimidazolylene, indazolylen, quinolylene, isoquinolylene, phthalazinylene, quinoxalinylene, pteridinylene, bithienylene, trithienylene, acridinylene, phenazinylene or purinylene; each of which is unsubstituted or substituted by one or more halogen, OR³, SR⁴ and/or NR⁵R⁶; C₁-C₁₂alkyl and/or C₂-C₁₂alkenyl, which is unsubstituted or substituted by one or more halogen, OR³, SR⁴, NR⁵R⁶, phenyl; C₁-C₁₂alkyl and/or C₂-C₁₂alkenyl, which is interrupted by one or more -O-, -S-, -NR⁵-, phenylene; C₃-C₃cycloalkyl and/or C₃-C₈cycloalkenyl, which is unsubstituted or substituted by one or more halogen, OR³, SR⁴ and/or NR⁵R⁶; C₃-C₈cycloalkyl and/or C₃-C₈cycloalkenyl, which is interrupted by one or more -O-, -S- and/or -NR⁵-; phenyl, which is unsubstituted or substituted by one or more halogen, C₁-C₁₂alkyl, OR³, SR⁴ and/or NR⁵R⁶; and/or -C(O)R⁸;
and/or
OR³, SR⁴, and/or NR⁵R⁶ form together with other substituents on Het² , if present at adjacent ring atoms, via the radicals R³, R⁴, R⁵ and/or R⁶ one or more 5- or 6-membered heterocycles.

4. Composition according to any one of claims 1 to 3, wherein the at least one radical photoinitiator G is
- at least one radical photoinitiator G-1A of the general formula (Ia), wherein the radicals and indices have the following meanings:
n is 1 to 4;
Z is R¹ or R⁷;
X is O, S or NR⁵;
R¹ C₁-C₁₂alkyl, which is unsubstituted or substituted by one or more OR³, NR⁵R⁶, or phenyl; C₁-C₁₂alkyl, which is interrupted by one or more -O-, or phenylene; phenyl, which is unsubstituted;
Ch¹ is Ar¹ or Het¹;
Ar¹ is phenyl, naphthyl, or biphenyl, which is unsubstituted or substituted by one or more substituents selected from OR³, SR⁴, NR⁵NR⁶, C(O)R⁸ and/or C₁-C₁₂alkenyl, which is unsubstituted or substituted by one or more phenyl;
Het¹ furyl, thienyl; pyrrolyl, which is unsubstituted or substituted with one or more C₁-C₁₂alkyl;
R³ is C₁-C₁₂alkyl or phenyl;
R⁴ is C₁-C₁₂alkyl or phenyl; each unsubstituted or substituted by -C(O)R⁸;
R⁵, R⁶ are independently of each other C₁-C₁₂alkyl; or form together with the N atom to which they are attached a 5- or 6-membred heterocycle, preferably morpholinyl;
R⁷ is C₁-C₁₂alkylene, or C₁-C₁₂alkylene, which is interrupted by one or more -O-;
R⁸ is phenyl, unsubstituted or substituted by one or more C₁-C₁₂alkyl; and/or
- at least one radical photoinitiator G-1B of the general formula (lb), wherein the radicals and indices have the following meanings:
m is 2 to 4;
Ch² is Ar² or Het²;
Ar² is diphenylmethylene, phenylene, biphenylene, naphthylene, triphenylmethylene, or tetraphenylmethylene;
Het² is a group (A) 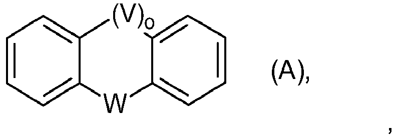
wherein
V and W are independently from each other a direct bond, O, S or NR⁵;
o is 0 or 1;
Y is O;
R² is C₁-C₁₂alkyl, or phenyl:
R⁵ is C₁-C₁₂alkyl.

5. Composition according to any one of claims 1 to 4, wherein the at least one ethylenically unsaturated photopolymerizable compound (C) is selected from acrylates, methacrylates, vinylethers, styrenes, and organosiloxanes, or a mixture of two or more thereof.

6. Composition according to any one of claims 1 to 5, wherein the at least one epoxy-containing compound (E) is selected from
- glycidyl-based epoxy monomers, dimers, and polymers; and
- non-glycidyl epoxy compounds.

7. Composition according to any one of claims 1 to 6, wherein the at least one epoxy-containing compound (E) is a glycidyl-based epoxy dimer of the general formula (IV) 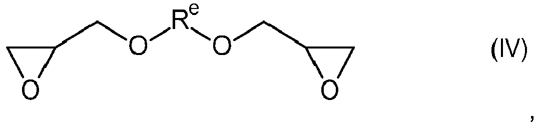 wherein
R^{e} represents a bisphenol A residue, a hydrogenated bisphenol A residue, a bisphenol F residue, a hydrogenate bisphenol F residue, a bisphenol Z residue, a hydrogenated bisphenol Z residue a cyclohexanedimethanol residue, or a tricyclodecandimethanol residue.

8. Composition according to any one of claims 1 to 7, wherein the composition comprises
- 5 to 70 wt.-% of the at least one ethylenically unsaturated photopolymerizable compound (C), and
- 30 to 95 wt.-% of the at least one epoxy-containing compound (E),
wherein the given amounts are based on the total amount of the at least one ethylenically unsaturated photopolymerizable compound (C) and the at least one epoxy resin compound (E).

9. Composition according to any one of claims 1 to 8, further comprising at least one oxetane compound (O).

10. Composition according to any one of claims 1 to 9, wherein the composition comprises at least one photosensitizer PS selected from the group consisting of benzophenone-based, xanthon-based, thioxanthone-based, and acridone-based compounds.

11. Composition according to claim 10, wherein the at least one photosensitizer PS is a compound of the formula (IIa) and/or (IIb) 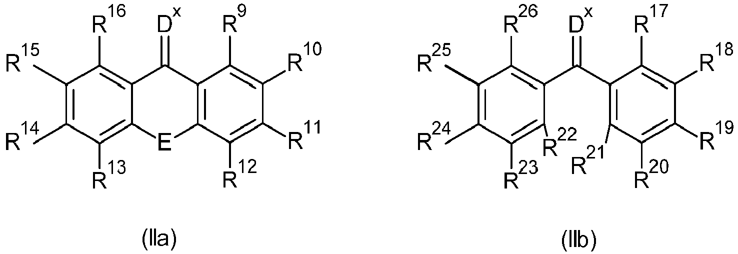 wherein
D^{x} is O or S;
E is direct bond, CH₂, O, S or NR⁵
R9, R₁₀, R₁₁, R₁₂, R₁₃, R₁₄, R₁₅, R₁₆, R₁₇, R₁₈, R₁₉, R₂₀, R₂₁, R₂₂, R₂₃, R₂₄, R₂₅, R₂₆ are independently from each other hydrogen, halogen, NO₂, CN, OR³, SR⁴ and/or NR⁵R⁶; C₁-C₂₀alkyl and/or C₂-C₂₀alkenyl, which is unsubstituted or substituted by one or more halogen, CN, OR³, SR⁴, NR⁵R⁶, phenyl and/or naphthyl; C₁-C₂₀alkyl and/or C₂-C₂₀alkenyl, which is interrupted by one or more -O-, -S-, -NR⁵-, phenylene and/or naphthylene; C₃-C₈cycloalkyl and/or C₃-C₈cycloalkenyl, which is unsubstituted or substituted by one or more halogen, CN, R⁸, OR³, SR⁴ and/or NR⁵R⁶; C₃-C₈cycloalkyl and/or C₃-C₈cycloalkenyl, which is interrupted by one or more -O-, -S- and/or -NR⁵-; phenyl and/or naphthyl, which is unsubstituted or substituted by one or more halogen, CN, C₁-C₂₀alkyl, C₃-C₈cycloalkyl, OR³, SR⁴ and/or NR⁵R⁶; and/or -C(O)R⁸;
and/or
R₅ and R₆ form together with the N atom to which they are attached a 5- or 6-membered heterocycle; and/or
two of R⁹, R¹⁰, R¹¹, R¹², R¹³, R¹⁴, R¹⁵, R¹⁶, R¹⁷, R¹⁸, R¹⁹, R²⁰, R²¹, R²², R²³, R²⁴, R²⁵ and/or R²⁶ if present at adjacent carbon atoms together form a 5- or 6-membered carbocycle or heterocycle; and
wherein
R³, R⁴, R⁵, R⁶ and R⁸ is has the meaning as defined in any one of the preceding claims;

12. Composition according to any one of claims 1 to 11, wherein the composition comprises from 0.05 to 15 wt.-% of the at least one radical photoinitiator G, based on the total weight of the composition.

13. Composition according to any one of claims 1 to 12, wherein the composition is curable with light having a wave length in the range from 200 to 600 nm preferably from 350 to 450 nm.

14. Method for producing a three dimensional object by means of stereolithography, comprising the steps of
a) providing a photocurable resin composition according to any one of claims 1 to 13;
b) imagewise irradiation of a first liquid layer of the photocurable resin with light to form a cured layer;
c) forming a further liquid layer on the cured layer;
d) imagewise irradiation of the further liquid layer of the photocurable resin with imagewise light to form a further cured layer;
e) multiple repetitions of steps c) and d) wherein by stacking of the cured layers a three dimensional object is obtained;
wherein the light has a wave length from 200 to 600 nm, preferably from 350 to 450 nm and is operated by a control system.

15. Method according to claim 14, wherein the irradiation in step b) and c) is conducted by means of use of UV laser, UV or blue emitting LEDs, or UV or blue LDs.

16. Method for producing a three dimensional object by means of material jetting comprising the steps of
(a) applying a first layer of the photocurable composition according to any one of claims 1 to 13 onto a base plate in a specific drawn pattern;
(b) curing of the first layer of the photocurable composition by irradiation with light;
(c) applying a further layer of the photocurable composition in a specific drawn pattern;
(d) curing of the further layer of the photocurable composition by irradiation with light;
(e) multiple repetitions of steps c) and d) wherein by stacking of the cured layers a three dimensional object is obtained;
wherein the light has a wave length from 375 to 450 nm.

17. Use of a photocurable resin composition according to any one of claims 1 to 13 for producing pigmented and non-pigmented paints and varnishes, powder coatings, printing inks, printing plates, adhesives, pressure sensitive adhesives, dental compositions, gel coats, photoresists, electroplating resists, etch resists, both liquid and dry films, solder resists, resists to manufacture color filters, resists to generate structures in the manufacturing processes of plasma-display panels, electroluminescence displays and LCD, spacers for LCD, for holographic data storage (HDS), as composition for encapsulating electrical and electronic components, for producing magnetic recording materials, micromechanical parts, waveguides, optical switches, plating masks, etch masks, color proofing systems, glass fibre cable coatings, screen printing stencils, for producing three-dimensional objects by means of stereo-lithography or material jetting, as image recording material, for holographic recordings, microelectronic circuits, decolorizing materials, decolorizing materials for image recording materials, for image recording materials using microcapsules, as a photoresist material for a UV and visible laser direct imaging system, as a photoresist material used for forming dielectric layers in a sequential build-up layer of a printed circuit board.

18. Use according to claim 17 for producing a three dimensional object by means of stereolithography or material jetting.

19. Use according to claim 18 wherein the three dimensional object is a toy, a medical instrument, an electronic part, an automotive part, a motorcycle part, a train part, an aircraft part, another industrial part, a dental material such as an artificial tooth and a dental corrective devices, a jewelry, a hearing aid, an earpiece, a positive die for lost wax mold to produce thereof, and a prototype for design verification or performance check for development and manufacture of industrial products.
